# EUROPEAN PATENT APPLICATION

(11) **EP 4 645 047 A1**
(43) Date of publication of application: **05.11.2025**
(21) Application number: 24830416.4
(22) Date of filing: 04.06.2024
(51) Int. Cl.: G06F 3/0481

(54) **METHOD FOR DISPLAYING AVATAR OF DIGITAL ASSISTANT AND RELATED DEVICE**

(30) Priority: 29.06.2023 CN 202310786258; 08.02.2024 CN 202410178141
(71) Applicant: Huawei Technologies Co., Ltd., Shenzhen, Guangdong 518129 (CN)
(72) Inventor: WANG, Yifan, Shenzhen, Guangdong 518129 (CN); JIANG, Shunji, Shenzhen, Guangdong 518129 (CN); LIN, Li, Shenzhen, Guangdong 518129 (CN); ZHENG, Jiangzhen, Shenzhen, Guangdong 518129 (CN); WANG, Zongbo, Shenzhen, Guangdong 518129 (CN)
(74) Representative: Isarpatent
(86) International application number: PCT/CN2024/097229
(87) International publication number: WO 2025/001769

(57) **Abstract**

A method for displaying a virtual image of a digital assistant is provided, to make interaction between a user and a digital assistant more naturally. In this method, it is set that the virtual image of the digital assistant includes a plurality of feature objects. After an electronic device obtains a user input, the electronic device generates a corresponding signal instruction, to trigger a change of a form of the virtual image displayed on an interface, so that different working states of the digital assistant are represented by using different forms. In this way, a user determines a current interaction status with the digital assistant based on a change status of a form of the digital assistant, to make interaction between the user and the digital assistant more naturally.

## Description

This application claims priorities to Chinese Patent Application No. 202310786258.8, filed with the China National Intellectual Property Administration on June 29, 2023 and entitled "METHOD FOR DISPLAYING DIGITAL ASSISTANT AND RELATED APPARATUS", and to Chinese Patent Application No. 202410178141.6, filed with the China National Intellectual Property Administration on February 8, 2024 and entitled "METHOD FOR DISPLAYING VIRTUAL IMAGE OF DIGITAL ASSISTANT AND RELATED APPARATUS", which are incorporated herein by reference in their entireties.

### TECHNICAL FIELD

This application relates to the field of human-machine interaction technologies, and in particular, to a method for displaying a virtual image of a digital assistant and a related apparatus.

### BACKGROUND

With rapid development of smart devices, configuring a digital assistant on a smart device gradually becomes a mainstream. A series of operations of the smart device are automatically completed by using the digital assistant instead of manual operations of a user, so that both hands of the user can be released, thereby improving use experience of the smart device.

Currently, when using the digital assistant, the user usually needs to wake up the digital assistant by using a voice instruction or a manual operation, to access a use interface of the digital assistant. An assistant image is displayed on the use interface of the digital assistant. The assistant image is usually a static two-dimensional pattern or a two-dimensional pattern that continuously moves according to a specific law.

On the use interface of the digital assistant, after the user further inputs a voice instruction or a gesture instruction, the user usually needs to wait for the digital assistant to output a recognition result, to determine whether the digital assistant has received the voice instruction or the gesture instruction. Then, in a process in which the digital assistant recognizes or processes the instruction, a form of the digital assistant does not change. Therefore, after the user inputs the voice instruction or the gesture instruction, the user usually needs to wait for the digital assistant to output the recognition result, to determine whether the digital assistant has received the voice instruction or the gesture instruction. In other words, when the digital assistant recognizes or processes the instruction input by the user, the user cannot obtain a feedback from the digital assistant. It is difficult for the user to recognize a current working state of the digital assistant. As a result, the digital assistant may mistakenly consider that the digital assistant has not received the instruction, and the user repeatedly delivers the instruction.

### SUMMARY

This application provides a method for displaying a virtual image of a digital assistant, to make interaction between a user and a digital assistant more naturally.

A first aspect of this application provides a method for displaying a virtual image of a digital assistant. The method is applied to an electronic device. The virtual image of the digital assistant includes a plurality of feature objects. In the method, the virtual image is first displayed in the first form on the first interface; and then, a signal instruction generated by the electronic device is detected, and the virtual image is displayed in a second form. The signal instruction is generated by the electronic device based on a received first user input. The user input may be before or after the first form is displayed. In other words, after receiving the first user input, the electronic device generates the signal instruction, to trigger the virtual image to switch from the first form to the second form, so that a form of the virtual image displayed on an interface of the electronic device changes.

**In** addition, at least one of the plurality of feature objects is presented in both the first form and the second form. Changing from the first form to the second form means that at least one feature object undergoes at least one of a shape change, a position change, a motion law change, and a display area change.

Different forms of the virtual image represent different working states of the digital assistant. In other words, the digital assistant uses the form of the virtual image to indicate a current working state of the digital assistant. In this way, when the form of the virtual image displayed on the interface changes, a user can intuitively and clearly understand the change of the working state of the digital assistant, to clearly know a current response status of the digital assistant to the user instruction.

In this solution, it is set that the virtual image of the digital assistant includes the plurality of feature objects. After the electronic device obtains a user input, the electronic device generates a corresponding signal instruction, to trigger a change of the form of the virtual image displayed on the interface, so that different working states of the digital assistant are represented by using different forms. In this way, the user determines a current interaction status with the digital assistant based on a change status of a form of the digital assistant, to make interaction between the user and the digital assistant more naturally.

In a possible implementation, the plurality of feature objects include a first feature object. A shape change of the first feature object includes at least one of the following changes: scale-up, scale-down, stretching, compression, rotation, and switching between a dominant form, a geometric array, or a long bar. In other words, shapes of the first feature object include the dominant form, the geometric array, and the long bar. In addition, the shape change of the first feature object includes switching between a plurality of shapes, and scale-up, scale-down, stretching, compression, or rotation of each shape. In other words, in addition to switching between different shapes, the shape change of the first feature object may further include scale-up, scale-down, stretching, compression, or rotation of a same shape.

The dominant form is a form of the first feature object in a normal case. The geometric array and the long bar are forms of the first feature object in some specific cases.

In a possible implementation, the plurality of feature objects further include a second feature object. A dominant form of the first feature object is a ring. The second feature object is a sphere. A circle center of the ring and a sphere center of the sphere are at a same point. A position change of the first feature object includes at least one of a trajectory position change after a roll around the sphere and a position change caused by overall movement or rotation of the virtual image. A motion law of the first feature object includes that the ring rotates around the sphere according to a preset trajectory by using the circle center as a pivot. A motion law of the second feature object includes that the sphere performs reciprocating motion according to a preset law along a straight line that passes through the circle center of the ring and that is perpendicular to a plane on which the ring is located.

In a possible implementation, when a second user input is detected, a third feature object is displayed on the first feature object, where the third feature object is capable of moving on the first feature object and indicating an orientation of a user.

In a possible implementation, the virtual image has a breathing state. Displaying the virtual image in the first form on the first interface includes: if the first interface is a screen-off interface, displaying the first feature object in the dominant form, where the first form is the breathing state in which the first feature object and the second feature object are included.

In a possible implementation, when the first interface is the screen-off interface, the digital assistant in the breathing state performs reciprocating motion on a screen according to a preset law.

In a possible implementation, when the first interface is the screen-off interface, and the first form is the breathing state, in response to detecting a second user input, a third feature object is displayed on the first feature object, where the third feature object is capable of moving on the first feature object and indicating an orientation of a user. The first feature object is a ring. The third feature object may be a light effect region on the ring.

In a possible implementation, the virtual image has a to-be-woken-up state and a listening state, and the first interface is a lock screen interface or any screen interface after unlocking. Displaying the virtual image in the first form on the first interface specifically includes: displaying the virtual image on the first interface by using the to-be-woken-up state as the first form, where the to-be-woken-up state includes the first feature object, the first feature object as a navigation prompt line is displayed as the long bar, the navigation prompt line is used as a reference line for screen gesture navigation, and the to-be-woken-up state is persistently displayed on the first interface when no input of waking up the digital assistant is received; or
detecting a third user input, and displaying the virtual image on the first interface by using the listening state as the first form, where the third user input is used to wake up the digital assistant, the listening state includes the first feature object and the second feature object, and the first feature object is displayed in the dominant form.

In a possible implementation, the first interface is the lock screen interface or the screen interface after unlocking, and the first form is the listening state. Therefore, displaying the virtual image in the first form on the first interface specifically includes: first displaying the first feature object by using the geometric array; and changing the first feature object from the geometric array to the dominant form, and displaying the second feature object. To be specific, in an initial phase, only the first feature object is displayed and the second feature object is not displayed, and the first feature object is initially displayed as the geometric array and is laid out to the entire screen. Then, the first feature object changes from the geometric array to the dominant form after shape change, and the second feature object is displayed.

In other words, when the digital assistant is woken up, the digital assistant first appears in the form of the geometric array (for example, a dot matrix), and is gradually laid out to the entire screen. Then, the digital assistant is gradually switched from the geometric array to the dominant form (that is, the ring) of the first feature object, and the second feature object (that is, the sphere) is displayed, to implement a process of waking up the digital assistant in a form of an animation, thereby increasing intuitiveness of an interaction process. This helps the user identify the current working state of the digital assistant.

In a possible implementation, first displaying the first feature object by using the geometric array is specifically: displaying a geometric figure of a part of the array at an initial display position, and then displaying the geometric figure on an entire screen. In other words, the initial display position of the geometric array is first determined; and then, the geometric figure of a part of the array is displayed at the initial display position, and the geometric figure is gradually laid out to the entire screen. For example, a part of the dot matrix is first displayed from the initial display position, and then the dot matrix gradually spreads to be laid out to the entire screen. The user input is an input used to wake up the digital assistant.

In a possible implementation, the initial display position may be specifically near the user input that triggers wake-up of the digital assistant. For example, when the user input is pressing and holding a power button of a smartphone, the initial display position of the geometric array may be a screen position near the power button.

In addition, when the user input is not detected, the initial position is a default position, and the default position is a region for displaying the virtual image, for example, the bottom of the screen.

In this solution, the initial display position of the geometric array is determined based on the user input, so that a display process of the digital assistant can better match the user input, thereby enhancing intuitiveness of interaction between the user and the digital assistant and improving user experience.

In a possible implementation, the first interface is the lock screen interface or the screen interface after unlocking, the first form is the to-be-woken-up state, the second form is the listening state, and the signal instruction is generated after a user makes a preset gesture to the digital assistant in the first form.

In a possible implementation, the plurality of feature objects further include a second feature object. In the second form, the first feature object is in the dominant form of the ring, the second feature object is the sphere, and the ring is located on an equator at a top view angle of the sphere.

In a possible implementation, displaying the virtual image in the first form on the first interface is specifically: displaying the virtual image at a preset position on the first interface; or overlay displaying the virtual image on a target content element in the first interface, where the target content element is a content element of a preset type.

In other words, the virtual image overlays the target content element, so that the target content element is no longer displayed on the first interface.

In a possible implementation, when the virtual image overlay displayed on the target content element in the first interface, a gesture event interface of the target content element is copied to the virtual image, so that a gesture-corresponding function of the target content element can be implemented by making a gesture on the virtual image.

In other words, even if the virtual image overlays the target content element, the virtual image inherits an original function of the target content element. In this way, when a specific gesture (for example, a tap) is made on the virtual image, a function corresponding to the gesture of the target content element can still be implemented.

In a possible implementation, the first interface is a camera interface, and the target content element is a shutter control in the camera interface.

In a possible implementation, the virtual image further has a task execution state, and the task execution state includes the first feature object. On at least one process interface in a process in which the digital assistant executes an automated task, the first feature object in the task execution state correspondingly generates at least one of a shape change and a position change.

Specifically, in the process interface in the process in which the digital assistant executes the automated task, the digital assistant is actually always in the task execution state, and the first feature object of the digital assistant in the task execution state may have various changes, to present, to the user, an automated process in which the digital assistant executes the task. Therefore, the automated process in which the digital assistant executes the task is more intuitive and clearer, and the user can observe whether an error occurs in the process in which the digital assistant executes the automated task.

In a possible implementation, the first feature object is the geometric array, and a display position of the geometric array matches a target control in the process interface to simulate a tap event of the target control to go to a next process interface. In other words, in the process of executing the automated task, the digital assistant can simulate, by using the first feature object as the geometric array, an operation of tapping a control in an interface by the user, to visualize an entire process in which the digital assistant simulates execution performed by the user on the automated task.

In a possible implementation, the first form is the listening state, the second form is the task execution state, both the listening state and the task execution state include the first feature object, and the first feature object in the listening state and the first feature object in the task execution state have different forms. In the task execution state, the form of the first feature object includes: the geometric array on an interface, an outer frame of a dialog card of the digital assistant, an outer frame of an input box when input is performed by invoking the digital assistant, or an outer frame of a task result page.

In other words, in different scenarios, the first feature object may be presented in different forms, to better fit content displayed on a current interface.

In a possible implementation, the first feature object has different form changes in different task progresses of the automated task. In other words, in the process in which the digital assistant executes the automated task, when execution proceeds to different task progresses, the first feature object may change to different forms, to ensure that the form of the first feature object always closely fits the current interface.

In a possible implementation, when the automated task is a smart recognition task, and the first feature object changes from a geometric array that is laid out to the entire screen to a geometric array that is displayed only on a recognized executable object.

In a possible implementation, corresponding to the process of executing the automated task, in the task execution state, the form change of the first feature object includes: Initially, the first feature object is first displayed in the dominant form of the ring at an initial position relative to the second feature object (for example, a periphery of the second feature object), where the initial position is the same as or different from a position of the first feature object in the listening state; the first feature object as the ring is detached from the second feature object, and is scaled up and displayed as the outer frame of the dialog card of the digital assistant; the first feature object changes from the outer frame of the dialog card to a geometric array in a dialog bubble of the digital assistant; and the virtual image is displayed in the listening state after execution of the automated task is completed.

In a possible implementation, the method may further include: The electronic device obtains scenario information, determines a target form of the first feature object based on the scenario information, and displays the first feature object in the target form. In other words, the target form is related to the scenario information. When the electronic device obtains specific scenario information, the electronic device may display the first feature object in a specific form.

In a possible implementation, the virtual image has a to-be-woken-up state, the to-be-woken-up state at least includes the first feature object, and the first feature object is displayed as the long bar. The electronic device displays the second feature object in response to detecting that a focus of a line of sight of a human eye falls in a region in which the screen is located.

In other words, in some scenarios, when the digital assistant is in the to-be-woken-up state, only one long bar is displayed. When the digital assistant detects that the line of sight of the user falls on the screen, it may be considered that the user has an interaction tendency, and therefore the second feature object is displayed, to indicate that the digital assistant detects that the user has the interaction tendency and is waiting for interaction, thereby making human-machine interaction more naturally.

In a possible implementation, the method further includes: in response to detecting a human voice, moving, by the second feature object, relative to the first feature object in a direction of approaching a sound source of the human voice.

In a possible implementation, the electronic device is a smart vehicle, and the method further includes: indicating an in-vehicle function or alarm information by using deformation or motion of the first feature object in the plurality of feature objects.

A second aspect of this application provides an apparatus for displaying a virtual image of a digital assistant. The apparatus is used in an electronic device. The virtual image of the digital assistant includes a plurality of feature objects. The apparatus includes:
a display module, configured to display the virtual image in a first form on a first interface.

The display module is further configured to detect a signal instruction generated by the electronic device, and display the virtual image in a second form.

The signal instruction is generated based on a first user input. At least one of the plurality of feature objects is presented in the first form and the second form. Changing from the first form to the second form means that at least one feature object undergoes at least one of a shape change, a position change, a motion law change, and a display area change.

In a possible implementation, the plurality of feature objects include a first feature object. A shape change of the first feature object includes at least one of the following changes: scale-up, scale-down, stretching, compression, rotation, and switching between a dominant form, a geometric array, or a long bar.

In a possible implementation, the plurality of feature objects further include a second feature object. A dominant form of the first feature object is a ring. The second feature object is a sphere. A circle center of the ring and a sphere center of the sphere are at a same point.

A position change of the first feature object includes at least one of a trajectory position change after a roll around the sphere and a position change caused by overall movement or rotation of the virtual image.

A motion law of the first feature object includes that the ring rotates around the sphere according to a preset trajectory by using the circle center as a pivot.

A motion law of the second feature object includes that the sphere performs reciprocating motion according to a preset law along a straight line that passes through the circle center of the ring and that is perpendicular to a plane on which the ring is located.

In a possible implementation, the display module is further configured to detect a second user input, and display a third feature object on the first feature object, where the third feature object is capable of moving on the first feature object and indicating an orientation of a user.

In a possible implementation, the virtual image has a breathing state. Displaying the virtual image in the first form on the first interface includes:
if the first interface is a screen-off interface, displaying the first feature object in the dominant form, where the first form is the breathing state in which the first feature object and the second feature object are included.

In a possible implementation, when the first interface is the screen-off interface, the virtual image in the breathing state performs reciprocating motion on a screen according to a preset law.

In a possible implementation, when the first interface is the screen-off interface, and the first form is the breathing state, the display module is further configured to:
detect a second user input, and display a third feature object on the first feature object, where the third feature object is capable of moving on the first feature object and indicating an orientation of a user.

In a possible implementation, the virtual image has a to-be-woken-up state and a listening state, and the first interface is a lock screen interface or any screen interface after unlocking.

Displaying the virtual image in the first form on the first interface includes:
displaying the virtual image on the first interface by using the to-be-woken-up state as the first form, where the to-be-woken-up state includes the first feature object, the first feature object as a navigation prompt line is displayed as the long bar, the navigation prompt line is used as a reference line for screen gesture navigation, and the to-be-woken-up state is persistently displayed on the first interface when no input of waking up the digital assistant is received; or
detecting a third user input, and displaying the virtual image on the first interface by using the listening state as the first form, where the third user input is used to wake up the digital assistant, the listening state includes the first feature object and the second feature object, and the first feature object is displayed in the dominant form.

In a possible implementation, the first interface is the lock screen interface or the screen interface after unlocking, and the first form is the listening state.

Displaying the virtual image in the first form on the first interface specifically includes:
first displaying the first feature object by using the geometric array; and
changing the first feature object from the geometric array to the dominant form, and displaying the second feature object.

In a possible implementation, first displaying the first feature object by using the geometric array is specifically:
displaying a geometric figure of a part of the array at an initial display position, and then displaying the geometric figure on an entire screen.

In a possible implementation, the initial display position is determined based on a user input.

When no user input is detected, the initial position is a region for displaying the virtual image.

In a possible implementation, displaying the virtual image in the first form on the first interface is specifically:
displaying the virtual image at a preset position on the first interface; or
overlay displaying the virtual image on a target content element in the first interface, where the target content element is a content element of a preset type.

In a possible implementation, when the virtual image overlay displayed on the target content element in the first interface, a gesture event interface of the target content element is copied to the virtual image, so that a gesture-corresponding function of the target content element can be implemented by making a gesture on the virtual image.

In a possible implementation, the first interface is a camera interface, and the target content element is a shutter control in the camera interface.

In a possible implementation, the first interface is the lock screen interface or the screen interface after unlocking, the first form is the to-be-woken-up state, the second form is the listening state, and the signal instruction is generated after a user makes a preset gesture to the digital assistant in the first form.

In a possible implementation, the plurality of feature objects further include a second feature object.

In the second form, the first feature object is in the dominant form of the ring, the second feature object is the sphere, and the ring is located on an equator at a top view angle of the sphere.

In a possible implementation, the virtual image further has a task execution state, and the task execution state includes the first feature object.

On at least one process interface in a process in which the digital assistant executes an automated task, the first feature object in the task execution state correspondingly generates at least one of a shape change and a position change.

In a possible implementation, the first feature object is the geometric array, and a display position of the geometric array matches a target control in the process interface to simulate a tap event of the target control to go to a next process interface.

In a possible implementation, the first form is the listening state, the second form is the task execution state, both the listening state and the task execution state include the first feature object, and the first feature object in the listening state and the first feature object in the task execution state have different forms.

In the task execution state, the form of the first feature object includes: the geometric array on an interface, an outer frame of a dialog card, an outer frame of an input box when input is performed by invoking the digital assistant, or an outer frame of a task result page.

In a possible implementation, the first feature object has different form changes in different task progresses of the automated task.

In a possible implementation, when the automated task is a smart recognition task, and the first feature object changes from a geometric array that is laid out to the entire screen to a geometric array that is displayed only on a recognized executable object.

In a possible implementation, in the task execution state, the form change of the first feature object includes:
the first feature object is first displayed in the dominant form of the ring on a periphery of the second feature object;
the first feature object as the ring is then detached from the second feature object, and is scaled up and displayed as the outer frame of the dialog card;
the first feature object changes from the outer frame of the dialog card to a geometric array in a dialog bubble; and
the virtual image is displayed in the listening state after execution of the automated task is completed.

In a possible implementation, the apparatus further includes:
an obtaining module, configured to obtain scenario information, and display the first feature object in the plurality of feature objects in a target form based on the scenario information.

In a possible implementation, the virtual image has a to-be-woken-up state, the to-be-woken-up state at least includes the first feature object, and the first feature object is displayed as the long bar.

The display module is further configured to display the second feature object in response to detecting that a focus of a line of sight of a human eye falls in a region in which the screen is located.

In a possible implementation, the display module is further configured to: in response to detecting a human voice, enable the second feature object to move relative to the first feature object in a direction of approaching a sound source of the human voice.

In a possible implementation, if the electronic device is a smart vehicle, the display module is further configured to:
indicate an in-vehicle function or alarm information by using deformation or motion of the first feature object in the plurality of feature objects.

A third aspect of this application provides an apparatus for displaying a virtual image of a digital assistant. The apparatus may include a processor. The processor is coupled to a memory. The memory stores program instructions. When the program instructions stored in the memory are executed by the processor, the method according to the first aspect or any implementation of the first aspect is implemented. For steps performed by the processor in the possible implementations of the first aspect, refer to the first aspect. Details are not described herein again.

A fourth aspect of this application provides a computer-readable storage medium. The computer-readable storage medium stores a computer program. When the computer program is run on a computer, the computer is enabled to perform the method according to any implementation of the first aspect.

A fifth aspect of this application provides a circuit system. The circuit system includes a processing circuit. The processing circuit is configured to perform the method according to any implementation of the first aspect.

A sixth aspect of this application provides a computer program product. When the computer program product runs on a computer, the computer is enabled to perform the method according to any implementation of the first aspect.

A seventh aspect of this application provides a chip system. The chip system includes a processor, configured to support a server or a threshold obtaining apparatus in implementing a function in any implementation of the first aspect, for example, sending or processing data and/or information in the foregoing method. In a possible design, the chip system further includes a memory, and the memory is configured to store program instructions and data that are necessary for a server or a communication device. The chip system may include a chip, or may include a chip and another discrete component.

For beneficial effects of the second aspect to the seventh aspect, refer to the descriptions of the first aspect. Details are not described herein again.

### BRIEF DESCRIPTION OF DRAWINGS

FIG. 1 is a diagram of an architecture of an application scenario according to an embodiment of this application;
FIG. 2 is a diagram of a structure of an electronic device 101 according to an embodiment of this application;
FIG. 3 is a schematic flowchart of a method for displaying a virtual image of a digital assistant according to an embodiment of this application;
FIG. 4 is a diagram of a body image of a digital assistant according to an embodiment of this application;
FIG. 5 is a diagram of a motion law of a digital assistant in a form of a breathing state according to an embodiment of this application;
FIG. 6(a) and FIG. 6(b) are a diagram in which a digital assistant is switched from a breathing state to a to-be-woken-up state according to an embodiment of this application;
FIG. 7 is a diagram of a digital assistant in a form of a woken-up state according to an embodiment of this application;
FIG. 8 is a diagram of a digital assistant in a form of a listening state according to an embodiment of this application;
FIG. 9 is a diagram of a digital assistant in a form of a thinking state according to an embodiment of this application;
FIG. 10 is a diagram of a digital assistant in a form of a task execution state according to an embodiment of this application;
FIG. 11 is a diagram of a plurality of forms of a digital assistant according to an embodiment of this application;
FIG. 12(a), FIG. 12(b), FIG. 12(c), and FIG. 12(d) are a diagram of displaying a digital assistant in a to-be-woken-up state according to an embodiment of this application;
FIG. 13(a) and FIG. 13(b) are a diagram in which a digital assistant is switched from a to-be-woken-up state to a listening state according to an embodiment of this application;
FIG. 14A, FIG. 14B, and FIG. 14C are a diagram in which a virtual image overlays a camera shutter control according to an embodiment of this application;
FIG. 15(a) and FIG. 15(b) are a diagram in which a virtual image overlays an assistant suggestion component according to an embodiment of this application;
FIG. 16A, FIG. 16B, FIG. 16C, and FIG. 16D are a diagram of a process in which a digital assistant executes an automated task according to an embodiment of this application;
FIG. 17(a), FIG. 17(b), and FIG. 17(c) are a diagram of converting a ring of a digital assistant into a dot matrix to be laid out on a task execution interface according to an embodiment of this application;
FIG. 18(a), FIG. 18(b), FIG. 18(c), and FIG. 18(d) are a diagram of performing text input on a desktop by using a digital assistant according to an embodiment of this application;
FIG. 19(a), FIG. 19(b), FIG. 19(c), FIG. 19(d), and FIG. 19(e) are a diagram in which a ring of a digital assistant is deformed and is restored to an original state according to an embodiment of this application;
FIG. 20(a), FIG. 20(b), and FIG. 20(c) are a diagram of a change of a form of a digital assistant in a smart recognition scenario according to an embodiment of this application;
FIG. 21A, FIG. 21B, FIG. 21C, FIG. 21D, and FIG. 21E are a diagram of appearance of a digital assistant in a smart recognition scenario according to an embodiment of this application;
FIG. 22A and FIG. 22B are a diagram in which a digital assistant is deformed based on scenario information according to an embodiment of this application;
FIG. 23 is a diagram of a change of a digital assistant on a vehicle-mounted terminal according to an embodiment of this application;
FIG. 24 is a schematic flowchart of a method for displaying a digital assistant according to an embodiment of this application;
FIG. 25 is a diagram of an application scenario of a method for displaying a digital assistant according to an embodiment of this application;
FIG. 26 is a diagram of a digital assistant in a sleep state according to an embodiment of this application;
FIG. 27 is a diagram of region division according to an embodiment of this application;
FIG. 28 is a diagram of switching a displayed form of a digital assistant according to an embodiment of this application;
FIG. 29 is a diagram of a change of a digital assistant in a woken-up state according to an embodiment of this application;
FIG. 30 is another diagram of a change of a digital assistant in a woken-up state according to an embodiment of this application;
FIG. 31 is a diagram of a structure of an apparatus for displaying a virtual image of a digital assistant according to an embodiment of this application;
FIG. 32 is a diagram of a structure of an execution device according to an embodiment of this application; and
FIG. 33 is a diagram of a structure of a computer-readable storage medium according to an embodiment of this application.

### DESCRIPTION OF EMBODIMENTS

To make the objectives, technical solutions, and advantages of this application clearer and more comprehensible, the following describes embodiments of this application with reference to the accompanying drawings. It is clear that the described embodiments are only some but not all of embodiments of this application. A person of ordinary skill in the art may learn that, as a new application scenario emerges, the technical solutions provided in embodiments of this application are also applicable to a similar technical problem.

In the specification, claims, and accompanying drawings of this application, the terms "first", "second", and so on are intended to distinguish between similar objects but do not necessarily indicate a specific order or sequence. It should be understood that the descriptions termed in such a manner are interchangeable in appropriate cases so that embodiments can be implemented in another order than the order illustrated or described in this application. Moreover, terms "include", "have", and any other variants thereof mean to cover a non-exclusive inclusion. For example, a process, a method, a system, a product, or a device that includes a series of steps or modules is not necessarily limited to steps or modules expressly listed, but may include other steps or modules not expressly listed or inherent to such a process, method, product, or device. Naming or numbering of steps in this application does not mean that steps in a method procedure need to be performed based on a time/logical sequence indicated by the naming or numbering. An execution sequence of procedure steps that have been named or numbered may be changed based on a technical objective to be implemented, provided that same or similar technical effects can be achieved.

Unit division in this application is logical division and may be other division during actual implementation. For example, a plurality of units may be combined or integrated into another system, or some features may be ignored or not performed. In addition, the displayed or discussed mutual couplings or direct couplings or communication connections may be implemented through some interfaces. The indirect couplings or communication connections between the units may be implemented in electronic or other similar forms. This is not limited in this application. In addition, units or subunits described as separate parts may or may not be physically separate, may or may not be physical units, or may be distributed into a plurality of circuit units. Some or all of the units may be selected according to actual requirements to achieve objectives of solutions of this application.

For ease of understanding, the following first describes some technical terms used in embodiments of this application.

### (1) Digital assistant

The digital assistant is a virtual assistant that replaces a manual operation of a user by receiving an instruction of the user, to help the user complete a series of operations of a smart device. Generally, currently, most digital assistants are voice assistants, to complete an operation of a smart device by receiving a voice instruction of a user. For example, when the smart device is a smartphone or a smart television, the digital assistant can receive a voice instruction of a user to open a specific application or play a specific song.

### (2) Distance sensor

The distance sensor, also referred to as a displacement sensor, is a type of sensor, and is configured to sense a distance between the distance sensor and a specific object to complete a preset function. The distance sensor is widely used.

The distance sensor may be classified as an optical distance sensor, an infrared distance sensor, an ultrasonic distance sensor, and the like according to different working principles. Most distance sensors used on a mobile phone are infrared distance sensors. The infrared distance sensor has an infrared emitter and an infrared receiver. When an infrared ray emitted by the emitter is received by the receiver, it indicates a short distance, and a screen needs to be turned off to avoid a misoperation phenomenon. When the receiver cannot receive the infrared ray emitted by the emitter, it indicates a long distance, and a screen does not need to be turned off. Working principles of other types of distance sensors are similar. A distance is also determined through emission and reception of a specific substance. The emitted substance may be an ultrasonic wave, a light pulse, or the like.

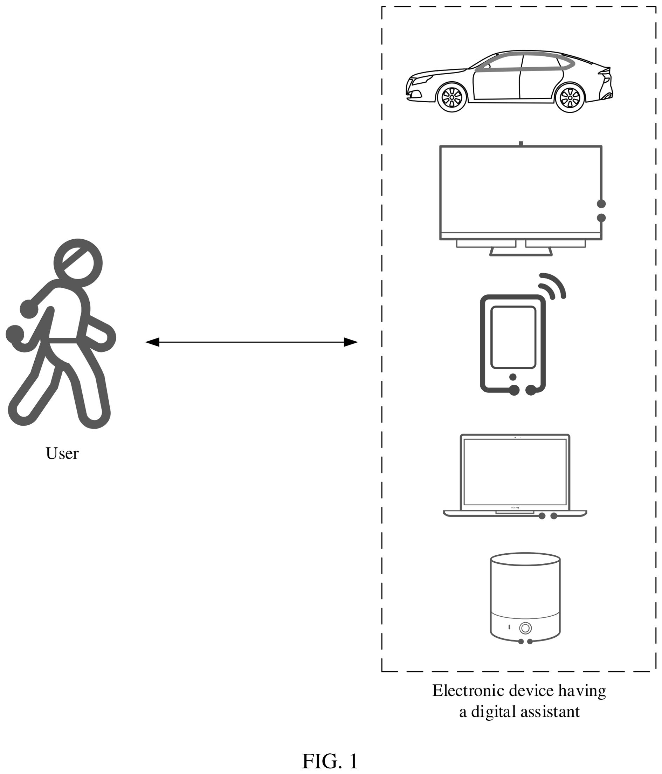

Refer to FIG. 1. FIG. 1 is a diagram of an architecture of an application scenario according to an embodiment of this application. As shown in FIG. 1, the application scenario includes a user and an electronic device having a digital assistant. The user may deliver an instruction to the digital assistant on the electronic device by using a voice or a gesture, so that the digital assistant assists the user in automatically completing a series of operations of the electronic device, for example, automatically executing an application on the electronic device.

The digital assistant is configured on the electronic device. An instruction receiving apparatus such as a pickup or a camera may be configured on the electronic device, so that a voice instruction or a gesture instruction of the user can be received. The digital assistant is used to process the instruction input by the user, to automatically complete a series of operations and feed back a processing result to the user. The electronic device further has a display. A form of the digital assistant can be displayed on the display. When the electronic device obtains a user input, the electronic device generates a signal instruction to trigger a change of a virtual image of the digital assistant, so that a process of interaction between the digital assistant and the user is more intuitive. For example, when the electronic device is at a specific distance from the user, the electronic device recognizes a spatial interaction behavior of the user by sensing a position change or a posture change of the user, and displays, on the display, a form change generated by the digital assistant in response to the spatial interaction behavior of the user.

The foregoing describes a process in which the electronic device adjusts a form of the digital assistant by obtaining a spatial interaction behavior of the user in a real physical world. In addition, the electronic device may be a virtual reality (virtual reality, VR) device or an augmented reality (augmented reality, AR) device. The electronic device adjusts the form of the digital assistant by obtaining a spatial interaction behavior of the user in a virtual world such as a VR world or an AR world. In the virtual world, the user interacting with the electronic device may be a virtual image representing the real user in the virtual world. The real user performs a spatial interaction behavior by controlling the virtual image, thus changing the form of the digital assistant in the virtual world.

For example, the electronic device having the digital assistant may be, for example, a smartphone (mobile phone), a personal computer (personal computer, PC), a notebook computer, a tablet computer, a smart television, a mobile Internet device (mobile internet device, MID), a display apparatus in a self-driving vehicle, a smart speaker, a wearable device, a VR device, an AR device, a display apparatus in industrial control (industrial control), a display apparatus in a remote medical surgery (remote medical surgery), a display apparatus in a smart grid (smart grid), a wireless communication apparatus in a smart city (smart city), or a display apparatus in a smart home (smart home).

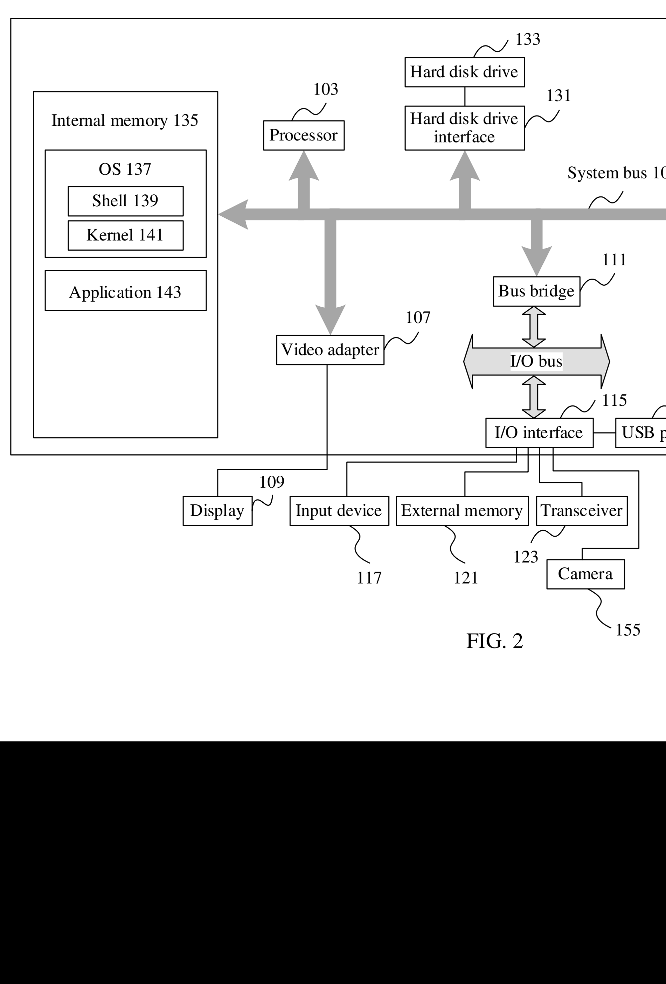

Refer to FIG. 2. FIG. 2 is a diagram of a structure of an electronic device 101 according to an embodiment of this application. As shown in FIG. 2, the electronic device 101 includes a processor 103, and the processor 103 is coupled to a system bus 105. The processor 103 may be one or more processors, and each processor may include one or more processor cores. A video adapter (video adapter) 107 may drive a display 109, and the display 109 is coupled to the system bus 105. The system bus 105 is coupled to an input/output (I/O) bus through a bus bridge 111. An I/O interface 115 is coupled to the I/O bus. The I/O interface 115 communicates with a plurality of I/O devices, such as an input device 117 (for example, a touchscreen), an external memory 121 (for example, a hard disk, a floppy disk, an optical disc, or a USB flash drive), a multimedia interface, a transceiver 123 (which may send and/or receive a radio communication signal), a camera 155 (which may capture static and dynamic digital video images), and an external USB port 125. Optionally, an interface connected to the I/O interface 115 may be a USB port.

The processor 103 may be any conventional processor, including a reduced instruction set computing (reduced instruction set Computing, RISC) processor, a complex instruction set computing (complex instruction set computing, CISC) processor, or a combination thereof. Optionally, the processor may be a dedicated apparatus such as an ASIC.

The electronic device 101 may communicate with a software deployment server 149 through a network interface 129. For example, the network interface 129 is a hardware network interface such as a network interface card. A network 127 may be an external network such as the Internet, or an internal network such as the Ethernet or a virtual private network (virtual private network, VPN). Optionally, the network 127 may alternatively be a wireless network, for example, a Wi-Fi network or a cellular network.

A hard disk drive interface 131 is coupled to the system bus 105. The hardware drive interface is connected to a hard disk drive 133. An internal memory 135 is coupled to the system bus 105. Data running in the internal memory 135 may include an operating system (OS) 137, an application 143, and a schedule table of the electronic device 101.

The operating system includes a shell 139 and a kernel (kernel) 141. The shell 139 is an interface between a user and a kernel of the operating system. The shell is an outermost layer of the operating system. The shell manages interaction between the user and the operating system: waiting for an input from the user, interpreting the input from the user to the operating system, and processing various output results of the operating system.

The kernel 141 includes parts that are in the operating system and that are used to manage a memory, a file, a peripheral, and a system resource. The kernel 141 directly interacts with hardware. The kernel of the operating system usually runs a process, provides inter-process communication, and provides functions such as CPU time slice management, interruption, memory management, and I/O management.

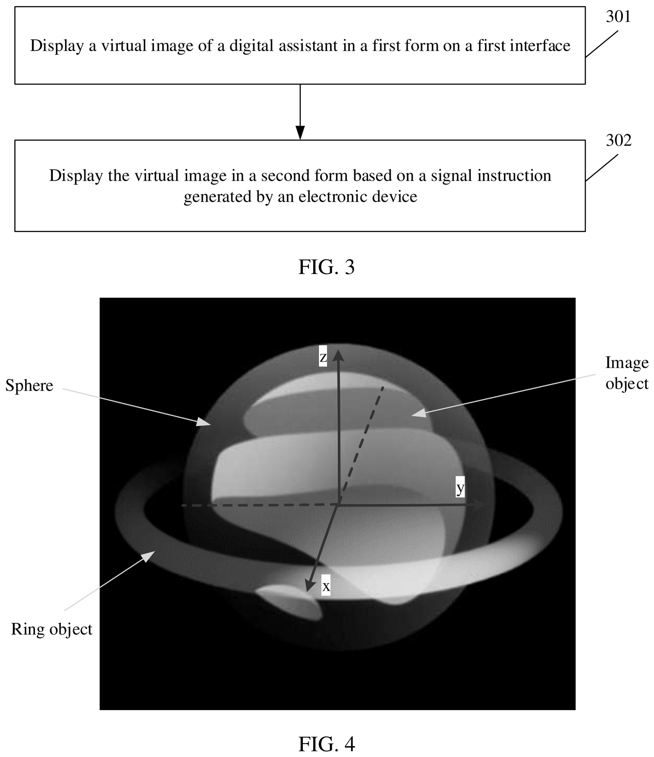

Refer to FIG. 3. FIG. 3 is a schematic flowchart of a method for displaying a virtual image of a digital assistant according to an embodiment of this application. As shown in FIG. 3, the method for displaying the virtual image of the digital assistant includes the following steps 301 and 302, and the method for displaying the virtual image of the digital assistant is applied to an electronic device configured with the digital assistant.

Step 301: Display the virtual image of the digital assistant in a first form on a first interface.

In this embodiment, the virtual image of the digital assistant may include a plurality of feature objects. When the virtual image is displayed in different forms, the plurality of feature objects included in the virtual image change. The first form is one of a plurality of forms of the virtual image of the digital assistant, and is displayed on the first interface of the electronic device.

Step 302: Display the virtual image in a second form based on a signal instruction generated by the electronic device.

The signal instruction is generated by the electronic device based on a received first user input. After receiving the first user input, the electronic device generates the signal instruction, to trigger the virtual image to switch from the first form to the second form, so that a form of the virtual image displayed on an interface of the electronic device changes.

The virtual image in the first form and the virtual image in the second form each include at least one of the plurality of feature objects. Changing the virtual image from the first form to the second form may specifically mean that at least one feature object undergoes at least one of a shape change, a position change, a motion law change, and a display area change.

It should be noted that the first user input received by the electronic device may be before the electronic device displays the first form of the virtual image, or may be after the electronic device displays the first form of the virtual image. If the received first user input may be before the electronic device displays the first form of the virtual image, it indicates that the first user input causes the electronic device to display the first form of the virtual image, and the first form is changed to the second form. In other words, this causes at least two form changes. If the received first user input may be after the electronic device displays the first form of the virtual image, it indicates that the first user input causes the virtual image of the digital assistant to change from the first form to the first form. In other words, this causes at least one form change.

In this embodiment, different forms of the virtual image represent different working states of the digital assistant. In other words, the digital assistant uses the form of the virtual image to indicate a current working state of the digital assistant. In this way, when the form of the virtual image displayed on the interface changes, a user can intuitively and clearly understand the change of the working state of the digital assistant, to clearly know a current response status of the digital assistant to the user instruction.

Optionally, the plurality of feature objects include a first feature object. Shapes of the first feature object include a dominant form, a geometric array, and a long bar. In addition, the shape change of the first feature object includes switching between a plurality of shapes, and scale-up, scale-down, stretching, compression, or rotation of each shape. In other words, in addition to switching between different shapes, the shape change of the first feature object may further include scale-up, scale-down, stretching, compression, or rotation of a same shape. The dominant form is a form of the first feature object in a normal case. The geometric array and the long bar are forms of the first feature object in some specific cases.

Optionally, the plurality of feature objects further include a second feature object. In the plurality of feature objects, the dominant form of the first feature object is a ring. The second feature object is a sphere. A circle center of the ring and a sphere center of the sphere are at a same point. A position change of the first feature object includes at least one of a trajectory position change after a roll around the sphere and a position change caused by overall movement or rotation of the virtual image. A motion law of the first feature object includes that the ring rotates around the sphere according to a preset trajectory by using the circle center as a pivot. A motion law of the second feature object includes that the sphere performs reciprocating motion according to a preset law along a straight line that passes through the circle center of the ring and that is perpendicular to a plane on which the ring is located.

For example, the digital assistant may have the following six different forms corresponding to different processing phases of a task.

Breathing state: corresponds to a form of the digital assistant when no task is being processed, that is, indicates that the digital assistant is in a state in which no task is being processed. The breathing state is a form of the digital assistant on a screen-off interface.

To-be-woken-up state: corresponds to a form of the digital assistant that waits to be woken up (which is essentially a form of the digital assistant when no task is being processed), that is, indicates that the digital assistant is in a state in which the digital assistant waits for a wake-up instruction. The to-be-woken-up state is a form of the digital assistant on a screen-on interface. The screen-on interface includes a lock screen interface or an interface obtained after the screen is unlocked.

Woken-up state: corresponds to a form of the digital assistant that is woken up and is ready to receive an instruction, that is, indicates that the digital assistant is in a state in which the digital assistant is to receive an instruction.

Listening state: corresponds to a form of the digital assistant in a process of receiving an instruction, that is, indicates that the digital assistant is in an instruction receiving state.

Thinking state: corresponds to a form of the digital assistant in a process of parsing an instruction after the instruction is received, that is, indicates that the digital assistant is in an instruction parsing state.

Task execution state: corresponds to a form of the digital assistant that executes a task obtained by parsing an instruction, that is, indicates that the digital assistant is in the task execution state.

From the perspective of an interaction intention degree, the foregoing plurality of forms are arranged in ascending order of interaction intention degrees as follows: the breathing state, the to-be-woken-up state, the woken-up state, the listening state, the thinking state, and the task execution state. In addition, on the screen-off interface, the breathing state may be converted into the woken-up state. On the screen-on interface, the to-be-woken-up state may be changed to the listening state but not to the woken-up state. When digital assistants are applied to different electronic devices, forms of the digital assistants may be different. For example, when a digital assistant is applied to a smartphone, a form of the digital assistant includes the breathing state, the to-be-woken-up state, the listening state, the thinking state, and the task execution state, and the forms can be sequentially switched back and forth. When a digital assistant is applied to a smart television, a form of the digital assistant includes the breathing state, the woken-up state, the listening state, the thinking state, and the task execution state, and the forms can be sequentially switched back and forth.

The foregoing describes different forms of the digital assistant. The following describes a body image of the digital assistant.

The body image of the digital assistant includes at least two feature objects. Different forms of the digital assistant are distinguished by changing a shape, a position, and a motion law of a feature object. Specifically, for a body image of a digital assistant in a specific form, each feature object may be dynamically presented, to represent a concept of an active life form of the digital assistant. Different forms of the digital assistant are distinguished by using changes of shapes, positions, and/or motion laws of different feature objects. The change of the shape of the feature object may indicate that a current position of the feature object remains unchanged, and a part of the feature object presented on the display is adjusted (for example, a front side of the displayed feature object is adjusted to a back side of the displayed feature object), switching is performed between a plurality of different preset shapes (including scale-up, scale-down, stretching, compression, or rotation of each shape), and a position or an action of some parts on the feature object is adjusted (for example, an arm on the feature object is adjusted from static to a hand wave action). The change of the position of the feature object may indicate that a position of displaying the feature object changes, for example, from being displayed at the bottom of the screen to being displayed at the top or the center of the screen. The change of the motion law of the feature object may indicate that a motion status of the entire feature object on the display changes. For example, the feature object changes from being static to moving along a preset trajectory. For another example, the feature object changes from moving along a sine curve trajectory to rotating around a specific point.

Refer to FIG. 4. FIG. 4 is a diagram of a body image of a digital assistant according to an embodiment of this application. As shown in FIG. 4, the body image of the digital assistant includes three feature objects: a ring, a sphere, and an image object. The image object is wrapped in the sphere. The ring surrounds the sphere, and is similar to a ring of a planet. For digital assistants in different forms, rings, spheres, and image bodies can have different postures and different motion laws. In addition, a posture and/or a motion law of at least one feature object change/changes between the digital assistants in different forms.

In addition, for ease of description of a change of a motion status of each feature object, a reference system is defined for the body image of the digital assistant. In a breathing state, a plane on which the ring is located is an xoy plane, an x-axis points to a screen of an electronic device, and a vertical direction is a z-axis. In brief, a width direction of the electronic device is a y-axis, and a height direction of the electronic device is the z-axis.

With reference to the accompanying drawings, the following describes in detail a posture and a motion law of a feature object in each form of the digital assistant.

### 1. Breathing state

When the form of the digital assistant is the breathing state, the ring, the sphere, and the image object all move regularly along a preset trajectory according to a preset periodicity. In a moving process, relative positions between the ring, the sphere, and the image object remain unchanged. In other words, center points of the ring, the sphere, and the image object always coincide. In addition, the image object and the sphere may rotate around an axis or a point, for example, rotate around a sphere center of the sphere. In other words, the image object and the sphere also rotate when moving along the preset trajectory (similar to a case in which the Earth also rotates when revolving around the Sun).

For example, when the virtual image has the breathing state, displaying the virtual image in the first form on the first interface may specifically include that if the first interface is a screen-off interface, the first form is the breathing state. The breathing state includes a first feature object and a second feature object. The first feature object is displayed in a dominant form.

Optionally, when the first interface is a screen-off interface, the digital assistant in the breathing state performs reciprocating motion on a screen according to a preset law.

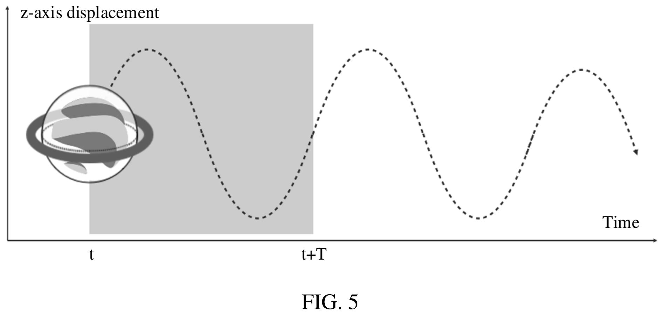

Refer to FIG. 5. FIG. 5 is a diagram of a motion law of a digital assistant in a form of a breathing state according to an embodiment of this application. As shown in FIG. 5, FIG. 5 shows an image of the breathing state of the digital assistant at a moment t. The ring performs reciprocating motion along a z-axis direction, and a function of a moving distance and time conforms to a sine curve. The sphere and the image object rotate around a sphere center of the sphere during motion of the ring. In addition, to reflect rotation effect of the sphere, corresponding light-and-shadow effect may be added to the sphere to indicate rotation of the sphere.

### 2. To-be-woken-up state

When the form of the digital assistant is the to-be-woken-up state, the ring (that is, the foregoing first feature object) of the digital assistant contracts inward and is displayed in a manner of a gesture prompt line. The gesture prompt line may be specifically a long bar.

The gesture prompt line is designed to cooperate with a full-screen gesture. The gesture prompt line is a global control, may be displayed at the bottom of the screen, and is used to provide a reference for the full-screen gesture. For example, slide-up from the bottom is usually sliding up from a position of the gesture prompt line.

Specifically, only the first feature object of the digital assistant is displayed, and a shape of the first feature object is a long bar. Other feature objects of the digital assistant (for example, the sphere and the image object of the digital assistant) are hidden. Generally, the gesture prompt line is usually displayed at the bottom of the screen and has a specific function. Correspondingly, the digital assistant in the to-be-woken-up state also has a function of the gesture prompt line, for example, sliding leftward or rightward to switch an application.

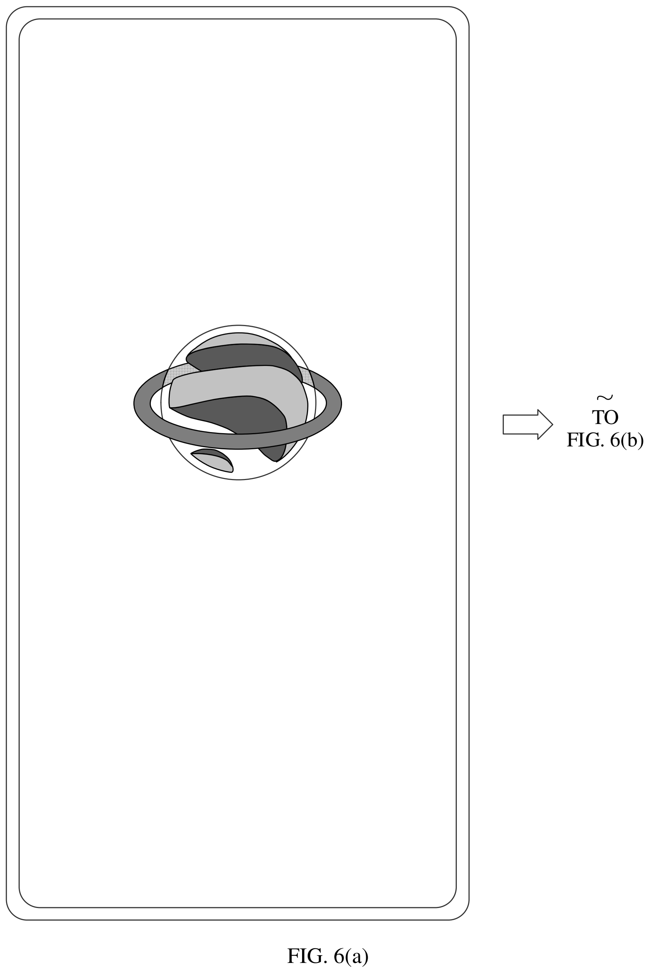

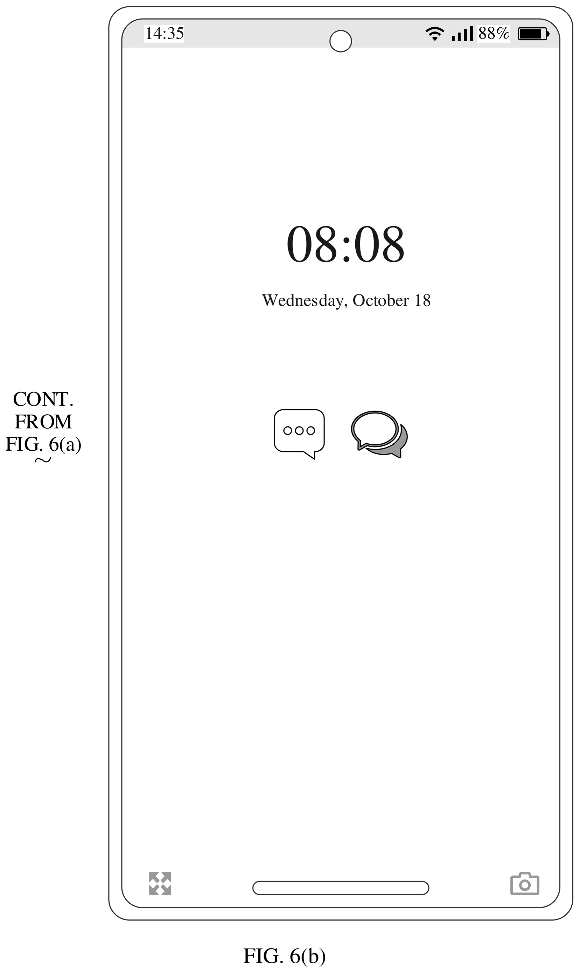

Refer to FIG. 6(a) and FIG. 6(b). FIG. 6(a) and FIG. 6(b) are a diagram in which a digital assistant is switched from a breathing state to a to-be-woken-up state according to an embodiment of this application. As shown in FIG. 6(a), on a screen-off interface, when the digital assistant is in the breathing state, a virtual image of the digital assistant includes a ring, a sphere, and an image object. As shown in FIG. 6(b), when a user operation triggers an electronic device to switch from the screen-off interface to a screen-on interface, the digital assistant is switched from the breathing state to the to-be-woken-up state. In the to-be-woken-up state, the ring of the digital assistant is changed to a long bar at the bottom of a screen, and the sphere and the image object of the digital assistant are hidden.

### 3. Woken-up state

When the form of the digital assistant is the woken-up state, the ring is fixedly located on an equator plane of the sphere and rotates around the z-axis with motion of the user. In addition, to show a rotation relationship of the ring, a part of a region on the ring is set to a light effect region. Luminance of the light effect region on the ring is higher than that of a non-light effect region on the ring. In addition, the light effect region on the ring points to the user. When the ring rotates, the light effect region moves and points to the user. Alternatively, when the user moves, the ring may also rotate with motion of the user, so that the light effect region always points to a position of the user. Alternatively, when the user approaches or moves away from the electronic device, a pitch angle of the ring may change (that is, rotate around a plane on which the display of the electronic device is located), so that the ring can simulate a "head-lifting" or "head-lowering" action when the user approaches.

For example, when the first interface is the screen-off interface, and the first form displayed on the first interface is the breathing state, if a second user input is detected, a third feature object is displayed on the first feature object. The third feature object indicates orientation information of the user and is capable of moving on the first feature object. The first feature object is the foregoing ring. The third feature object may be the light effect region on the ring.

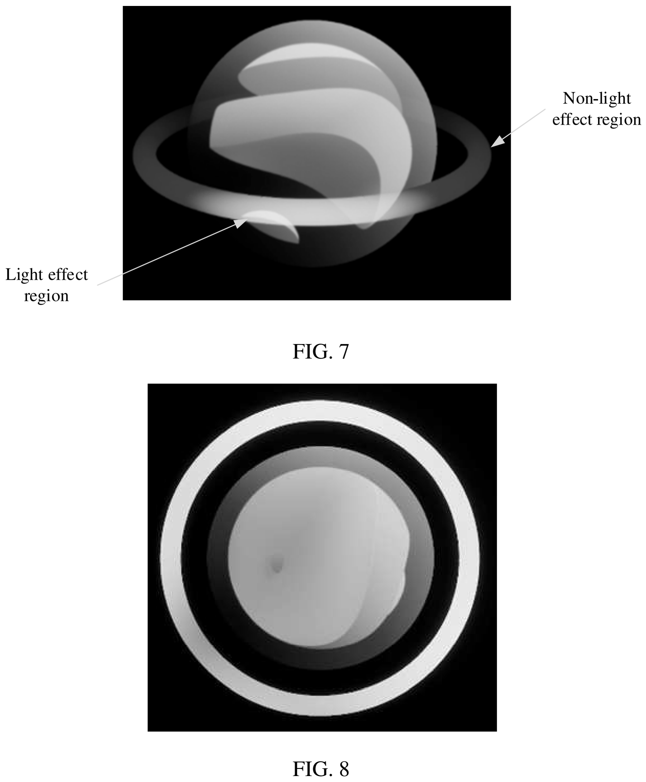

Refer to FIG. 7. FIG. 7 is a diagram of a digital assistant in a form of a woken-up state according to an embodiment of this application. As shown in FIG. 7, a part of a region on a side that is of a ring and that is close to a screen is a light effect region, and the light effect region indicates an orientation of a user relative to an electronic device. When the orientation of the user changes, the ring rotates around a z-axis, so that the light effect region always faces the user. In addition, when a distance between the user and the electronic device is less than a specific preset value, the user continues to approach a television. The ring rotates around the z-axis, and the ring further generates a change of a pitch angle around a y-axis. For example, the ring rotates upward around the y-axis by a specific angle and then gradually becomes static due to inertia, so that the ring can simulate a "head-lifting" action when the user approaches.

### 4. Listening state

When the form of the digital assistant is the listening state, the ring rotates around the y axis on the xoy plane. After rotation, the ring is located on a yoz plane, and no longer blocks the sphere and the image object. In addition, when the ring rolls, the sphere and the image object may be driven to roll together, so that the bottom or the top of the original sphere and the image object faces the screen.

Refer to FIG. 8. FIG. 8 is a diagram of a digital assistant in a form of a listening state according to an embodiment of this application. As shown in FIG. 8, a ring in FIG. 8 rotates to a yoz plane, and a sphere and an image object also rotate.

### 5. Thinking state

When the form of the digital assistant is the thinking state, the ring and the image object are always in a rotation state, and a pivot around which the ring and the image object rotate may be a center of the sphere. In addition, a rotation trajectory of the ring and the image object may be random, or may be preset. In addition, in the thinking state, to show a rotation relationship of the ring, a part of a region on the ring may also be set to a light effect region, and the light effect region moves with motion of the ring, or the light effect region continuously moves on the ring. For a manner of setting the light effect region on the ring, refer to the foregoing description of the woken-up state. Details are not described herein again.

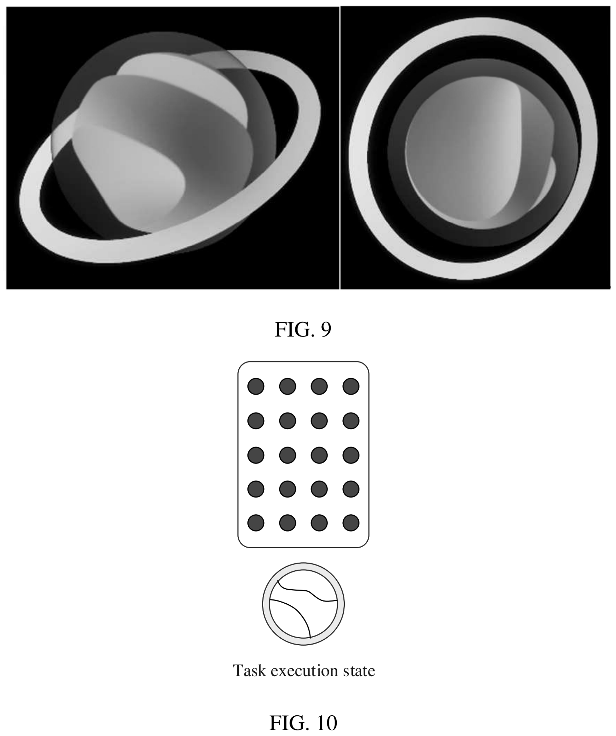

Refer to FIG. 9. FIG. 9 is a diagram of a digital assistant in a form of a thinking state according to an embodiment of this application. FIG. 9 shows two states of the digital assistant in a rotation process. In the two states, the ring and the image object are always in rotation.

### 6. Task execution state

When the form of the digital assistant is the task execution state, the ring of the digital assistant may be converted into another shape (for example, a geometric array), and may be detached from the sphere and the image object and displayed at another position on an interface. For example, refer to FIG. 10. FIG. 10 is a diagram of a digital assistant in a form of a task execution state according to an embodiment of this application. As shown in FIG. 10, a ring of the digital assistant is converted into a geometric array, and is detached from a sphere and an image object of the digital assistant and displayed at another position.

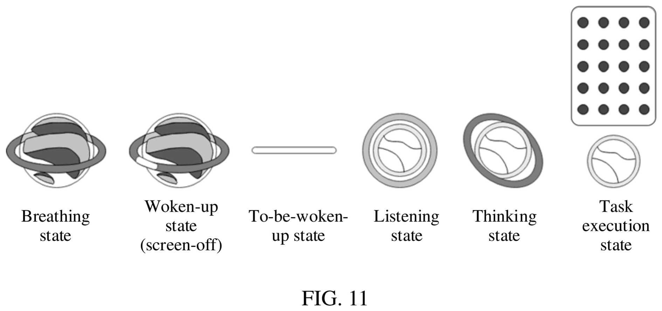

In conclusion, refer to FIG. 11. FIG. 11 is a diagram of a plurality of forms of a digital assistant according to an embodiment of this application. FIG. 11 shows the plurality of forms included in the digital assistant.

With reference to the plurality of forms described above, the following describes a first form and a second form of the virtual image mentioned in this embodiment in various cases.

Optionally, when the virtual image has the to-be-woken-up state and the listening state, the first interface on which the first form of the virtual image is displayed may be a lock screen interface or any screen interface after unlocking.

In this case, displaying the virtual image in the first form on the first interface may specifically include: displaying the virtual image on the first interface by using the to-be-woken-up state as the first form. The to-be-woken-up state includes the first feature object. The first feature object as a navigation prompt line is displayed as the long bar. The navigation prompt line is used as a reference line for screen gesture navigation. In addition, the to-be-woken-up state is persistently displayed on a display interface when no input of waking up the digital assistant is received.

Specifically, after detecting a user input, the electronic device determines a response policy based on recognition of the user input, and presents a response result on the screen. The response result presented on the screen by the electronic device may be that the interface remains unchanged, or may be that the interface changes.

For example, when the electronic device is a smartphone, the user pokes head to be close to the smartphone, and facial recognition hardware on the smartphone recognizes a human face. In this case, it may be considered that the smartphone detects a user input. Alternatively, if the smartphone detects, by using an infrared sensor, that a hand approaches, it may also be considered that the smartphone detects a user input. The smartphone switches from a screen-off interface to a lock screen interface (the lock screen interface is essentially a screen-on interface) based on the user input detected by the smartphone. Further, after facial recognition verification on the lock screen interface succeeds, the smartphone is unlocked to go to a desktop or an interface of a running application. For another example, the user directly double-taps the screen-off interface, and the electronic device switches to the lock screen interface.

When the electronic device switches from the screen-off interface to the screen-on interface, and the digital assistant is not woken up, the digital assistant is displayed in the to-be-woken-up form. In the to-be-woken-up form, the ring of the digital assistant contracts inward and is displayed in a manner of a gesture prompt line. The gesture prompt line may be specifically a long bar. The gesture prompt line is a global control, may be displayed at the bottom of the screen on any interface, and is used to provide a reference for the full-screen gesture. For example, slide-up from the bottom is usually sliding up from a position of the gesture prompt line.

In other words, from screen-off, to screen-on, and then to a case in which the user actively wakes up the digital assistant to interact with the digital assistant, the digital assistant is always displayed at a position that can be reached by the user and is displayed in different forms.

In this embodiment, the digital assistant may be displayed in the to-be-woken-up form on the lock screen interface after screen-on and on the desktop or an intra-application interface when the user does not use a preset operation to wake up the digital assistant. In other words, the ring of the digital assistant contracts to form a long bar as a system gesture prompt line (generally displayed at the bottom of the screen). As the ring contracts, the image object and the sphere in the ring disappear (which may be accompanied by a related disappearance animation).

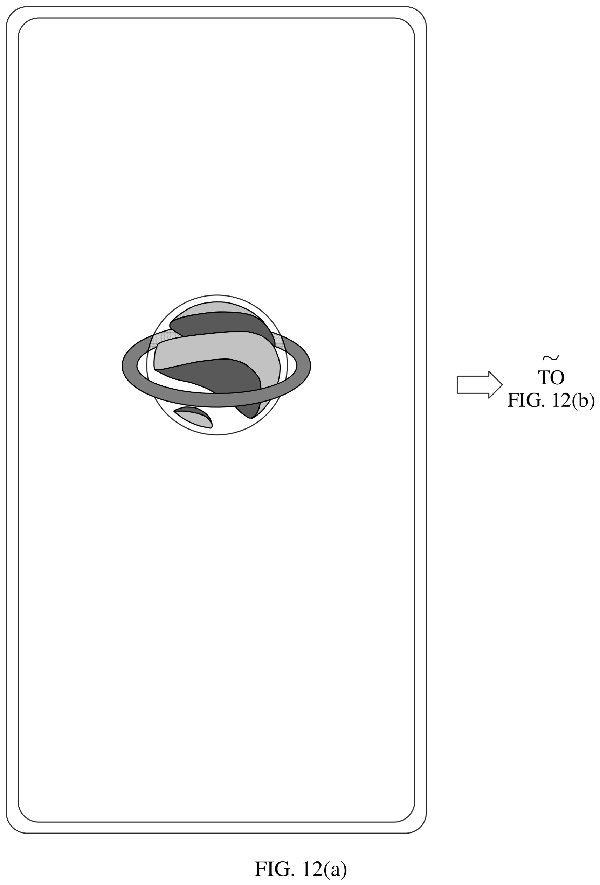

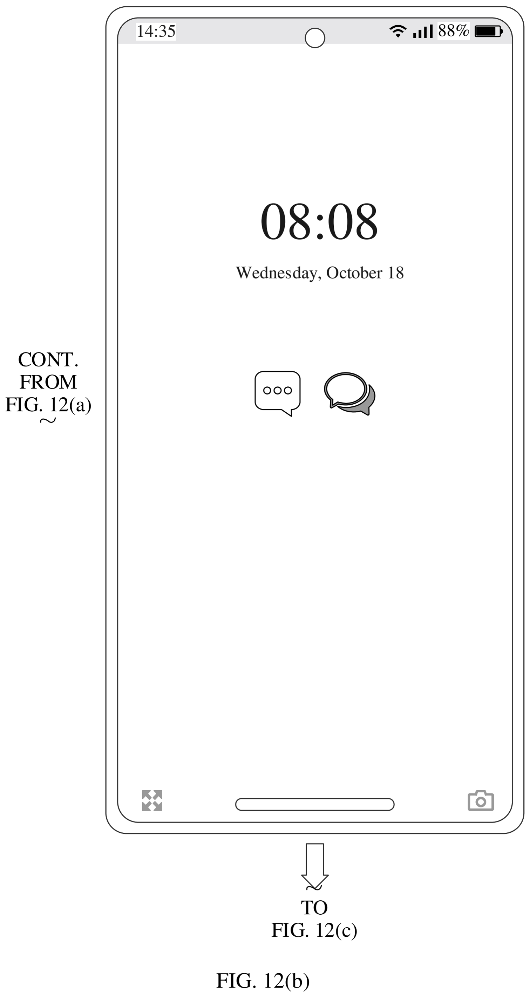

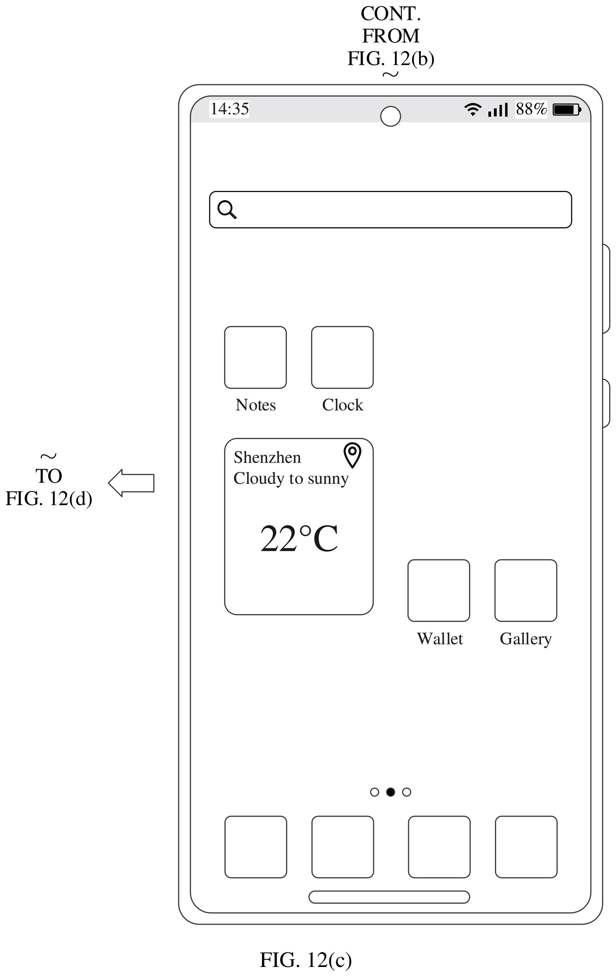

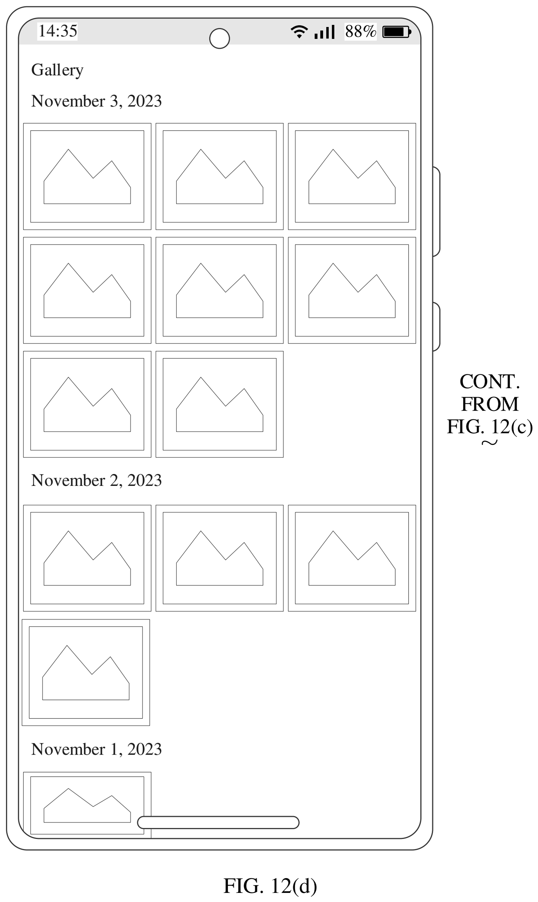

For example, refer to FIG. 12(a), FIG. 12(b), FIG. 12(c), and FIG. 12(d). FIG. 12(a), FIG. 12(b), FIG. 12(c), and FIG. 12(d) are a diagram of displaying a digital assistant in a to-be-woken-up state according to an embodiment of this application. As shown in FIG. 12(a), on a screen-off interface, the digital assistant is displayed in a breathing state, and can move in the screen-off interface according to a preset law. As shown in FIG. 12(b), when an input of a user causes an electronic device to go to a lock screen interface from the screen-off interface, the digital assistant moves to the bottom, a ring contracts inward, and an image object and a sphere are squeezed to be fully hidden (this process is presented by using an animation, or an animation may be hidden). In this case, the digital assistant is in a bar shape and is displayed at the bottom of a screen as a system gesture prompt line. As shown in FIG. 12(c) and FIG. 12(d), after the screen is unlocked, the user taps a gallery application icon (or any other application icon) to go to a gallery interface. In the foregoing series of operation processes, the user does not wake up the digital assistant. Therefore, the digital assistant is always displayed in the to-be-woken-up state, and is displayed on the interface in the manner of the gesture prompt line.

When the first form is the to-be-woken-up state, the digital assistant being switched from the first form to the second form may be specifically switching from the to-be-woken-up state to the listening state.

For example, when the first interface is a lock screen interface or any screen interface after unlocking, the first form is the to-be-woken-up state, and the second form displayed based on the signal instruction generated by the electronic device is the listening state. The signal instruction for triggering displaying the virtual image in the second form may be generated after the user makes a preset gesture on the digital assistant in the first form. For example, the user makes a touch-and-hold gesture or a double-tap gesture on the digital assistant in the first form. The preset gesture is not specifically limited in this embodiment.

Optionally, the plurality of feature objects include the first feature object and the second feature object. In the second form, the first feature object is in the dominant form of the ring, the second feature object is the sphere, and the ring is located on an equator at a top view angle of the sphere.

The foregoing describes an embodiment in which the first form is the to-be-woken-up state. The following describes an embodiment in which the first form is the listening state.

Optionally, when a third user input is detected, the virtual image of the digital assistant is displayed on the first interface by using the listening state as the first form. The third user input is used to wake up the digital assistant. For example, the third user input may be, for example, a voice input of the user, an input of an external input device (for example, a remote control or a mouse), a touch input generated by direct interaction between the user and the screen of the electronic device, or an input of interaction between the user and a physical button, or a shortcut operation such as a back cover-related gesture.

The listening state of the virtual image includes the first feature object (for example, the foregoing ring) and the second feature object (for example, the foregoing sphere). The first feature object is displayed in the dominant form.

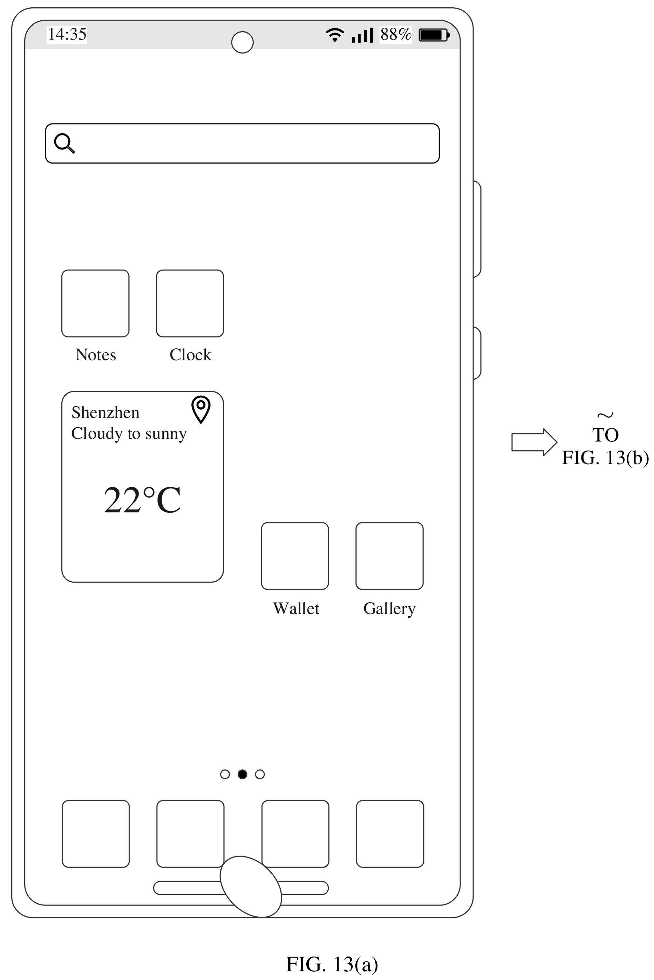

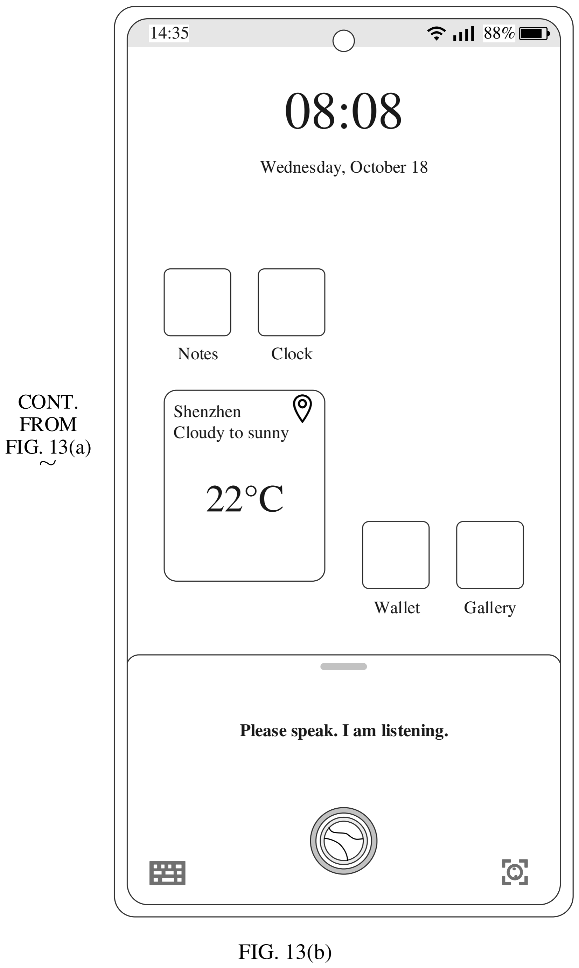

Specifically, the digital assistant can be woken up by tapping the gesture prompt line on the screen-on interface, so that the digital assistant enters the listening state. Refer to FIG. 13(a) and FIG. 13(b). FIG. 13(a) and FIG. 13(b) are a diagram in which a digital assistant is switched from a to-be-woken-up state to a listening state according to an embodiment of this application. As shown in FIG. 13(a), a user interacts with a gesture prompt line of the digital assistant by using a gesture such as tap, double tap, or touch and hold, to trigger wake-up of the digital assistant. As shown in FIG. 13(b), after the digital assistant is woken up, the digital assistant is displayed on a current interface in the listening state.

In some scenarios, specific content may be displayed on an interface of an electronic device, and it may be difficult for the interface to have more valid space to display the digital assistant. In this case, the virtual image of the digital assistant may be merged with the specific content on the interface.

For example, displaying the virtual image in the first form on the first interface may specifically include: displaying the virtual image at a preset position on the first interface; or overlay displaying the virtual image on a target content element in the first interface, where the target content element is a content element of a preset type. In other words, the virtual image overlays the target content element, so that the target content element is no longer displayed on the first interface. In this way, the virtual image is overlay displayed on the target content element, to avoid a case in which an extra interface for displaying the virtual image is added to the original interface to block excessive content on the original interface (for example, a floating window that is shown on the right side of FIG. 13 and that is used to display the virtual image of the digital assistant blocks a part of content at the bottom of the screen), thereby improving fusion between the digital assistant and the interface.

The target content element is, for example, a control or an icon, in a preset type, predefined by a system. For example, the control or the icon in the preset type may be space or an icon whose shape has a circular shape feature.

Optionally, when the virtual image overlay displayed on the target content element in the first interface, a gesture event interface of the target content element may be copied to the virtual image, so that a gesture-corresponding function of the target content element can be implemented by making a gesture on the virtual image. In other words, even if the virtual image overlays the target content element, the virtual image inherits an original function of the target content element. In this way, when a specific gesture (for example, a tap) is made on the virtual image, a function corresponding to the gesture of the target content element can still be implemented.

For example, when the first interface is a camera interface, the target content element is a shutter control in the camera interface. The virtual image is overlay displayed on the shutter control in the camera interface. A photo or a video can still be shot by tapping the virtual image.

In other words, after the virtual image of the digital assistant overlay displayed on the target content element, when a display region of the virtual image of the digital assistant receives a gesture input for the original target content element, the gesture may be used to implement a function of the original control. When the display region of the virtual image receives the gesture input, a function of the original content element is implemented. A mapping relationship between a gesture and a function of the target content element may be associated with the digital assistant. In this way, a corresponding function is triggered after the digital assistant receives the gesture input. For example, the target content element is a control. Generally, during interaction with the control, whether coordinates corresponding to the display region are touched is used as a trigger to the control, to generate a corresponding instruction. Therefore, when the digital assistant integrates an original function of the control, a trigger interface of a touch control instruction needs to be synchronized to the digital assistant. In this way, when a region in which the digital assistant is located is touched, a corresponding touch control instruction is generated, and an original function of the control can be implemented.

Alternatively, provided that a display region corresponding to a control is touched by using a preset gesture, a function corresponding to the control is executed based on a gesture type. In this case, whether another layer is displayed above the control is not limited. In addition, to implement a function of the digital assistant, a gesture corresponding to the digital assistant needs to be recognized, and then a function corresponding to the gesture is triggered.

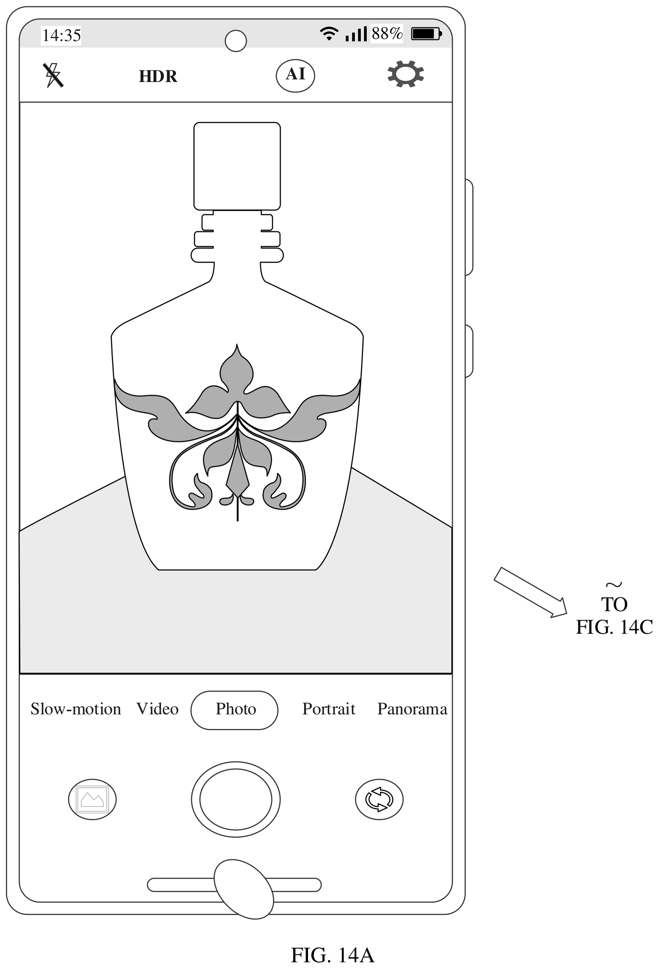

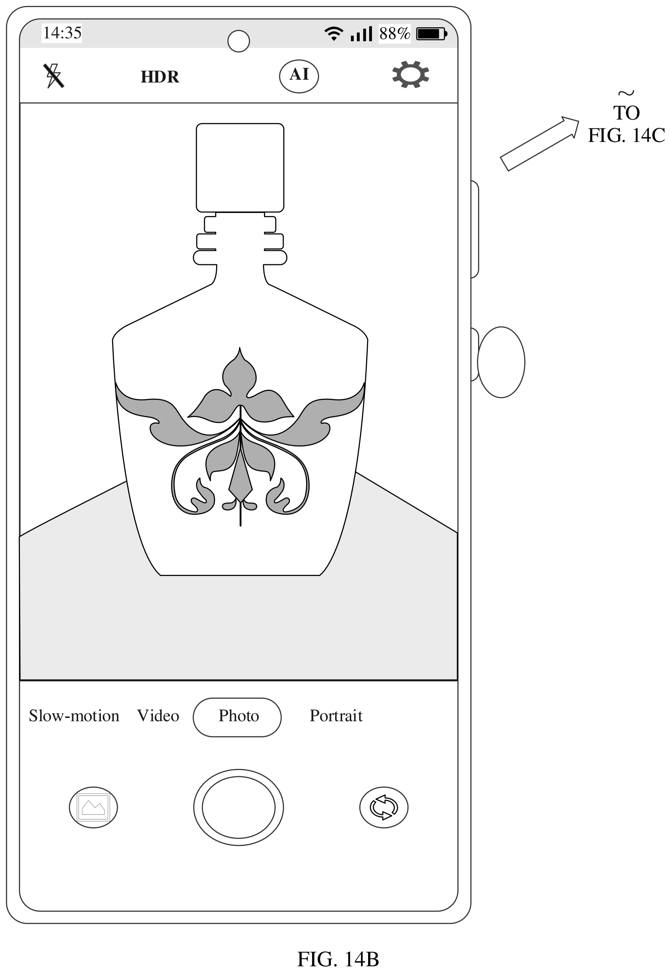

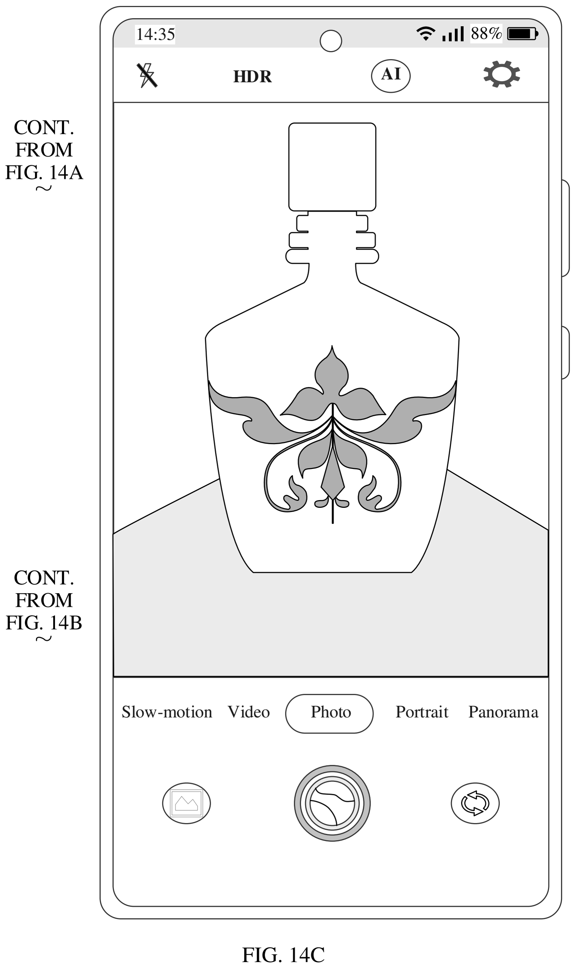

Refer to FIG. 14A, FIG. 14B, and FIG. 14C. FIG. 14A, FIG. 14B, and FIG. 14C are a diagram in which a virtual image overlays a camera shutter control according to an embodiment of this application. As shown in FIG. 14A, FIG. 14B, and FIG. 14C, in an initial state, the digital assistant is not woken up, and is displayed as a navigation prompt line in a to-be-woken-up state on an interface. When a user interacts with the digital assistant (that is, the navigation prompt line) in the to-be-woken-up state, for example, touches and holds the navigation prompt line or presses and holds a power button, the digital assistant is woken up. In this case, the digital assistant is in a listening state. In this case, when the digital assistant in the listening state is displayed, a system first checks a control type in a current interface. Because a camera shutter control in the current interface is a control in a preset type, the digital assistant and the camera shutter control are displayed in a fusion manner. After display in the fusion manner, the digital assistant is overlay displayed in the listening state at a position of the original camera shutter control.

In addition, in another initial state, the digital assistant is not displayed in any state on the current interface. After the digital assistant is invoked in a manner of touching and holding a control (such as the power button) or in a voice manner, the digital assistant may also be overlay displayed on a control or an icon in a preset type in the current interface.

After the virtual image of the digital assistant overlays the original camera shutter control, shooting can also be triggered by tapping the display region (that is, a display region of the original camera shutter control) of the virtual image of the digital assistant. This may be implemented by transferring an instruction to a camera application by using the digital assistant to control shooting, or may be directly implemented by recognizing a gesture by a camera application.

In some cases, the navigation prompt line is globally persistently displayed in the system. Therefore, when the digital assistant is in the to-be-woken-up state, it may also be understood that the virtual image hides the sphere and the ring is deformed and then fused with the navigation prompt line, so that the navigation prompt line has a navigation prompt line function and is also used as a persistent state of the virtual image of the digital assistant.

In addition, when there are a plurality of controls or icons that can be used for coverage display in the interface, the digital assistant may be switched between different controls or icons. In addition, the digital assistant may be switched, according to a display time sequence, from being fused with a control in a first displayed interface to being fused with a control or an icon in a latest interface.

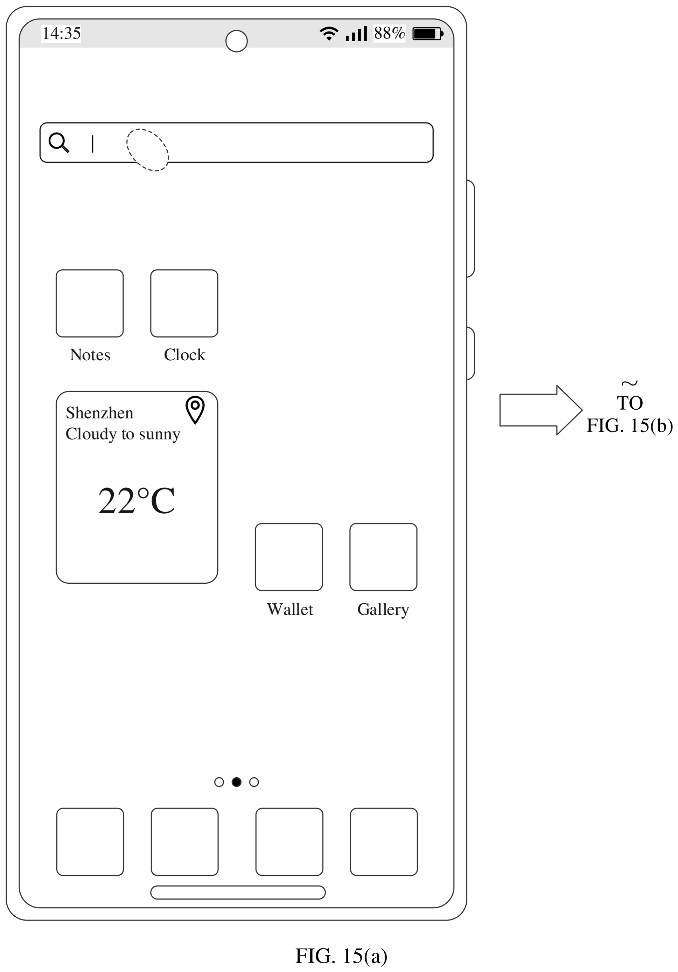

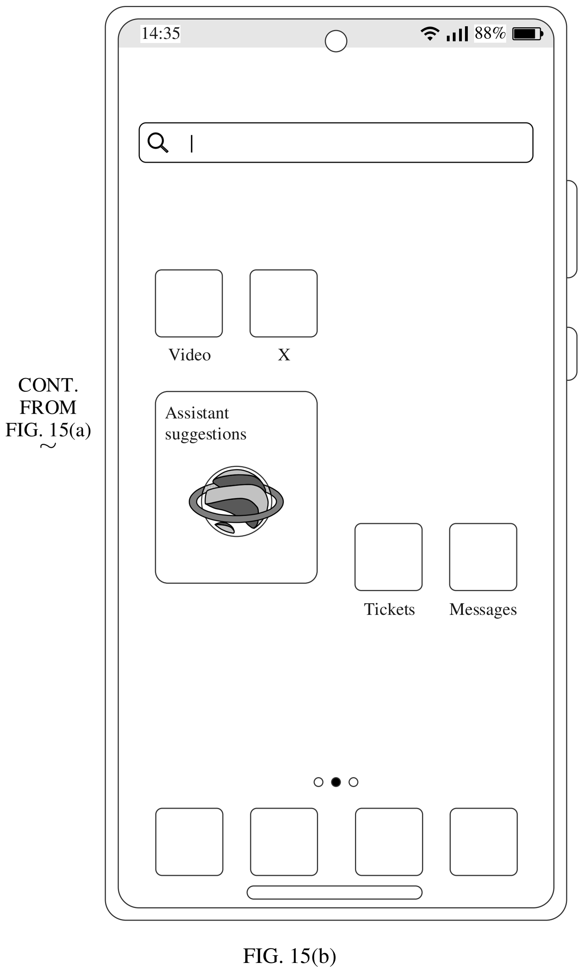

Refer to FIG. 15(a) and FIG. 15(b). FIG. 15(a) and FIG. 15(b) are a diagram in which a virtual image overlays an assistant suggestion component according to an embodiment of this application. As shown in FIG. 15(a), a digital assistant is displayed in a to-be-woken-up state. In this state, the digital assistant is fused with a navigation prompt line, and a deformed ring overlaps the navigation prompt line. As shown in FIG. 15(b), during switching to another home screen, the home screen includes an assistant suggestion widget, and an icon of a virtual image is displayed in the assistant suggestion widget. In this case, the digital assistant may move from the navigation prompt line to a virtual icon in the assistant suggestion widget. In addition, when the navigation prompt line is globally persistent, a solution shown in FIG. 15(b) is used; and when the navigation prompt line is merely the deformed ring, after the digital assistant moves from the navigation prompt line to the virtual icon in the assistant suggestion widget, the navigation prompt line is no longer displayed.

The foregoing describes the to-be-woken-up state and the listening state of the virtual image in detail. The following continues to describe the task execution state of the virtual image.

Optionally, the virtual image of the digital assistant further has the task execution state, and the task execution state includes the first feature object. The first feature object in the task execution state correspondingly generates at least one change of a shape change and a position change corresponding to at least one process interface in a process in which the digital assistant executes an automated task.

Specifically, when the digital assistant executes the automated task, a series of changes occur on a display interface of the electronic device. For example, when the digital assistant executes an automated task of calling a specific contact, the electronic device first opens a contacts interface, selects the specific contact in the contacts interface, and then goes to a phone interface of calling the specific contact. In the process interface in the process in which the digital assistant executes the automated task, the digital assistant is actually always in the task execution state, and the first feature object of the digital assistant in the task execution state may have various changes, to present, to the user, an automated process in which the digital assistant executes the task. Therefore, the automated process in which the digital assistant executes the task is more intuitive and clearer, and the user can observe whether an error occurs in the process in which the digital assistant executes the automated task.

In a possible example, the first feature object is displayed in a form of a geometric array, and a display position of the geometric array is adaptive to a target control in the process interface. The geometric array goes to a next process interface by simulating a tap event of a target control. In other words, in the process of executing the automated task, the digital assistant can simulate, by using the first feature object as the geometric array, an operation of tapping a control in an interface by the user, to visualize an entire process in which the digital assistant simulates execution performed by the user on the automated task.

In brief, if a specific application needs to be opened to execute an automated task, in an automation step of opening the application, an application icon on a desktop needs to be tapped, and the application icon is an execution target of the step. When the application is opened, a dot matrix of a deformed ring may be displayed on the application icon.

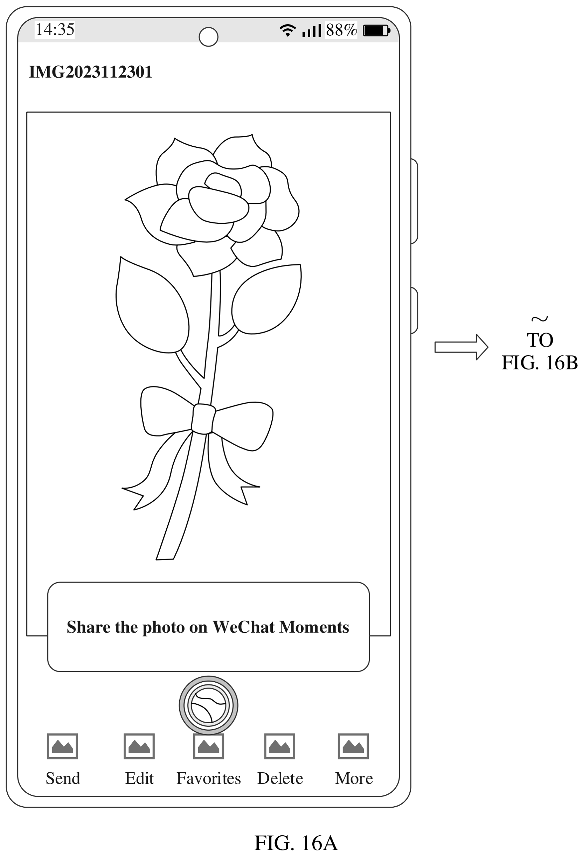

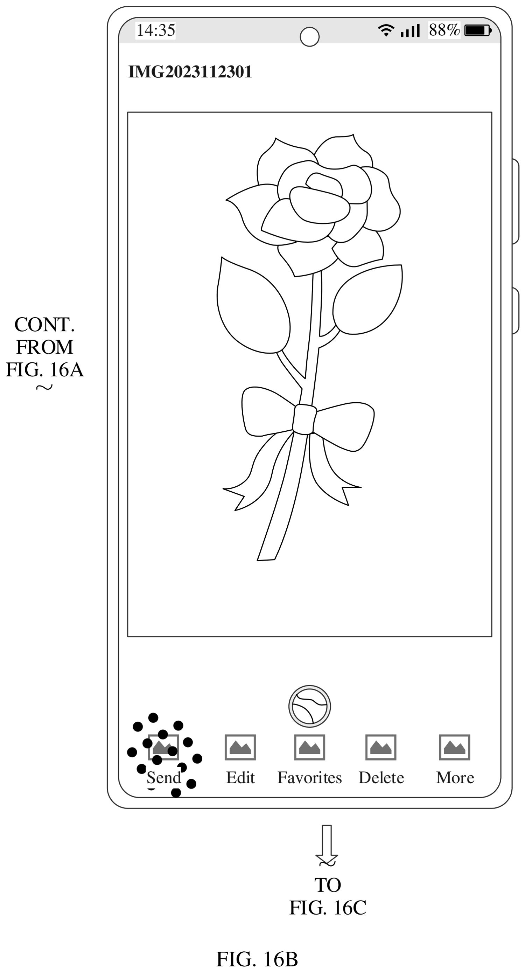

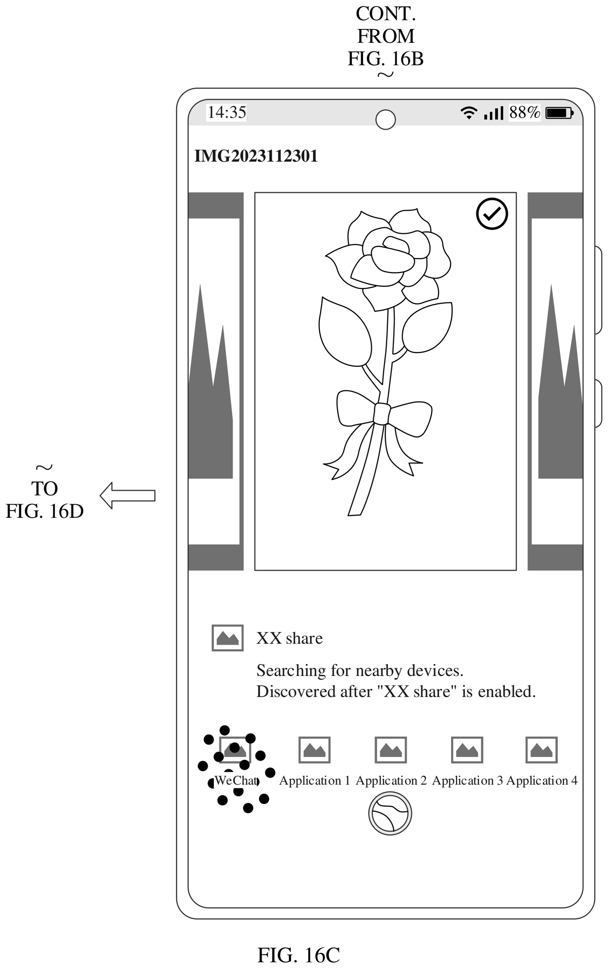

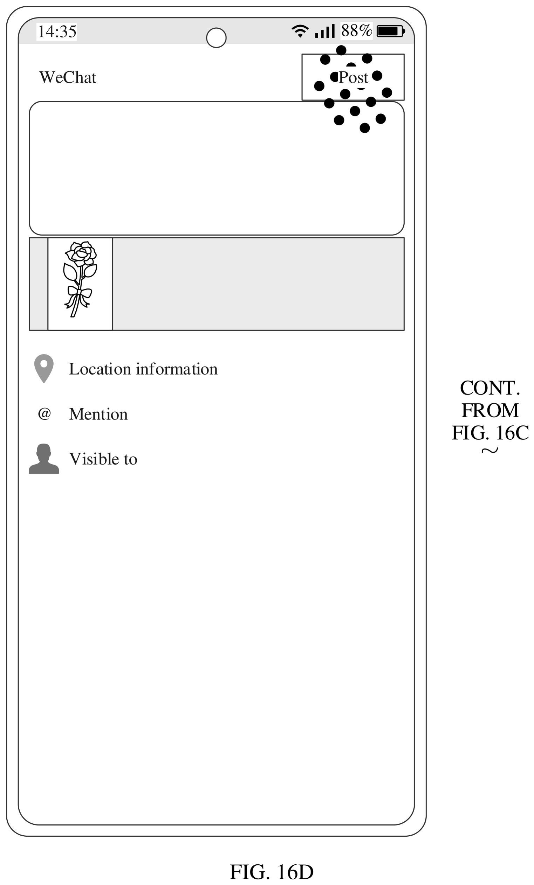

For example, refer to FIG. 16A, FIG. 16B, FIG. 16C, and FIG. 16D. FIG. 16A, FIG. 16B, FIG. 16C, and FIG. 16D are a diagram of a process in which a digital assistant executes an automated task according to an embodiment of this application. As shown in FIG. 16A, FIG. 16B, FIG. 16C, and FIG. 16D, first, the digital assistant receives a voice instruction of a user: "Share the photo on WeChat Moments". Then, the digital assistant displays a dot matrix on a "Send" control in a current interface, to simulate an operation of tapping the "Send" control by the user. Afterward, an interface changes in response to an operation performed by the digital assistant for simulating a process of tapping the "Send" control by the user, and the current interface changes to displaying applications to which the photo can be sent. These applications include the "WeChat" application. In the changed interface, a dot matrix is displayed on an icon of the "WeChat" application, to simulate an operation of tapping the icon of the "WeChat" application by the user. Finally, the interface changes again and changes to an interface of editing the photo that needs to be posted on Moments of the "WeChat" application. In this case, the dot matrix is displayed on a "Post" control, to simulate an operation of tapping the "Post" control by the user.

Optionally, when the first form is the listening state, and the second form is the task execution state, both the listening state and the task execution state include the first feature object, and the first feature object in the listening state and the first feature object in the task execution state have different forms.

Specifically, in the task execution state, the form of the first feature object includes: the geometric array on an interface, an outer frame of a dialog card of the digital assistant, an outer frame of an input box when input is performed by invoking the digital assistant, or an outer frame of a task result page. In other words, in different scenarios, the first feature object may be presented in different forms, to better fit content displayed on a current interface.

Optionally, the first feature object has different form changes corresponding to task progresses of an automated task. In other words, in the process in which the digital assistant executes the automated task, when execution proceeds to different task progresses, the first feature object may change to different forms, so that the form of the first feature object always closely fits the current interface.

For example, corresponding to the process of executing the automated task, in the task execution state, the form change of the first feature object includes the following processes: Initially, the first feature object is displayed in the dominant form of the ring at an initial position relative to the second feature object, where the initial position is the same as or different from a position of the first feature object in the listening state; then, the first feature object is detached from the second feature object, and is scaled up and deformed as the outer frame of the dialog card of the digital assistant; afterward, the first feature object changes from the outer frame of the dialog card to a geometric array in a dialog bubble of the dialog card; and finally, the virtual image is displayed in the listening state after execution of the automated task is completed.

In conclusion, in the task execution state, for the first feature object whose dominant form is the ring, the ring is detached from the sphere. After a form change, the changed feature state is displayed on the task execution interface. The task execution interface indicates an execution result interface or an interface on which the digital assistant transfers a task instruction to a local application for execution through parsing the task instruction after receiving the task instruction. Therefore, the task execution interface may be a part or all of an interface of executing an application.

The form change of the ring includes that the ring concentric to the image object and the sphere disappears, and is converted into a geometric array (for example, a dot matrix) of the task execution interface on the screen or an outer frame that surrounds the task execution interface. In addition, a process of converting the ring into the geometric array or the outer frame may be accompanied by an animation. For example, the ring is decomposed into several points, and then is laid out on the task execution interface to form the dot matrix. The ring is deformed and elongated, converted into a frame, and enlarged into the outer frame of the task execution interface.

The following uses several application scenarios of the digital assistant as an example to describe a process in which a form change occurs on the digital assistant in the task execution state.

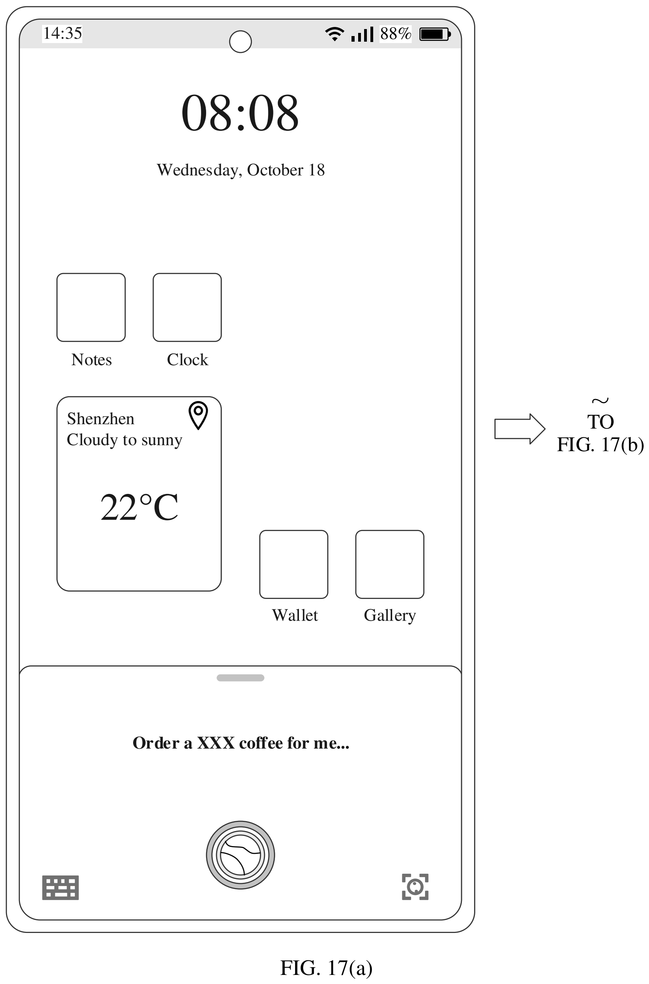

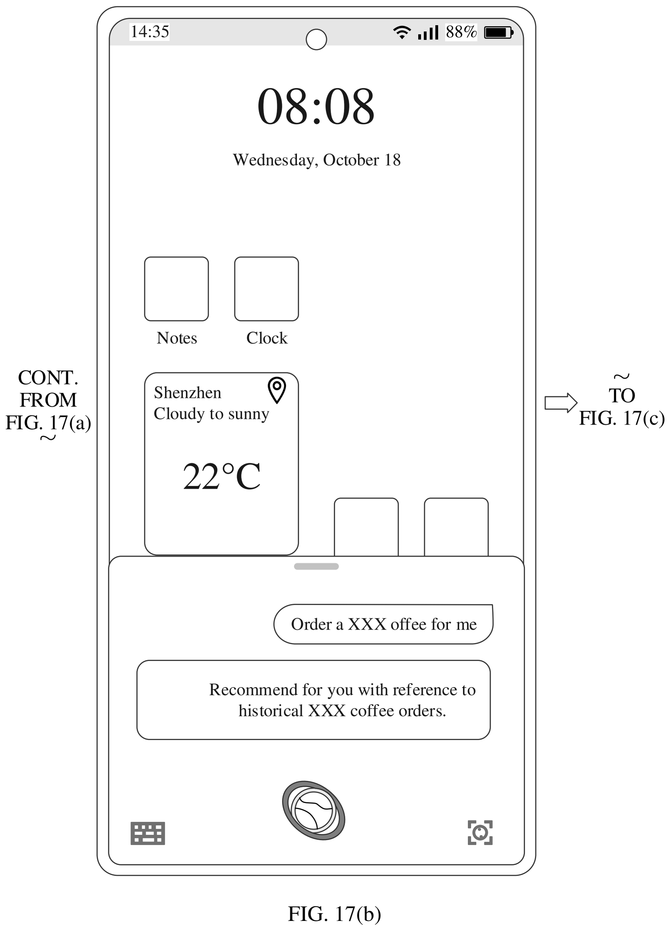

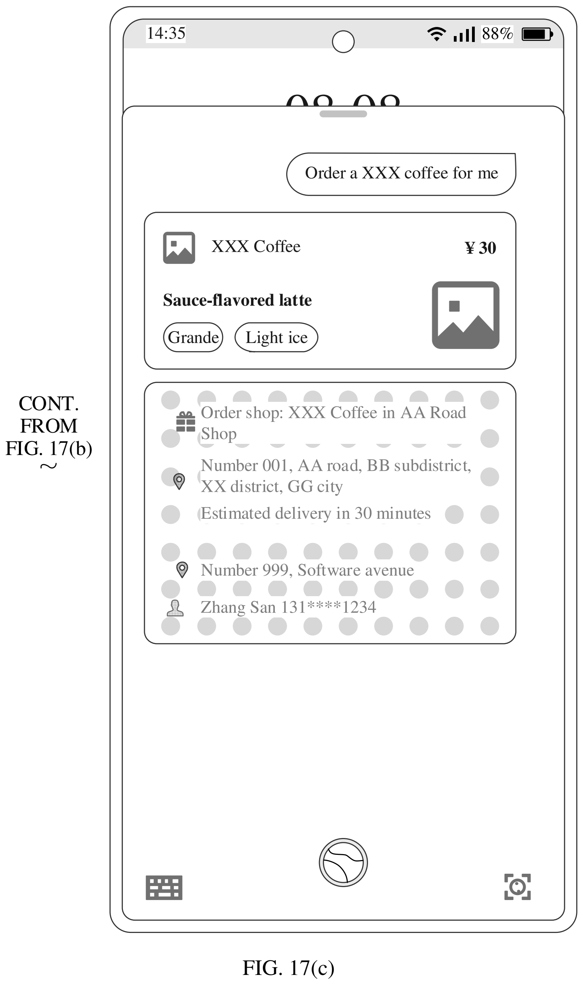

Refer to FIG. 17(a), FIG. 17(b), and FIG. 17(c). FIG. 17(a), FIG. 17(b), and FIG. 17(c) are a diagram of converting a ring of a digital assistant into a dot matrix to be laid out on a task execution interface according to an embodiment of this application. As shown in FIG. 17(a), FIG. 17(b), and FIG. 17(c), FIG. 17(a) corresponds to a listening state of the digital assistant. In this case, a voice instruction input by a user is "Order a XXX coffee for me...".

FIG. 17(b) corresponds to a thinking state of the digital assistant (the thinking state is a dynamic image, a ring keeps rotating according to a specific law, and FIG. 17(b) is a specific instantaneous form). Specifically, the thinking state corresponds to a task parsing process executed by the digital assistant. In this case, the task parsing process of the digital assistant: "Recommend for you with reference to historical XXX coffee orders of" is displayed on an interface on which the user interacts with the digital assistant.

After the task parsing process is completed, a task execution phase is executed, and the digital assistant is in the task execution state. This corresponds to FIG. 17(c). In FIG. 17(c), a ring object of an icon of the digital assistant at the bottom disappears, and a task card (that is, a dialog bubble presented in a form of a card) obtained by executing a task is displayed at the top. At the same time, the dot matrix is displayed on the task card, and the dot matrix is converted from the original ring of the digital assistant.

It may be understood that, to avoid interference to the task execution interface, the dot matrix may disappear after being displayed for a period of time. For two task cards in FIG. 17(c), a dot matrix above an upper task card disappears, and an instantaneous state in a process in which a dot matrix disappears is displayed on a lower task card (both the dot matrix and interface content are displayed in a semi-transparent mode). The dot matrix disappears when a card interface is fully displayed. In other words, for the task execution interface in FIG. 17(c), a display process is as follows: only the dot matrix is displayed → the dot matrix gradually disappears → the interface content is gradually displayed (both the dot matrix and the interface exist) → only the interface content is displayed.

In another application scenario, when the digital assistant is invoked to perform voice-to-text input, the task execution interface may be an input box or a pop-up card interface. These cards may be components or subprograms provided by a locally installed application.

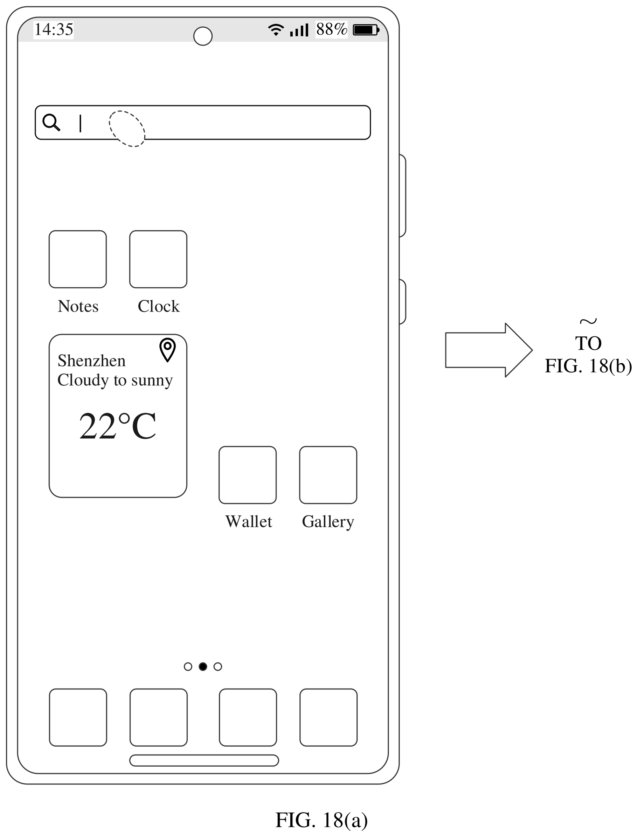

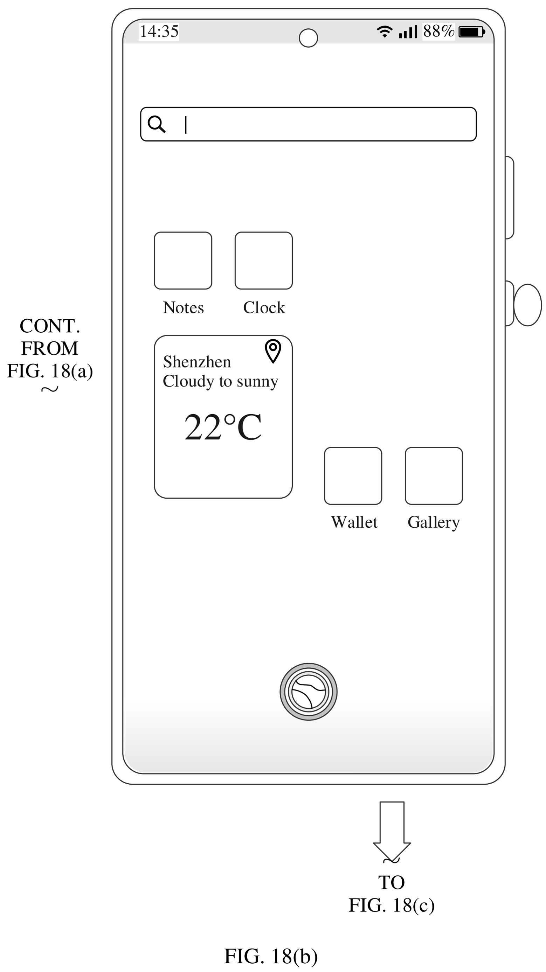

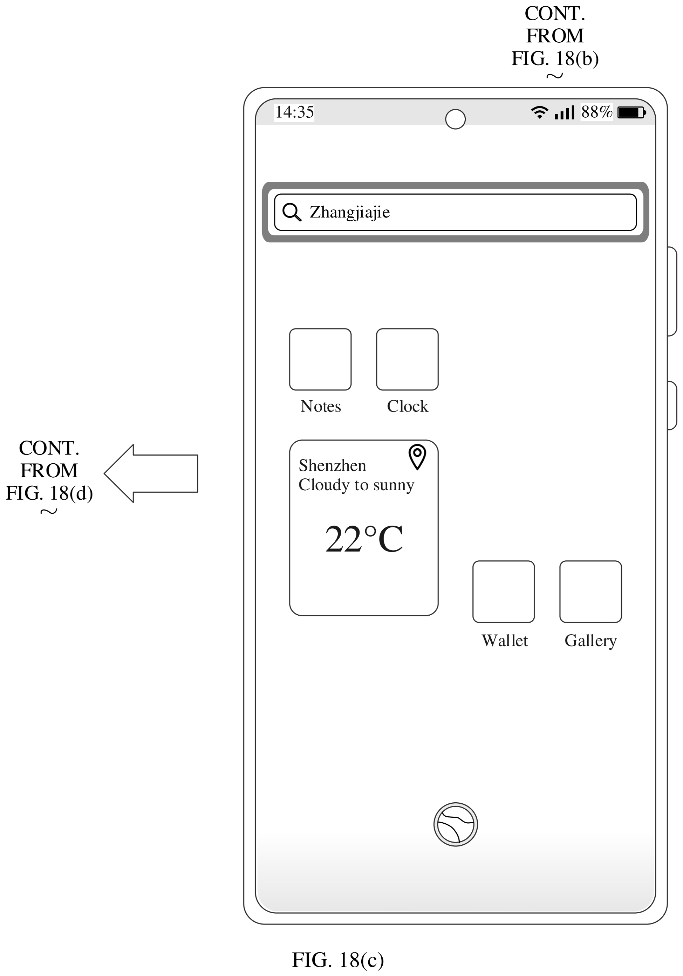

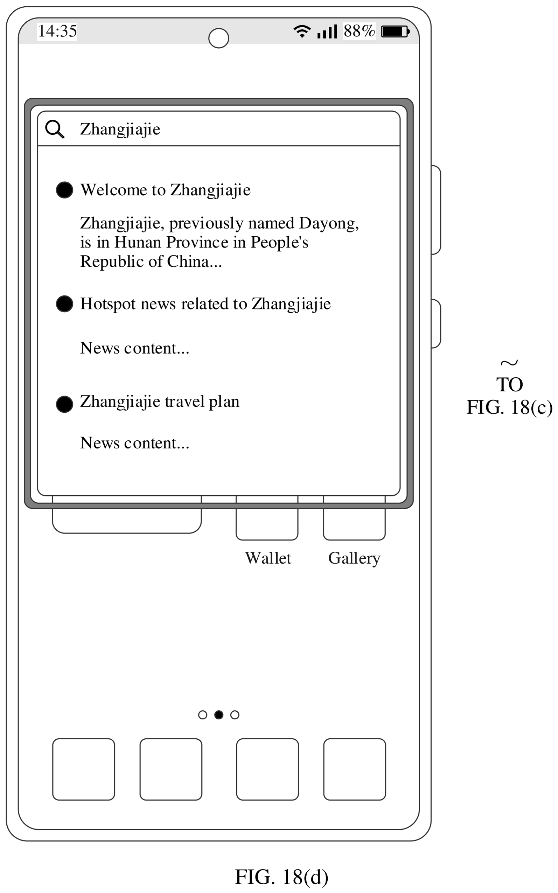

Refer to FIG. 18(a), FIG. 18(b), FIG. 18(c), and FIG. 18(d). FIG. 18(a), FIG. 18(b), FIG. 18(c), and FIG. 18(d) are a diagram of performing text input on a desktop by using a digital assistant according to an embodiment of this application. As shown in FIG. 18(a), a user taps a search widget on a desktop, and the search widget enters an editing mode. As shown in FIG. 18(b), the digital assistant is enabled by pressing and holding a power button. In this case, the digital assistant is in a listening state, and the digital assistant invokes a microphone to obtain a voice input of the user. As shown in FIG. 18(c), the digital assistant receives the voice input, converts the voice into a text, and fills the text into an input box. In this case, a form of the digital assistant is a task execution state; and a ring disappears from an outer side of a sphere and is transferred to an outer side of a search box after being scaled up or deformed, to form an outer frame that surrounds the search box. As shown in FIG. 18(d), after the input is completed, the search widget is expanded into a search card, and the outer frame converted from the ring may be expanded to surround the search card. Certainly, the outer frame converted from the ring may also disappear after the search card is presented, or disappear after the outer frame is reserved for a preset time.

When the deformed object after the ring is deformed disappears, or within a preset time after the deformed object disappears, the ring in an initial state (not deformed) may be displayed outside the sphere.

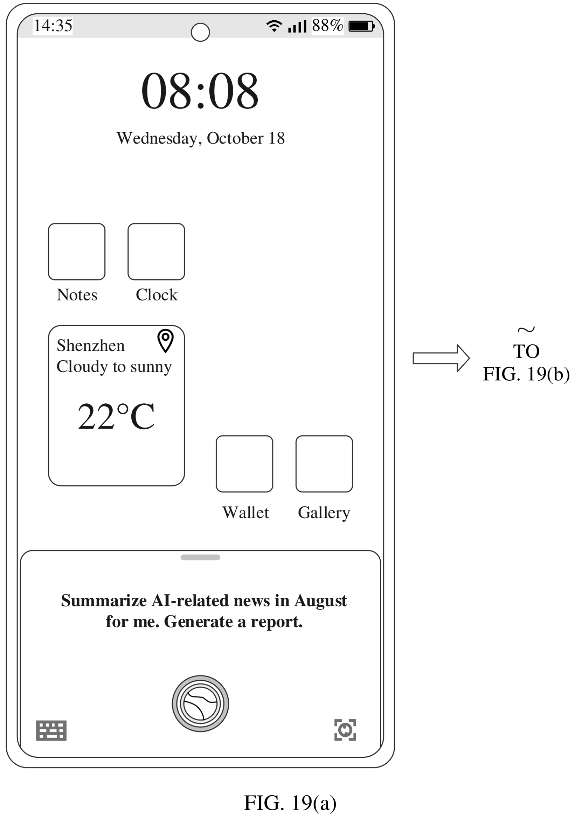

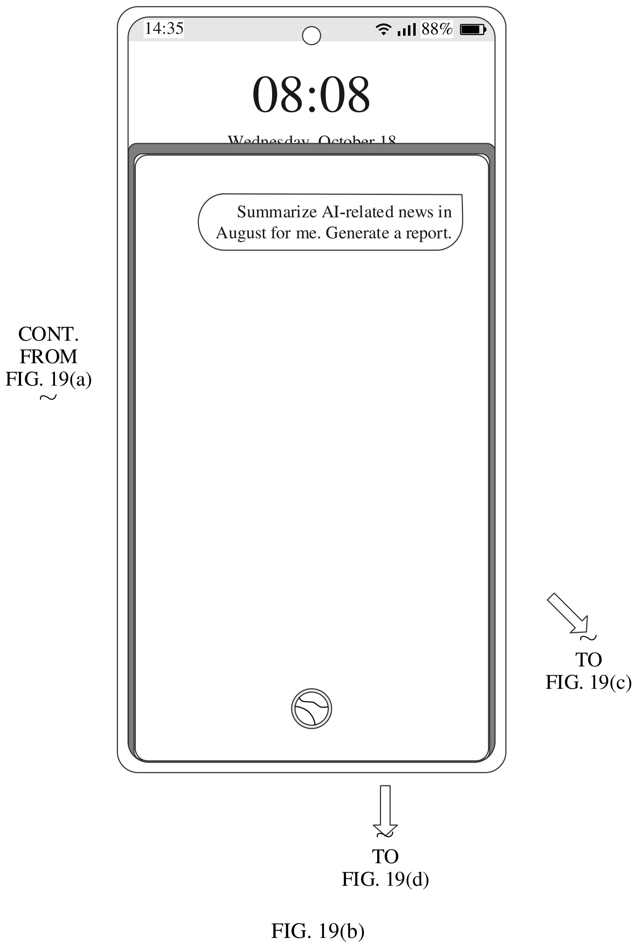

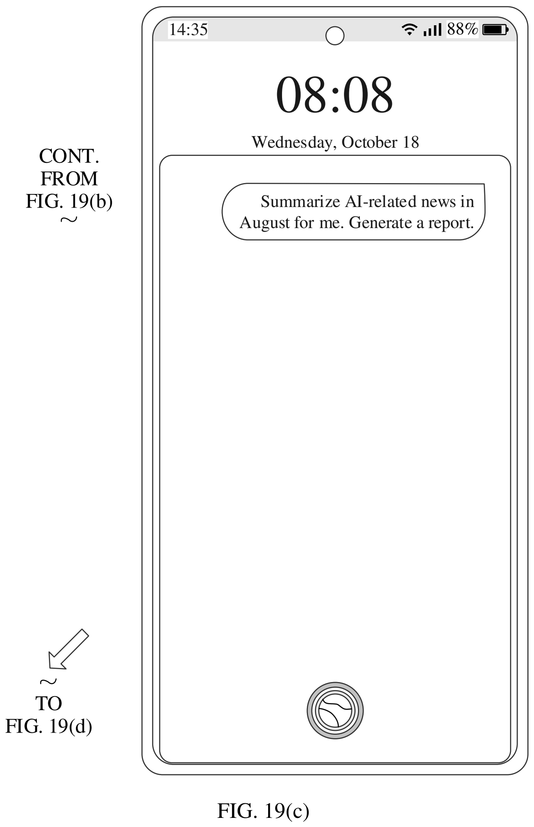

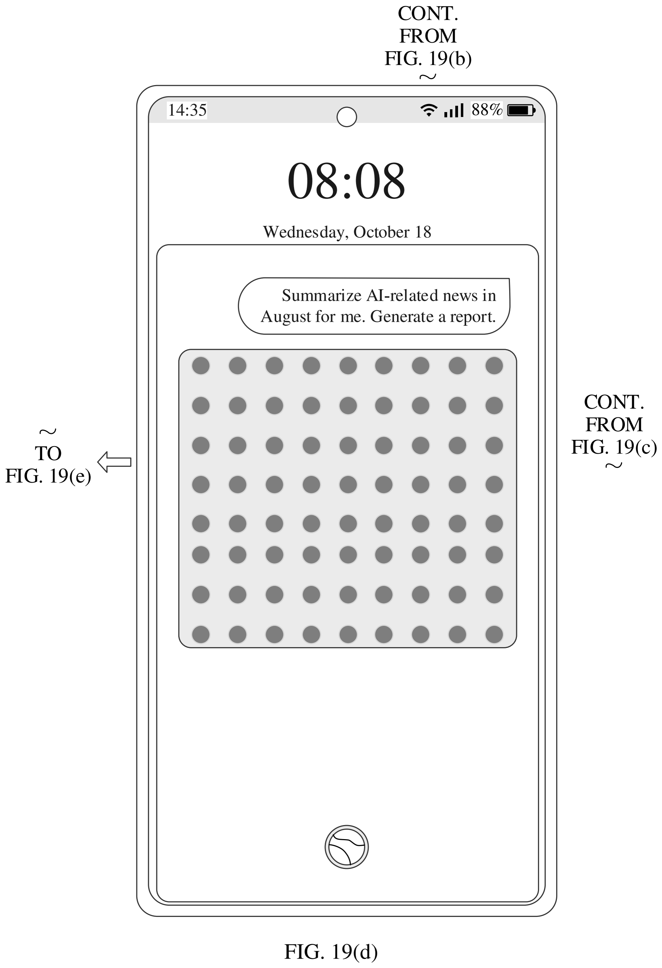

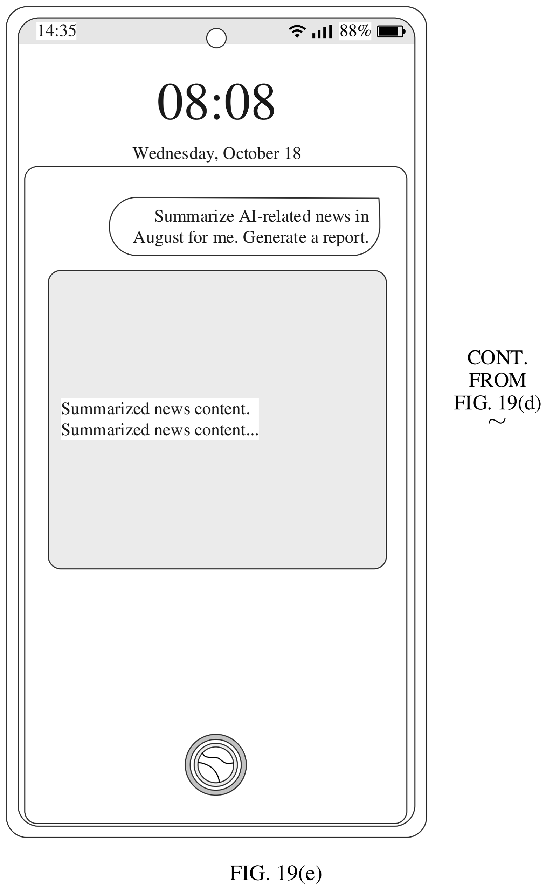

For example, refer to FIG. 19(a), FIG. 19(b), FIG. 19(c), FIG. 19(d), and FIG. 19(e). FIG. 19(a), FIG. 19(b), FIG. 19(c), FIG. 19(d), and FIG. 19(e) are a diagram in which a ring of a digital assistant is deformed and is restored to an original state according to an embodiment of this application. As shown in FIG. 19(a), after the digital assistant is initially invoked, the digital assistant is displayed in a listening state, and a ring on the digital assistant is displayed outside a sphere.

As shown in FIG. 19(b), after a user completes input, the digital assistant is displayed in a task execution state after a thinking state (not shown in FIG. 19(b)). In an initial phase of the task execution state, the ring of the digital assistant is deformed outward, overlaps a border position of a dialog card of the digital assistant, and is displayed on a border or outside a border or is displayed on an upper layer of a border. Visually, the ring of the digital assistant becomes an outer frame of the dialog card.

As shown in FIG. 19(c), when the card is no longer enlarged, the ring disappears from the outer frame of the card, and is displayed in an initial size of a ring object outside the sphere again.

As shown in FIG. 19(d), when a result is presented by using a dialog bubble, the ring on the digital assistant is converted into a dot matrix to be displayed on the dialog bubble. It may be understood that an intermediate state shown in FIG. 19(c) may be omitted, and a state change of the ring may be that the outer frame of the card shown in FIG. 19(b) may be directly converted to obtain the dot matrix shown in FIG. 19(d).

As shown in FIG. 19(e), a result of the dialog card is fully displayed, the dot matrix disappears, and the ring is displayed in the initial size of the ring object outside the sphere again.

In still another application scenario, when the digital assistant is invoked to perform smart recognition or another automated task, the task execution interface is an interface of an application that is currently being operated. For smart recognition, a smart recognition result is usually generated. The smart recognition result is one or more executable objects (for example, smart human removal/smart object removal during album edition) obtained through recognition. In this case, the task execution interface may be a region in which the executable object is located. In a process of performing smart recognition, the entire interface is recognized in real time, and finally the executable object is recognized. Corresponding to a task execution process, the dot matrix corresponding to the ring may also be adaptive to the task execution process. In other words, in a recognition process phase, the dot matrix is laid out in fullscreen on the entire interface. After the executable object is recognized, the dot matrix is displayed only in the region of the executable object.

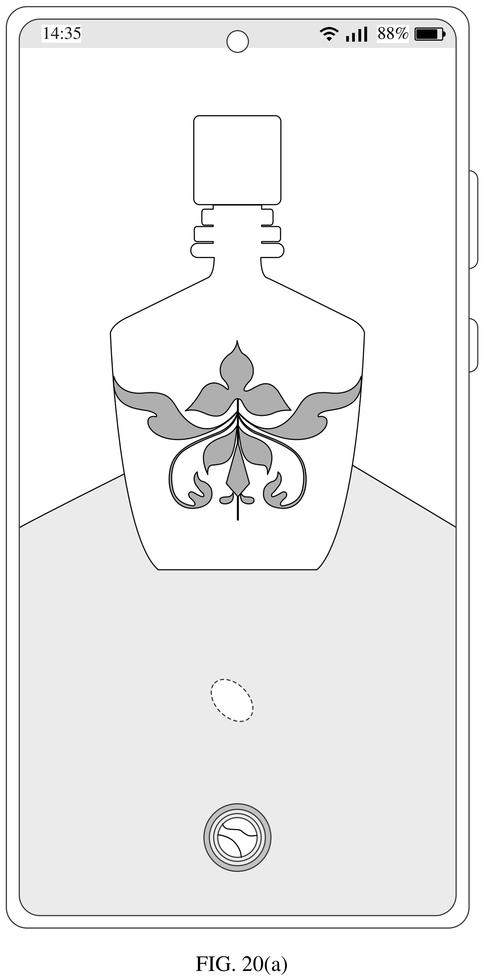

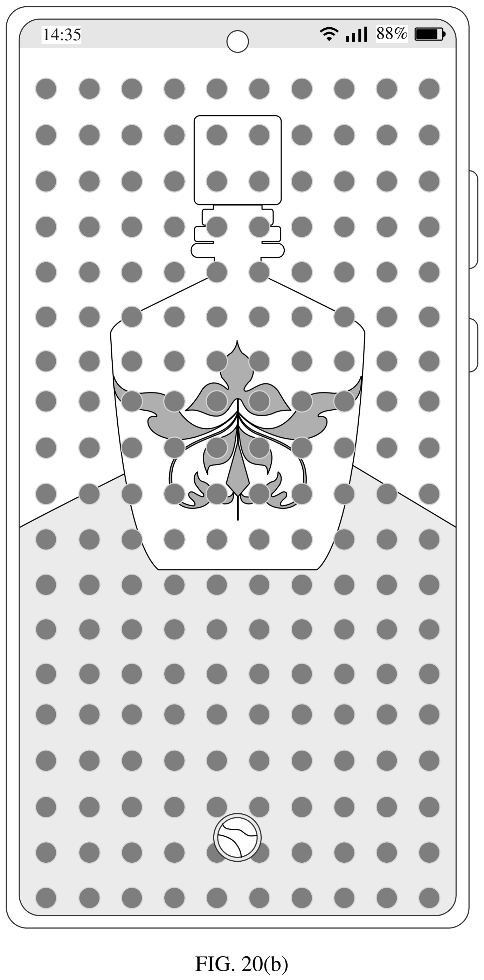

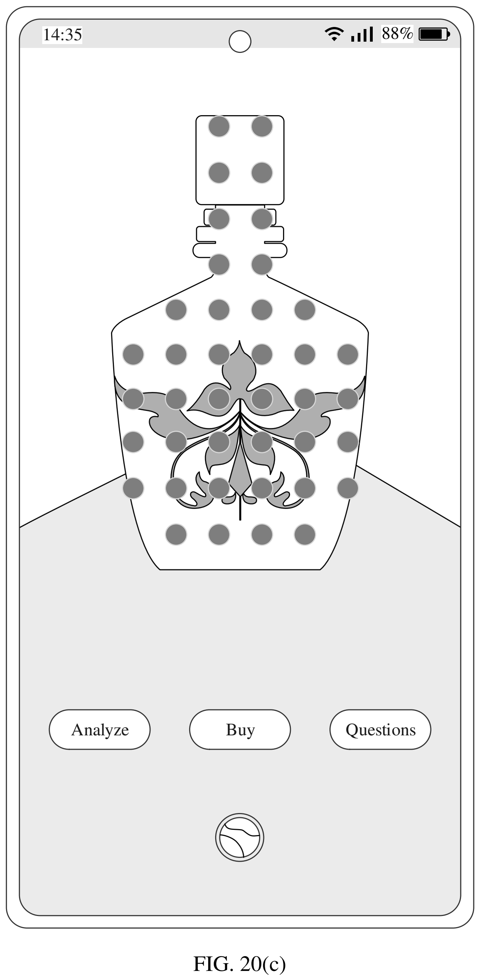

For example, refer to FIG. 20(a), FIG. 20(b), and FIG. 20(c). FIG. 20(a), FIG. 20(b), and FIG. 20(c) are a diagram of a change of a form of a digital assistant in a smart recognition scenario according to an embodiment of this application. In FIG. 20(a), FIG. 20(b), and FIG. 20(c), a user invokes the digital assistant to use a smart recognition function. As shown in FIG. 20(a), an image is displayed on an interface of a smartphone, and the image is displayed in full screen. Then, a user touches and holds any position on the interface, to trigger a smart recognition function. In addition, an icon of the digital assistant is displayed on the current interface. When the digital assistant just appears, the digital assistant is in a listening state. As shown in FIG. 20(b), the digital assistant performs smart recognition on the image. In this case, a ring of the digital assistant disappears outside the sphere, and is converted into a dot matrix to be display on the interface. The dot matrix is laid out in fullscreen on a screen. As shown in FIG. 20(c), after image recognition is completed, at least one executable object is recognized, and the dot matrix is displayed only in a display region in which the executable object is located. In this case, dots in the dot matrix may not be a regular dot matrix, but may dynamically move in the display region in which the executable object is located. In this way, the dot matrix changes to a plurality of irregular discrete points.

It should be noted that, in FIG. 19(a), FIG. 19(b), FIG. 19(c), FIG. 19(d), FIG. 19(e), FIG. 20(a), FIG. 20(b), and FIG. 20(c), to fully present switching between forms of the digital assistant, the switching is shown according to specified steps. Actually, when the electronic device is operated, the electronic device supports invoking, by using a shortcut operation, the digital assistant to execute a preset function, for example, the smart recognition function in FIG. 20(a), FIG. 20(b), and FIG. 20(c). In this case, the digital assistant may directly display a corresponding state, for example, directly display the task execution state, or display the listening state at an invoking instant and then is immediately switched to the task execution state.

The smart recognition function is used as an example. It is assumed that a system defines pressing and holding the power button as a shortcut operation for smart recognition. When the user presses and holds the power button, an operating system displays the icon of the digital assistant on the interface, and directly displays the task execution state, that is, directly goes to the display interface in FIG. 20(b) after the power button is pressed and held.

In some designs, in the task execution state, the image object and the sphere of the digital assistant may not be displayed on the interface, but only a changed form of the ring object is displayed. In FIG. 20(c), only the dot matrix may be displayed, and the sphere and the image object below are not displayed.

The foregoing describes a change process of the digital assistant in the task execution state. In actual application, when the digital assistant initially appears on the interface, the digital assistant may also appear according to a specific law.

Optionally, the first interface is a lock screen interface or any screen interface after unlocking, and the first form displayed on the first interface is the listening state. In this case, displaying the virtual image in the first form on the first interface specifically includes that in an initial phase, only the first feature object is displayed and the second feature object is not displayed, and the first feature object is initially displayed as the geometric array and is laid out to the entire screen; and then, the first feature object changes from the geometric array to the dominant form after shape change, and the second feature object is displayed.

In other words, when the digital assistant is woken up, the digital assistant first appears in the form of the geometric array (for example, a dot matrix), and is gradually laid out to the entire screen. Then, the digital assistant is gradually switched from the geometric array to the dominant form (that is, the ring) of the first feature object, and the second feature object (that is, the sphere) is displayed, to implement a process of waking up the digital assistant in a form of an animation, thereby increasing intuitiveness of an interaction process. This helps the user identify the current working state of the digital assistant.

The geometric array may be, for example, a dot matrix, that is, an array formed by a plurality of regularly arranged dots. The geometric array may alternatively be an array formed through regular arrangement in another geometric figure (for example, a polygon such as a triangle or a rectangle).

Optionally, initially displaying the first feature object by using the geometric array may specifically include: first determining an initial display position of the geometric array; and then, displaying the geometric figure of a part of the array at the initial display position, and gradually laying out the geometric figure in fullscreen on the screen. For example, a part of the dot matrix is first displayed from the initial display position, and then the dot matrix gradually spreads to be laid out to the entire screen.

Optionally, the initial display position of the geometric array is determined based on a user input. The user input is an input used to wake up the digital assistant. The initial display position may be specifically near the user input that triggers wake-up of the digital assistant. For example, when the user input is pressing and holding a power button of a smartphone, the initial display position of the geometric array may be a screen position near the power button.

In addition, when the user input is not detected, the initial position is a default position, and the default position is a region for displaying the virtual image, for example, a preset region at the bottom of the screen.

In this solution, the initial display position of the geometric array is determined based on the user input, so that a display process of the digital assistant can better match the user input, thereby enhancing intuitiveness of interaction between the user and the digital assistant and improving user experience.

In conclusion, in a process of invoking the digital assistant, the dot matrix may appear according to a preset law. When a user operation (touching or pressing a physical button) is detected, the initial display position of the digital assistant is determined based on the user operation, and the dot matrix spreads from the initial display position to be displayed on a full image. When no user operation is detected, a display position of the virtual image of the digital assistant is used as the initial display position, and the dot matrix spreads from the initial position to be displayed on a full image.

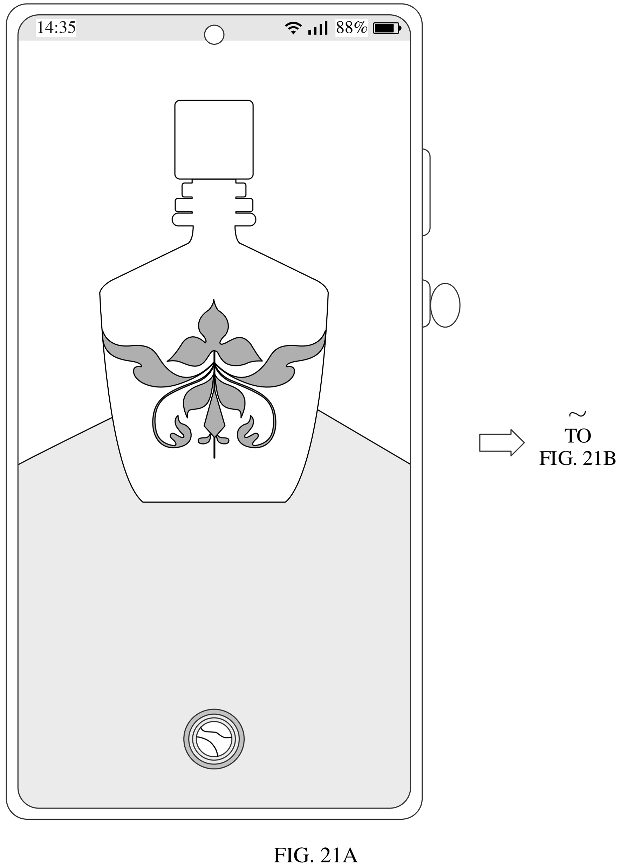

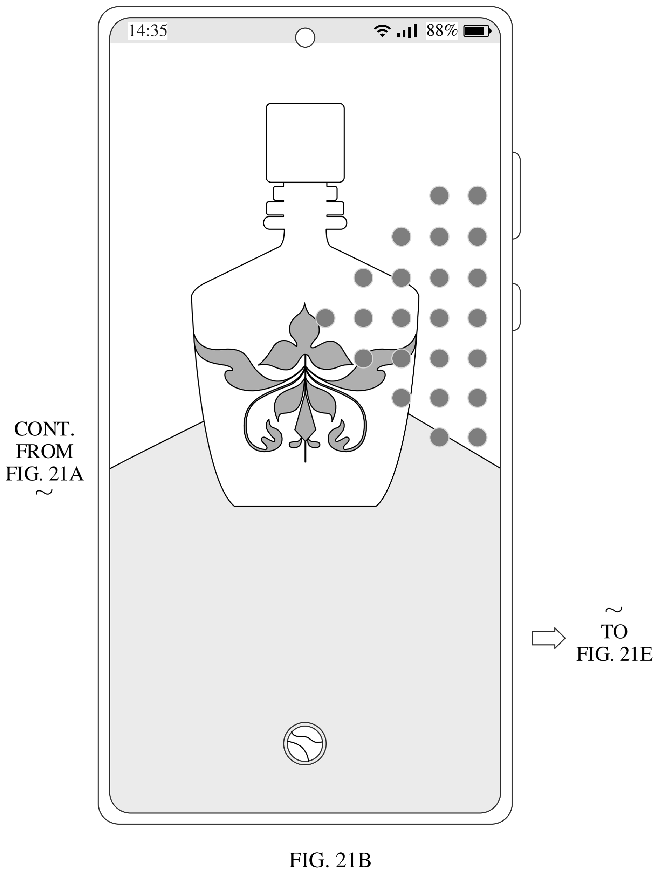

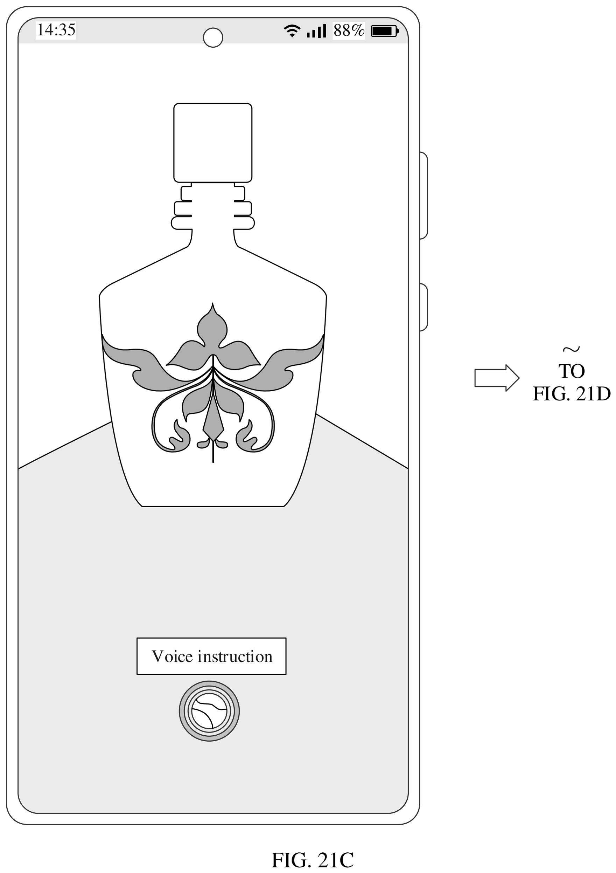

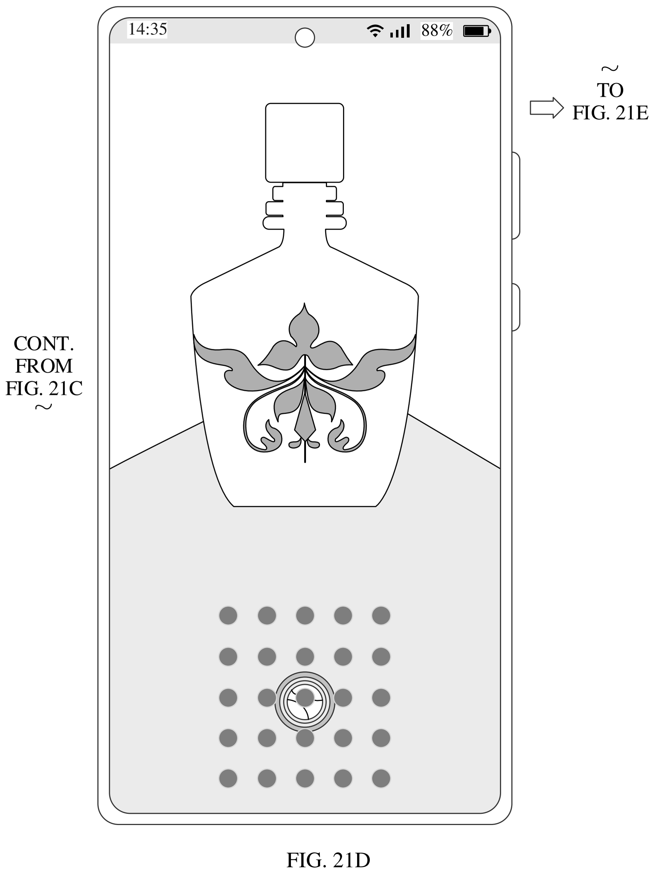

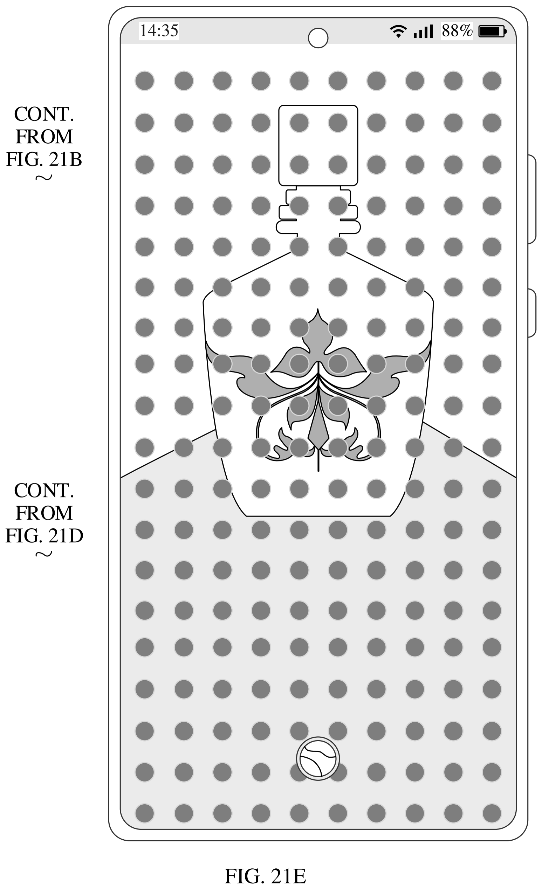

For example, refer to FIG. 21A, FIG. 21B, FIG. 21C, FIG. 21D, and FIG. 21E. FIG. 21A, FIG. 21B, FIG. 21C, FIG. 21D, and FIG. 21E are a diagram of appearance of a digital assistant in a smart recognition scenario according to an embodiment of this application. As shown in FIG. 21A, FIG. 21B, FIG. 21C, FIG. 21D, and FIG. 21E, when a user wakes up the digital assistant by pressing and holding a power button on a right side of a smartphone, the digital assistant is first displayed in a dot matrix form on a screen near the power button in an initial phase, and then gradually spreads to the entire screen. When the user wakes up the digital assistant by touching and holding the digital assistant at the bottom of the screen, the digital assistant is first displayed in the dot matrix form in the initial phase near a region in which a virtual image of the digital assistant at the bottom is located, and then gradually spreads to the entire screen.

In some scenarios, a form change of the digital assistant may also be related to scenario information, so that some information in a current use scenario is relevantly represented by using the virtual image of the digital assistant.

Optionally, in some embodiments, an electronic device may obtain the scenario information, determine a target form of a first feature object of the digital assistant based on the scenario information, and display the first feature object in the target form. In other words, the target form is related to the scenario information. When the electronic device obtains specific scenario information, the electronic device may display the first feature object in a specific form.

The scenario information may include external environment information and system event information. The external environment information is a signal that is obtained by using a sensor and that is used to indicate an external environment, and may be specifically obtained by using a sensor or a network on the electronic device, for example, external environment information such as temperature, humidity, and weather. The system event information is an event that is obtained from the system of the electronic device and that occurs within a preset time, for example, event information such as music being played, an alarm clock notification in a preset time, or a file being searched for.

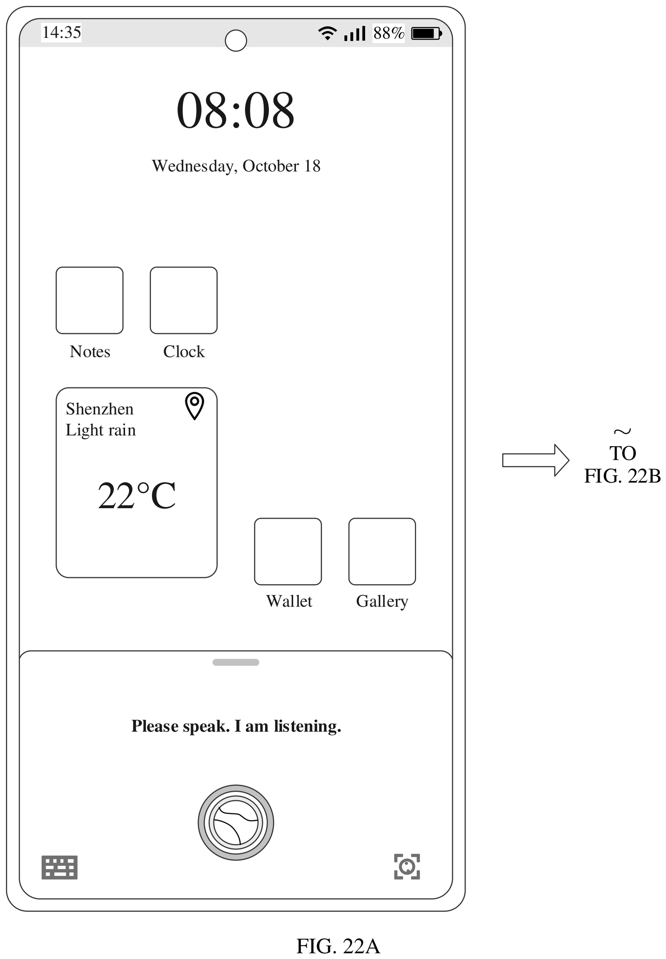

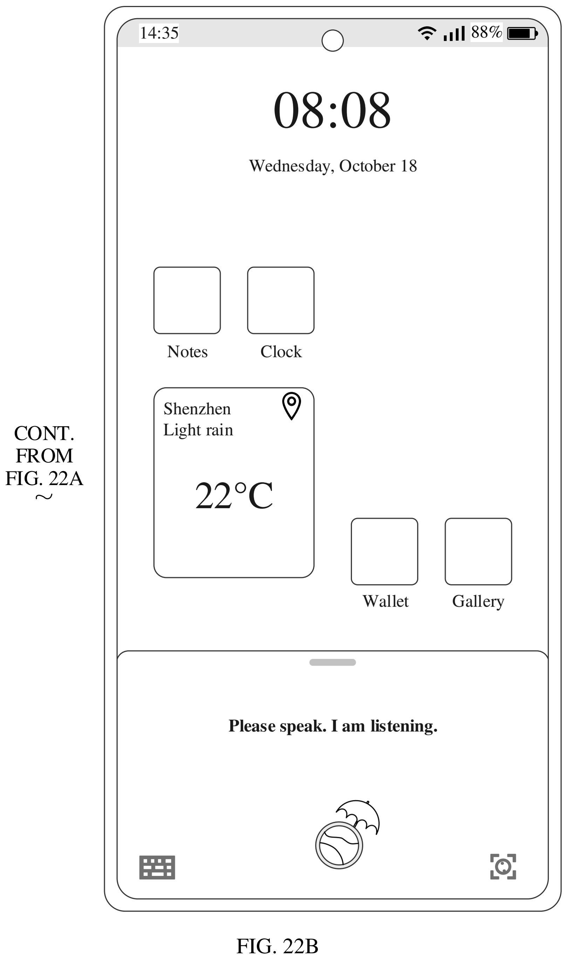

When the first feature object is a ring, the ring may be deformed based on the external environment information. For example, in rainy days, the ring is deformed to an umbrella shape. Refer to FIG. 22A and FIG. 22B. FIG. 22A and FIG. 22B are a diagram in which a digital assistant is deformed based on scenario information according to an embodiment of this application. As shown in FIG. 22A and FIG. 22B, after the digital assistant is invoked, the digital assistant is always displayed in a listening state if the digital assistant remains on a current interface. After the digital assistant remains in a specific state (for example, the listening state in FIG. 22A and FIG. 22B) for a preset time, a ring of the digital assistant is deformed based on scenario information. In FIG. 2, current weather is light rain, and therefore the ring is changed to an umbrella shape.

In addition, the ring may also be deformed based on system event information. For example, when music is played during screen-off, the ring of the digital assistant is deformed to a headset shape; or when there is an alarm clock notification in a preset time, the ring shape of the digital assistant is deformed to a physical alarm clock shape. For another example, when a user invokes the digital assistant to search for a file, the ring of the digital assistant is deformed to a magnifying glass.

Certainly, the first feature object may be deformed. In addition, another feature object of the digital assistant may also be deformed based on the scenario information. Details are not described herein.

Optionally, when a virtual image has a to-be-woken-up state, the to-be-woken-up state at least includes the first feature object, and the current first feature object is displayed as the long bar. An electronic device displays a second feature object in response to the electronic device detecting that a focus of a line of sight of a human eye falls in a region in which a screen is located.

In other words, in some scenarios, when the digital assistant is in the to-be-woken-up state, only one long bar is displayed. When the digital assistant detects that the line of sight of the user falls on the screen, it may be considered that the user has an interaction tendency, and therefore the second feature object is displayed, to indicate that the digital assistant detects that the user has the interaction tendency and is waiting for interaction, thereby making human-machine interaction more naturally.

Optionally, in response to detecting a human voice, the second feature object may move relative to the first feature object in a direction of approaching a sound source of the human voice. Specifically, when the second feature object just appears, a position is relatively fixed, for example, located right above or right below the first feature object. When the electronic device detects the human voice, the electronic device may move the second feature object based on an orientation of the human voice, so that the second feature object moves with the human voice, thereby making interaction more naturally.

Specifically, on another common terminal, that is, a vehicle-mounted terminal, a digital assistant, as a main interaction manner, may also reside on a display (for example, a central display screen) of an in-vehicle infotainment, and perform visual interaction with a user by using at least one deformation of a ring or a sphere, to keep attention of the user on the digital assistant and enhance a sense of a dialog.

In a vehicle-mounted terminal environment, scenario information mainly includes human information, system information, and external environment information.

The human information may come from at least one of a driver and a passenger, including a head orientation, an expression in eyes, a gesture, a posture, and a human voice; and may be distinguished as information of a driver or a front passenger (it is usually difficult for a rear seat to interact with the central display screen).

The system information may be a manually or adaptively adjusted change of a vehicle control function, for example, a driving mode, an air conditioner setting, vehicle window demisting, and a seat belt status change, and some vehicle condition change information, for example, a vehicle speed change, a driving direction change, a vehicle bump, and a special traffic state. In addition, the system information may further include details such as a type of a running application.

The external environment information is usually a change of weather, light, temperature, and the like.

Based on the scenario information, different deformation of the virtual form may be triggered for the virtual image in different states, for example, deformation of the ring or deformation of the sphere.

In addition, a difference between the vehicle-mounted terminal and a handheld terminal lies in that the central display screen basically does not have a screen-off state. Therefore, after being powered on, the digital assistant on the vehicle-mounted terminal is displayed in a to-be-woken-up state. In this way, in the to-be-woken-up state, the digital assistant has different deformation states based on different detected scenario conditions.

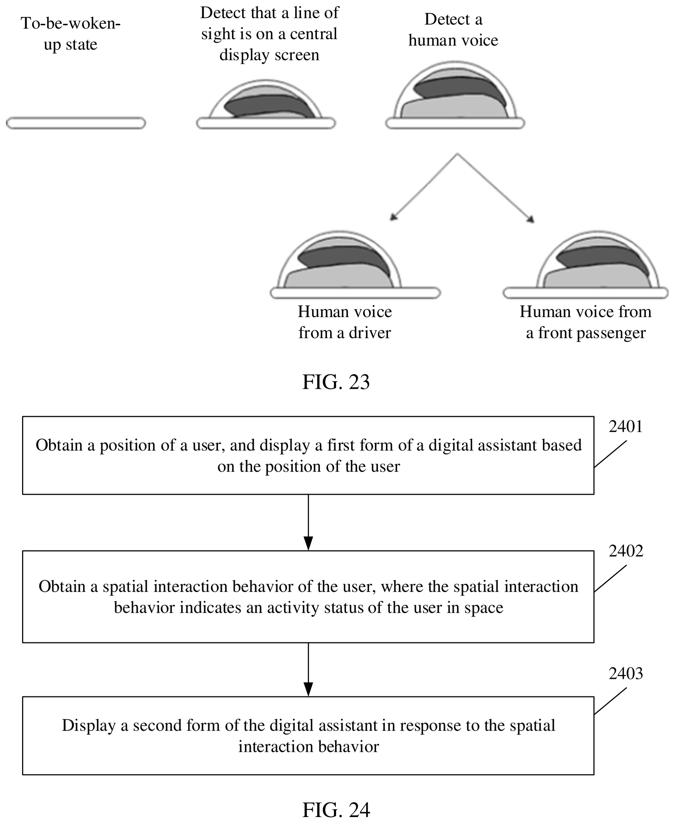

For example, refer to FIG. 23. FIG. 23 is a diagram of a change of a digital assistant on a vehicle-mounted terminal according to an embodiment of this application. In FIG. 23, an initial to-be-woken-up state of the digital assistant is displaying only a deformed ring. When it is detected that a line of sight of a driver or a front passenger is on a central display screen, a part of a sphere is displayed. If a human voice is further detected on this basis, a larger sphere area is displayed. For example, a hemisphere is displayed.

Further, corresponding to different human voices of the driver and the front passenger, the ring may be elongated, and the sphere is located on a side of a direction of a sound source of the human voice of the ring. In FIG. 23, when the human voice of the driver is detected, the hemisphere is located on a side that is of an elongated ring object and that is close to the driver. In other words, the hemisphere moves toward the driver. When the human voice of the front passenger is detected, the hemisphere is located on a side that is of an elongated ring object and that is close to the front passenger. In other words, the hemisphere moves toward the front passenger.

Optionally, when the electronic device is a smart vehicle, a digital assistant may be displayed on a screen of the electronic device based on enabling or alarming of an in-vehicle function, and a corresponding function or alarm information is indicated by using deformation or motion of a first feature object.

In other words, the digital assistant in an in-vehicle infotainment may be further used to prompt vehicle condition information. For example, when it is detected that the vehicle is in a bumpy road environment, the digital assistant in a woken-up state is displayed, and the sphere vibrates up and down on the screen on which the ring is located. Alternatively, the sphere and the ring vibrate up and down together, and vibration frequencies of the sphere and the ring may be the same or different. For another example, when it is detected that the vehicle enables a vehicle window demisting function, the digital assistant in the woken-up state is displayed, and the sphere is rendered in white. Then, the ring uses an x-axis as a fixed axis, and swings up and down in a z-axis direction. With the swinging, white transparency of rendering on the sphere becomes lower until the sphere becomes fully transparent and the ring stops swinging. For still another example, when it is detected that a seat belt valve is not locked or a locking progress is not enough (that is, a seat belt is not worn), the digital assistant in the woken-up state is displayed, and the ring object is inclined and displayed at a preset angle. The ring object is broken at the middle. Parts of the ring object become arcs. The arcs gradually contract to form the ring.

By using examples, the foregoing mainly describes a process in which the form of the digital assistant changes when the electronic device is the smartphone or the vehicle-mounted terminal. The following describes a process in which a form of a digital assistant changes when an electronic device is a smart television.

Refer to FIG. 24. FIG. 24 is a schematic flowchart of a method for displaying a digital assistant according to an embodiment of this application. As shown in FIG. 24, the method for displaying the digital assistant includes the following steps 2401 to 2403, and the method for displaying the digital assistant is applied to an electronic device configured with the digital assistant.

Step 2401: Obtain a position of a user, and display a first form of the digital assistant based on the position of the user.

In this embodiment, a sensor, for example, a distance sensor such as an infrared sensor, an ultrasonic sensor, or an optical distance sensor, may be deployed on an electronic device configured with the digital assistant. Therefore, the electronic device can detect and obtain the position of the user based on the deployed sensor. For example, when an infrared sensor is deployed on the electronic device, the electronic device transmits infrared light by using the infrared sensor and receives infrared light returned by a body of the user, to obtain a direction and a distance of the user relative to the electronic device through calculation, thereby determining the position of the user.

Optionally, the electronic device may also obtain the position of the user in another manner, for example, obtain the position of the user from another device. For example, when the electronic device is a smart television or a smart speaker in a smart home, the electronic device may communicate with another smart device (for example, a home camera, a robotic vacuum cleaner, or a smart router) over a network. In this way, after another smart device determines the position of the user by using a sensor or a positioning module of the another smart device, the electronic device can obtain the position of the user from the another smart device.

When the electronic device obtains the position of the user, the first form of the digital assistant may be displayed on a display of the electronic device based on the position of the user. In other words, the first form of the digital assistant displayed by the electronic device is related to the position of the user. In brief, a larger distance between the position of the user and the electronic device indicates a lower tendency of interaction between the user and the electronic device, and therefore, the electronic device can display a digital assistant form with a lower interaction intention degree; and a smaller distance between the position of the user and the electronic device indicates a higher tendency of interaction between the user and the electronic device, and therefore, the electronic device can display a digital assistant form with a higher interaction intention degree.

Step 2402: Obtain a spatial interaction behavior of the user, where the spatial interaction behavior indicates an activity status of the user in space.

After determining the position of the user and displaying the first form of the digital assistant, the electronic device may further capture the spatial interaction behavior of the user by using a sensor, that is, an activity status of the user in the space, to determine a further interaction tendency of the user.

For example, the spatial interaction behavior of the user may include but is not limited to any one of the following behaviors: approaching the electronic device, moving away from the electronic device, moving leftward, moving rightward, pointing a finger to the electronic device, pointing an arm to the electronic device, facing the electronic device, and making a preset gesture. In conclusion, the spatial interaction behavior of the user may indicate an interaction tendency between the user and the digital assistant of the electronic device. For example, when the spatial interaction behavior of the user is approaching the electronic device, it indicates that the user expects to perform further interaction with the digital assistant of the electronic device; or when the spatial interaction behavior of the user is moving away from the electronic device, it indicates that the user does not expect to perform further interaction with the digital assistant of the electronic device.

Step 2403: Display a second form of the digital assistant in response to the spatial interaction behavior.

In this embodiment, after obtaining the spatial interaction behavior of the user, the electronic device switches from the first form of the digital assistant to the second form of the digital assistant for display. The first form of the digital assistant and the second form of the digital assistant respectively indicate different states in an interaction process between the digital assistant and the user, so that the user identifies a current interaction state of the digital assistant and delivers a corresponding interaction instruction.

Optionally, the second form of the digital assistant displayed by the electronic device may be related only to the spatial interaction behavior. In other words, after obtaining the spatial interaction behavior of the user, regardless of a specific form of the currently displayed digital assistant, the electronic device determines, based on a pre-established mapping relationship between the spatial interaction behavior and a form of the digital assistant, a form (that is, the foregoing second form) corresponding to the digital assistant.

In some other embodiments, the second form of the digital assistant displayed by the electronic device may also be related to both the first form of the digital assistant displayed by the electronic device and the spatial interaction behavior. In other words, the electronic device actually determines, based on the currently displayed first form and the spatial interaction behavior of the user, the second form of the digital assistant that needs to be displayed. For example, the digital assistant may have a plurality of forms, and different forms correspond to different interaction intention degrees between the user and the electronic device that are determined by the electronic device. When the electronic device determines, based on the obtained spatial interaction behavior, that the interaction intention degree between the user and the electronic device is increased, the electronic device may determine, based on the currently displayed first form of the digital assistant, the second form whose interaction intention degree is higher than that of the first form, and display the second form. When the electronic device determines, based on the obtained spatial interaction behavior, that the interaction intention degree between the user and the electronic device is reduced, the electronic device may determine, based on the currently displayed first form of the digital assistant, another second form whose interaction intention degree is lower than that of the first form, and display the another second form.

Optionally, in some embodiments, the electronic device may divide a region near the electronic device into a plurality of regions based on a position of the electronic device, and positions of different regions relative to the electronic device are different. For example, the electronic device may be divided into three regions: a first region, a second region, and a third region, respectively. The electronic device is located in the first region. The second region is located outside the first region relative to the electronic device and surrounds the first region. The third region is located outside the second region relative to the electronic device and surrounds the second region. For example, the first region, the second region, and the third region may be regions obtained through division by using the electronic device as a circle center. A plane shape of the first region is a circle or an ellipse, a plane shape of the second region is a ring surrounding the first region, and a plane shape of the third region is a ring surrounding the second region. In this way, when the electronic device recognizes that the spatial interaction behavior of the user is moving between different regions, an interaction tendency between the user and the electronic device can be accurately determined, to adjust the form of the displayed digital assistant.

For example, it is assumed that the position that is of the user and that is obtained by the electronic device in step 2401 is in a first target region, and the spatial interaction behavior obtained by the electronic device in step 2402 is that the user moves from the first target region to a second target region, the electronic device switches the digital assistant from the first form to the second form. The first target region belongs to any one of the first region, the second region, and the third region, and the second target region may be a region adjacent to the first target region.

Optionally, in response to the user moving from the first target region to the second target region, the electronic device may display the second form of the digital assistant, where the second form is a form corresponding to the second target region. In other words, each region obtained through division by using the electronic device as a center corresponds to one form of the digital assistant. After the user moves from one region to another region, the form of the digital assistant is switched, so that a currently displayed form is a form corresponding to a region in which the user is located after the user moves.

Specifically, when the first form indicates that the digital assistant is in a state in which no task is being processed, and the first target region is located outside the second target region, the second form indicates that the digital assistant is in a state in which an instruction is to be received. Specifically, when the first target region is located outside the second target region, the user moves from the first region to the second region. This indicates that the user moves from a region farther from the electronic device to a region closer to the electronic device. In other words, the user approaches the electronic device. Therefore, the electronic device can recognize that the user has a further interaction tendency, and switch the form of the digital assistant, to show the user that the digital assistant is switched from the state in which no task is being processed to the state in which an instruction is to be received. The state in which no task is being processed may be a state in which the digital assistant has no task to be processed and falls asleep. The state in which an instruction is to be received may be a state in which the digital assistant has been woken up and is ready to receive an instruction at any time. The digital assistant's state in which an instruction is to be received is a state having a higher interaction intention degree than the state in which no task is to be processed.

Alternatively, when the first form indicates that the digital assistant is in the state in which an instruction is to be received, and the first target region is located outside the second target region, the second form indicates that the digital assistant is in an instruction receiving state. Similarly, when the first form indicates that the digital assistant is in the state in which an instruction is to be received, the user moves from the first target region to the second target region. This indicates that the user has a further interaction tendency. In this case, the form of the digital assistant is switched, to show the user that the digital assistant is switched from the state in which an instruction is to be received to the instruction receiving state. The instruction receiving state may be a state in which the digital assistant has received, by using corresponding hardware on the electronic device, an instruction delivered by the user. In other words, the hardware that receives the instruction has already been in a working state. For example, the digital assistant receives, by using a microphone on the electronic device, a voice instruction delivered by the user. The instruction receiving state of the digital assistant is a state having a higher interaction intention degree than the state in which an instruction is to be received.

Alternatively, when the first form indicates that the digital assistant is in the state in which an instruction is to be received, and the second target region is located outside the first target region, the second form indicates that the digital assistant is in the state in which no task is being processed. It may be understood that, when the second target region is located outside the first target region, the user moves from the first target region to the second target region. This indicates that the user is moving away from the electronic device. Therefore, the electronic device can recognize that the user does not have a further interaction tendency, and switch from the state in which an instruction is to be received to the state, with a lower interaction intention degree, in which no task is being processed.

In this solution, an interaction tendency of the user for the digital assistant is recognized by obtaining a motion status of the user between regions at different distances from the electronic device, to adjust the form of the digital assistant to well match a relationship between a social status and a distance of humans, thereby making the form of the digital assistant change more naturally.

Optionally, before switching the digital assistant from the first form to the second form, the electronic device may further obtain a spatial activity behavior of the user, where the spatial activity behavior indicates an activity status of the user in space. The spatial activity behavior is a behavior made by the user without an intention of interacting with the digital assistant. In other words, the spatial interaction behavior can indicate that the user does not have the intention of interacting with the digital assistant.

Then, in response to the spatial activity behavior, the electronic device displays an adjusted first form of the digital assistant, where the adjusted first form is obtained after at least one feature of the first form is adjusted, and the adjusted first form and the first form indicate a same state of the digital assistant in an interaction process with the user. In other words, when the user does not have an interaction intention, the spatial activity behavior made by the user changes a feature of the form of the digital assistant, but does not change the form of the digital assistant. This does not change an interaction status of the digital assistant.

For example, the adjusted feature in the first form may include but is not limited to the following features used to represent a feature object of the digital assistant: a posture of the feature object, a motion law of the feature object, a light effect of the feature object, a material of the feature object, a color of the feature object, and luminance of the feature object. For example, when the user walks in a specific region obtained through division instead of moves to another region, the feature object (for example, the ring object) of the digital assistant may rotate with the user. For another example, when the user points to different directions by using a finger, the feature object of the digital assistant may rotate or revolve with a position to which the finger of the user points. For another example, when the user gradually walks close to the display of the electronic device, the ring object of the digital assistant may rotate to generate a change of a pitch angle.

The foregoing describes a process of switching the form of the digital assistant based on the spatial interaction behavior of the user. The following describes specific forms of the digital assistant in detail.

For example, the first form and the second form of the digital assistant each include a plurality of feature objects, and a posture and/or a motion law of at least one feature object in the second form are/is different from that of the first form. In other words, different forms of the digital assistant are all formed by a plurality of same feature objects, and a difference between different forms lies in that a posture and/or a motion law of at least one feature object changes.

In conclusion, an image of the digital assistant is constructed by using the plurality of feature objects, and different feature objects can independently adjust postures and motion laws. In this way, different states of the digital assistant are indicated by adjusting a change of a feature object, to form a feedback manner that is of a unified style and that responds to a spatial interaction behavior input. This helps the user understand a feedback of the digital assistant.

In a possible implementation, the plurality of feature objects used to show the image of the digital assistant include a ring object, a sphere, and an image object. The image object is wrapped in the sphere. The ring object surrounds the sphere. In other words, in the image of the digital assistant, the image object, the sphere, and the ring object are sequentially arranged from inside to outside. In addition, the sphere may be transparent or transparent, so that the user can see, through the sphere, the image object wrapped in the sphere. The image object may be an object of any shape designed for the digital assistant, for example, an object of a shape similar to a human body shape or an object of an irregular shape.

In this solution, the image of the digital assistant is constructed based on the feature objects of the ring object, the sphere, and the image object, so that seamless and smooth conversion can be implemented when the form of the digital assistant is switched by adjusting a posture or a motion law of the feature object. In this way, a form change process of the digital assistant is more natural and complies with human cognition, and the user can learn of a current interaction status with the digital assistant.

For example, when the first form or the second form indicates that the digital assistant is in the state in which no task is being processed, the first form or the second form is that the plurality of feature objects move along a preset trajectory, and the sphere and the image object rotate in a moving process.

In brief, when the digital assistant is in the state in which no task is being processed, it indicates that the user has no interaction tendency for the digital assistant. Therefore, the form of the digital assistant can be represented as a form of moving according to a predetermined law without an interaction intention. In other words, the plurality of feature objects move along the preset trajectory, and the sphere and the image object rotate in the moving process.

For example, when the first form or the second form indicates that the digital assistant is in the state in which an instruction is to be received, the first form or the second form is that a part of a region in the ring object has a light effect and the part of the region faces a position of the user.

When the digital assistant is in the state in which an instruction is to be received, it indicates that the user already has a tendency to interact with the digital assistant, and the digital assistant is ready to receive an instruction of the user at any time. Therefore, the form of the digital assistant may be represented as paying attention to the user at any time (that is, the region with the light effect faces the position of the user) and waiting for the user to deliver an instruction.

For example, when the second form indicates that the digital assistant is in the instruction receiving state, the second form is that tops or bottoms of the plurality of feature objects face the user. In other words, when the digital assistant is in the instruction receiving state, it indicates that the digital assistant is receiving an instruction of the user. Therefore, the form of the digital assistant may be represented as a state in which the digital assistant is absorbedly receiving an instruction (that is, the tops or the bottoms of the plurality of feature objects face the user, to indicate listening to the instruction of the user).

In another possible implementation, the first form and the second form each are a form of a virtual human body, and a difference exists between different forms of the virtual human body in any one or more of the following features: an expression, an action, and a size of the virtual human body. In brief, the form of the digital assistant also includes a plurality of feature objects, and the plurality of feature objects may be divided based on human body parts. In other words, different feature objects correspond to different parts in the virtual human body. For example, the plurality of feature objects may be divided into a head feature object, an eye feature object, a mouth feature object, a left-hand feature object, and a right-hand feature object.

In this solution, the form of the digital assistant is set to the form of the virtual human body, so that a human-like form change can be implemented when the form of the digital assistant is switched in response to a spatial interaction input of the user. In this way, the form change of the digital assistant is more natural, and the user can learn of a current interaction status with the digital assistant.

For ease of understanding, with reference to a specific example, the following describes in detail an execution process of the method for displaying the digital assistant provided in embodiments of this application.

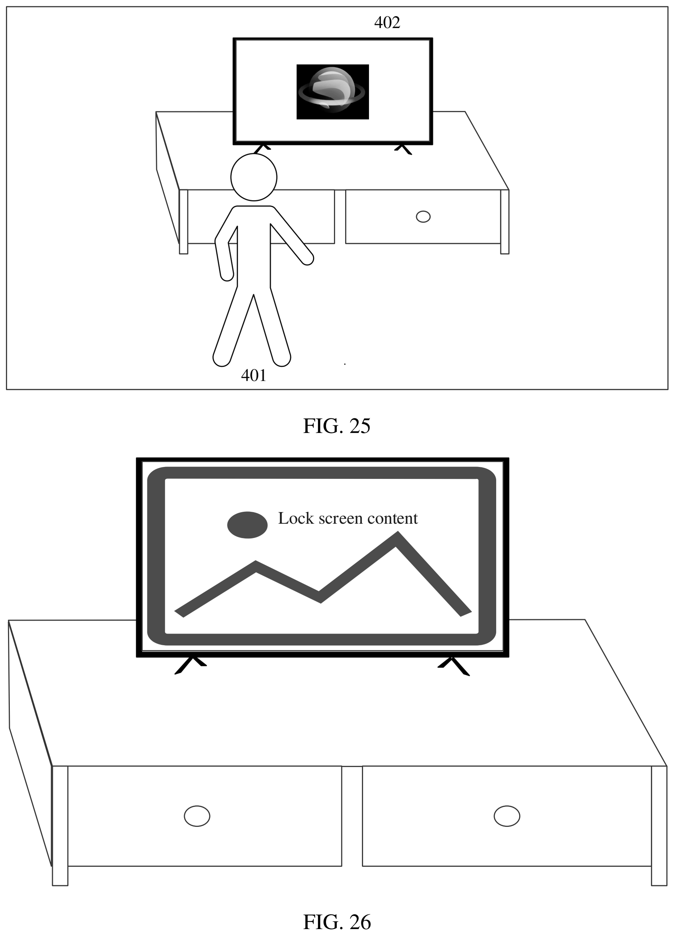

Refer to FIG. 25. FIG. 25 is a diagram of an application scenario of a method for displaying a digital assistant according to an embodiment of this application. The application scenario shown in FIG. 25 includes a user 401 and an electronic device 402. The electronic device 402 may be, for example, a smart television in a home of the user. A digital assistant is deployed on the smart television.

During startup of the electronic device 402, the user 401 may control the electronic device 402 by using a voice instruction, so that the electronic device 402 automatically executes some applications, for example, automatically opens an application for playing back videos.

Hardware such as a distance sensor and a microphone is configured on hardware of the electronic device 402. The distance sensor is configured to detect a position of a user, and the microphone is configured to receive a voice instruction of the user. A digital assistant is set on the electronic device 402 in software, and is used to process the voice instruction of the user, to automatically execute some applications according to the voice instruction.

For ease of description, the following describes in detail a process in which a smart television performs the method for displaying the digital assistant, by using an example in which the electronic device that performs the method for displaying the digital assistant is the smart television.

Refer to FIG. 26. FIG. 26 is a diagram of a digital assistant in a sleep state according to an embodiment of this application. As shown in FIG. 26, when the smart television is not used for a long time and there is no user around the smart television, the smart television enters a lock screen standby state, and displays lock screen content on a display. In this case, when the smart television enters the lock screen standby state, the digital assistant is not displayed on the display of the smart television, and the digital assistant runs in the background and waits to be woken up.

Optionally, the lock screen content displayed on the display may be content irrelevant to the digital assistant. Alternatively, the lock screen content displayed on the display may be a specific form of the digital assistant, for example, a breathing state of the digital assistant.

During startup of the smart television, when the smart television detects a user by using a sensor, the smart television may first determine a position of the user based on the sensor, then determine, based on the position of the user, a region in which the user is located, and determine an initial display form (that is, the foregoing first form) of the digital assistant based on the region in which the user is located.

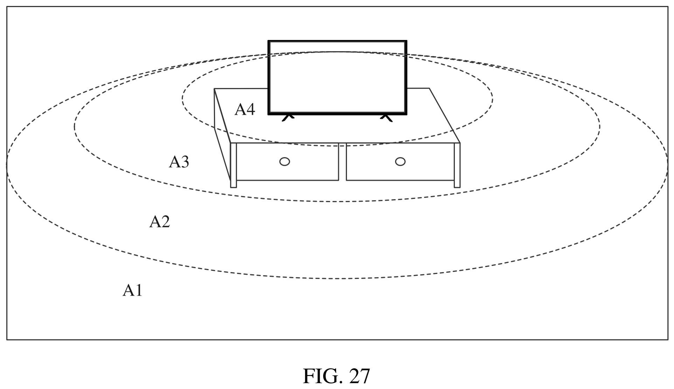

In actual application, preset logic may be set in the smart television, and space around the smart television is divided into a plurality of regions. When the user is in different regions, different forms of the digital assistant are correspondingly displayed. Refer to FIG. 27. FIG. 27 is a diagram of region division according to an embodiment of this application. As shown in FIG. 27, in this embodiment, the smart television is used as a center, and space around the smart television is divided into four regions based on different radii. The four regions are sequentially: an unaware region A1, an aware region A2, a natural behavior region A3, and a typical task region A4 from outside to inside. Specifically, three radii: R1, R2, and R3 are defined by using the smart television as the center, where R1>R2>R3. In this case, a distance between the unaware region A1 and the smart television is greater than R1, a distance between the aware region A2 and the smart television is between R1 and R2, a distance between the natural behavior region A3 and the smart television is between R2 and R3, and a distance between the typical task region A4 and the smart television is less than R3. The unaware region corresponds to a breathing state, the aware region corresponds to a woken-up state, and the natural behavior region and the typical task region correspond to a listening state.

When the digital assistant of the smart television is activated, for example, a user activates the digital assistant by using a wake-up word/remote control, the smart television determines an initial form of the digital assistant from the breathing state, the woken-up state, and a thinking state based on a position of the user, and displays the initial form on a screen.

For example, when the user activates the digital assistant of the smart television by using a voice instruction on the remote control in the unaware region, and the initial form corresponding to the unaware region is the breathing state, the smart television displays the breathing state of the digital assistant after activating a main program of the digital assistant. When the user activates the digital assistant of the smart television by using a voice instruction on the remote control in the aware region, the woken-up state of the digital assistant is displayed.

After the smart television displays the initial form of the digital assistant based on the position of the user, the smart television further captures an activity status of the user in space by using a sensor deployed on the smart television, parses sensor data based on preset logic, and identifies from a captured spatial activity of the user whether there is a spatial interaction behavior, and a type of the spatial interaction behavior.

For example, the smart television senses an orientation and a distance of the user relative to the television by using a distance sensor, and determines, based on an orientation change and a distance change within a period of time, whether the user walks toward the television. If it is detected that the distance between the user and the television continuously shrinks in a period of time, and a real-time distance between the user and the television is less than a preset value, it is considered that a walking-toward input is detected. Similarly, when the user moves leftward or rightward relative to the television, a horizontal leftward/rightward movement input of the user may be detected.

After detecting the spatial interaction behavior of the user, the smart television may adjust at least one feature of the initial form of the digital assistant based on the type of the spatial interaction behavior, to implement switching of the form of the digital assistant.

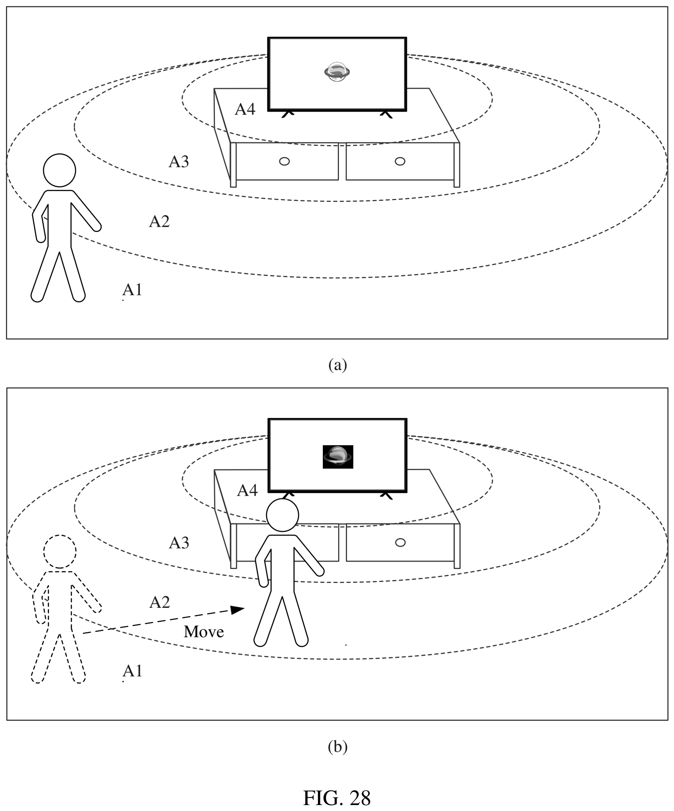

Refer to FIG. 28. FIG. 28 is a diagram of switching a displayed form of a digital assistant according to an embodiment of this application. As shown in (a) in FIG. 28, when the digital assistant in the smart television is activated, the user is in the unaware region A1. In this case, the breathing state of the digital assistant is displayed on the smart television, that is, a ring object regularly moves up and down along a z axis. When the user always walks in the unaware region A1, because the smart television does not sense a spatial input in the unaware region A1, movement of the user does not affect the form of the digital assistant. In other words, the smart television always displays the digital assistant in the breathing state.

As shown in (b) in FIG. 28, as the user moves from the unaware region A1 to the aware region A2, the smart television detects that a spatial interaction behavior of the user is walking close to the smart television, and a position of the user is in the aware region A2. Therefore, the smart television switches the digital assistant to the woken-up state. When the form of the digital assistant is the woken-up state, the ring object is fixedly located on an equator plane of a sphere and rotates around the z-axis with motion of the user. In addition, a light effect region on the ring object points to the user.

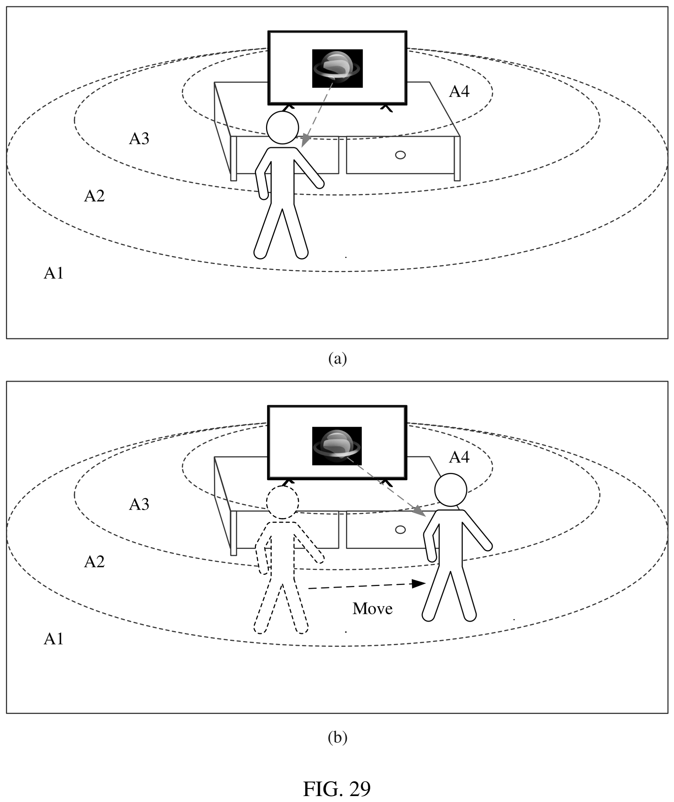

In addition, when the user moves in the aware region A2 to adjust an orientation relative to the television, the ring object in the digital assistant rotates with rotation of a human body, and a light effect region always faces the user. Refer to FIG. 29. FIG. 29 is a diagram of a change of a digital assistant in a woken-up state according to an embodiment of this application. As shown in (a) in FIG. 29, when the user is located in the aware region A2, the digital assistant is in the woken-up state, and a light effect region on a ring object in the digital assistant points to the user. As shown in (b) in FIG. 29, when the user moves in the aware region A2 and moves from left to right, the digital assistant is still in the woken-up state, and the ring object in the digital assistant moves with the user, so that the light effect region on the ring object always points to the user. In other words, the light effect region on the ring object also moves from left to right. In addition, when the user continuously approaches the smart television, the smart television detects a walking input of the user, and the ring object may further rotate around a y-axis, to generate a change of a pitching direction. When the user always moves in the aware region A2, motion laws of a sphere and an image object may not change.

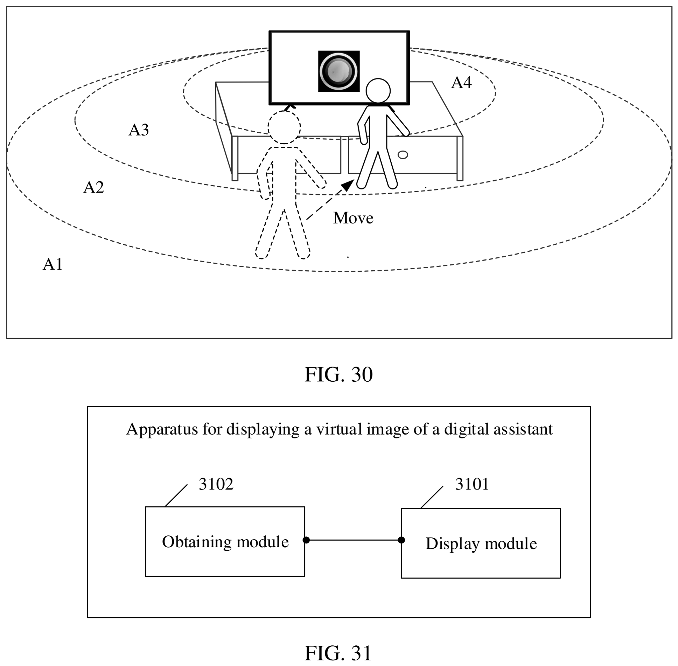

When the user comes to the natural behavior region A3 (including the natural behavior region A3 and the typical task region A4) from the aware region A2, the form of the digital assistant is switched from the woken-up state to the listening state, and a position and a motion law of the ring object change. First, the ring object rotates 90 degrees around the y-axis from an equator plane of the sphere to a yoz plane. At the same time, a light effect may change, and the entire ring object is filled with the light effect. Motion laws of the sphere and the image object change. For example, the sphere and the image object rotate 90 degrees around the y axis once, and then continuously rotate around a z axis. As shown in FIG. 30, after the user comes to the natural behavior region A3 from the aware region A2, the digital assistant displayed on the smart television is switched from the woken-up state to the listening state, to indicate that the digital assistant is receiving a voice instruction delivered by the user.

When the digital assistant is in the listening state, and the user inputs a voice instruction, for example, the voice instruction is "How is the weather today?", in this case, the digital assistant parses the voice instruction and performs a corresponding operation. In a process in which the digital assistant parses the voice instruction and performs the corresponding operation, the smart television may display the thinking state of the digital assistant, and a display duration of the think state is positively correlated with a time length of parsing the voice instruction and performing the corresponding operation by the digital assistant.

**In** addition, when the user is located in the natural behavior region A3, the digital assistant is in the listening state. When inputting a voice instruction to the digital assistant, the user usually needs to first input a voice instruction as a wake-up instruction, for example, "Hey, Celia" or "Celia", so that the digital assistant receives and parses a voice instruction following the wake-up instruction. However, after the user comes to the typical task region A4, the digital assistant is still in the listening state, but the user may directly input a voice instruction to the digital assistant, and does not need to input a voice instruction as a wake-up instruction.

It should be noted that after the digital assistant receives and parses the voice instruction of the user, the digital assistant may change the form of the digital assistant based on content of the voice instruction of the user. For example, when the digital assistant obtains, through parsing, that the content of the voice instruction is playing music, the form of the digital assistant may be a color dynamic change with a music rhythm or a dynamic change of a rotation rhythm. In other words, the digital assistant correspondingly adjusts the displayed form of the digital assistant when performing a music playing operation. For another example, when the content of the voice instruction obtained by the digital assistant through parsing is turning on a light, turning off a light, or broadcasting weather, the form of the digital assistant may change in luminance, color, or material based on a light turn-on action, a light turn-off action, or a broadcast weather type.

In addition, when the digital assistant parses the voice instruction and executes the corresponding task based on the content of the voice instruction, the digital assistant may change the displayed form of the digital assistant based on a progress of executing the task by the digital assistant. For example, the digital assistant gradually changes, based on the progress of the task, a material of the ring object or an area of filling the ring object with a specific material.

The foregoing describes a form change status of the digital assistant displayed on the smart television when the user moves from a region distant from the smart television to a region close to the smart television. Actually, the user may also move from a region close to the smart television to a region distant from the smart television. In this case, the smart television may determine the to-be-displayed form of the digital assistant based on a spatial interaction behavior of the user and a region in which the user is located after the movement, to implement switching of the form of the digital assistant. For example, when the user moves from the natural behavior region A3 to the aware region A2, the digital assistant displayed on the smart television is switched from the listening state to the woken-up state; and when the user moves from the aware region A2 to the unaware region A1, the digital assistant displayed on the smart television is switched from the woken-up state to the breathing state.

The foregoing describes a change process of the form of the digital assistant when a body image of the digital assistant is formed by the ring object, the sphere, and the image object. The following describes a change process of the form of the digital assistant when a body image of the digital assistant is formed by a virtual human body.

Specifically, the body image of the digital assistant may be the virtual human body, and the form of the digital assistant also includes a plurality of feature objects. The plurality of feature objects may be divided based on human body parts. In other words, different feature objects correspond to different parts in the virtual human body. For example, the plurality of feature objects may be divided into a head feature object, an eye feature object, a mouth feature object, a left-hand feature object, and a right-hand feature object.

When the body image of the digital assistant is the virtual human body, the smart television may also divide space near the smart television into a plurality of regions by using the position of the smart television as a circle center. In this way, after the digital assistant in the smart television is activated, the smart television may display a corresponding form of the digital assistant based on a region in which the user is located in space and a spatial interaction behavior of the user.

Specifically, in this embodiment, the space near the smart television may be divided into three regions. A region 1 is a region at a distance of 1.2 meters to 3.7 meters from the smart television, a region 2 is a region at a distance of 0.5 meter to 1.2 meters from the smart television, and a region 3 is a region at a distance of less than 0.5 meter from the smart television.

When the smart television recognizes that the user is located in the region 1, the smart television may consider that a distance between the user and the digital assistant is a recognition distance, and the spatial interaction behavior, obtained by the smart television, of the user includes that the user faces the digital assistant, a gaze point of the user is on the digital assistant, and a duration of gazing the digital assistant by the user is greater than 3 seconds. In this case, the form of the digital assistant that may be displayed on the smart television is a form having an expression and an action. Specifically, the form of the digital assistant may be that the virtual human body representing the digital assistant looks at the user and blinks and smiles at the user, and a body and a head slightly swing. This indicates that the digital assistant is willing to interact with the user. In addition, if a plurality of users are located in the region 1, and the plurality of users all have the foregoing spatial interaction behavior, 1.2 meters may be used as a division distance, and the virtual human body representing the digital assistant is controlled to face and look at different directions of the users in turn.

When the smart television recognizes that the user is located in the region 2, the smart television may consider that a distance between the user and the digital assistant is a greeting distance, and the spatial interaction behavior, obtained by the smart television, of the user includes that the user faces the digital assistant, a gaze point of the user is on the digital assistant, and a duration of gazing the digital assistant by the user is greater than 3 seconds. In this case, the form of the digital assistant that may be displayed on the smart television is a form having an expression and an action, and the smart television outputs a corresponding voice of the digital assistant. Specifically, the form of the digital assistant may be that the virtual human body representing the digital assistant wave a hand to the user and greet the user. In addition, the voice, output by the smart television, of the digital assistant may be querying a requirement of the user. For example, the voice of the digital assistant may be specifically "How may I help you".

When the smart television recognizes that the user is located in the region 3, the smart television may consider that a distance between the user and the digital assistant is a manual touch operation distance, and the spatial interaction behavior, obtained by the smart television, of the user includes that the user faces the digital assistant, a gaze point of the user is on the digital assistant, and a duration of gazing the digital assistant by the user is greater than 3 seconds. In this case, the smart television may display, on the display, task information that requires a touch operation, and proportionally scale down the body image of the digital assistant. Specifically, a projection height H of the body image of the digital assistant on the display may satisfy H=Actual height of the body image*0.5/1.2. Herein, H is the projection height of the body image of the digital assistant on the screen. The actual height of the body image of the digital assistant is a real height of the virtual human body representing the digital assistant. A real height of a male virtual human body may be, for example, 174 cm, and a real height of a female virtual human body may be, for example, 161 cm. A specific value may be adjusted according to an actual situation. This is not specifically limited in this embodiment.

The foregoing describes in detail the method provided in embodiments of this application. The following describes a device that is provided in embodiments of this application and that is configured to perform the foregoing method.

Refer to FIG. 31. FIG. 31 is a diagram of a structure of an apparatus for displaying a virtual image of a digital assistant according to an embodiment of this application. As shown in FIG. 31, the apparatus for displaying the virtual image of the digital assistant is used in an electronic device. The virtual image includes a plurality of feature objects. The apparatus includes:
a display module 3101, configured to display the virtual image in a first form on a first interface.

The display module 3101 is further configured to detect a signal instruction generated by the electronic device, and display the virtual image in a second form.

The signal instruction is generated based on a first user input. At least one of the plurality of feature objects is presented in the first form and the second form. Changing from the first form to the second form means that at least one feature object undergoes at least one of a shape change, a position change, a motion law change, and a display area change.

In a possible implementation, the plurality of feature objects include a first feature object. A shape change of the first feature object includes at least one of the following changes: scale-up, scale-down, stretching, compression, rotation, and switching between a dominant form, a geometric array, or a long bar.

In a possible implementation, the plurality of feature objects further include a second feature object. A dominant form of the first feature object is a ring. The second feature object is a sphere. A circle center of the ring and a sphere center of the sphere are at a same point.

A position change of the first feature object includes at least one of a trajectory position change after a roll around the sphere and a position change caused by overall movement or rotation of the virtual image.

A motion law of the first feature object includes that the ring rotates around the sphere according to a preset trajectory by using the circle center as a pivot.

A motion law of the second feature object includes that the sphere performs reciprocating motion according to a preset law along a straight line that passes through the circle center of the ring and that is perpendicular to a plane on which the ring is located.

In a possible implementation, the display module 3101 is further configured to detect a second user input, and display a third feature object on the first feature object, where the third feature object is capable of moving on the first feature object and indicating an orientation of a user.

In a possible implementation, the virtual image has a breathing state. Displaying the virtual image in the first form on the first interface includes:
if the first interface is a screen-off interface, displaying the first feature object in the dominant form, where the first form is the breathing state in which the first feature object and the second feature object are included.

In a possible implementation, when the first interface is the screen-off interface, the virtual image in the breathing state performs reciprocating motion on a screen according to a preset law.

In a possible implementation, when the first interface is the screen-off interface, and the first form is the breathing state, the display module 3101 is further configured to:
detect a second user input, and display a third feature object on the first feature object, where the third feature object is capable of moving on the first feature object and indicating an orientation of a user.

In a possible implementation, the virtual image has a to-be-woken-up state and a listening state, and the first interface is a lock screen interface or any screen interface after unlocking.

Displaying the virtual image in the first form on the first interface includes: displaying the virtual image on the first interface by using the to-be-woken-up state as the first form, where the to-be-woken-up state includes the first feature object, the first feature object as a navigation prompt line is displayed as the long bar, the navigation prompt line is used as a reference line for screen gesture navigation, and the to-be-woken-up state is persistently displayed on the first interface when no input of waking up the digital assistant is received; or
detecting a third user input, and displaying the virtual image on the first interface by using the listening state as the first form, where the third user input is used to wake up the digital assistant, the listening state includes the first feature object and the second feature object, and the first feature object is displayed in the dominant form.

In a possible implementation, the first interface is the lock screen interface or the screen interface after unlocking, and the first form is the listening state.

Displaying the virtual image in the first form on the first interface specifically includes:
first displaying the first feature object by using the geometric array; and
changing the first feature object from the geometric array to the dominant form, and displaying the second feature object.

In a possible implementation, first displaying the first feature object by using the geometric array is specifically:
displaying a geometric figure of a part of the array at an initial display position, and then displaying the geometric figure on an entire screen.

In a possible implementation, the initial display position is determined based on a user input.

When no user input is detected, the initial position is a region for displaying the virtual image.

In a possible implementation, displaying the virtual image in the first form on the first interface is specifically:
displaying the virtual image at a preset position on the first interface; or
overlay displaying the virtual image on a target content element in the first interface, where the target content element is a content element of a preset type.

In a possible implementation, when the virtual image overlay displayed on the target content element in the first interface, a gesture event interface of the target content element is copied to the virtual image, so that a gesture-corresponding function of the target content element can be implemented by making a gesture on the virtual image.

In a possible implementation, the first interface is a camera interface, and the target content element is a shutter control in the camera interface.

In a possible implementation, the first interface is the lock screen interface or the screen interface after unlocking, the first form is the to-be-woken-up state, the second form is the listening state, and the signal instruction is generated after a user makes a preset gesture to the digital assistant in the first form.

In a possible implementation, the plurality of feature objects further include a second feature object.

In the second form, the first feature object is in the dominant form of the ring, the second feature object is the sphere, and the ring is located on an equator at a top view angle of the sphere.

In a possible implementation, the virtual image further has a task execution state, and the task execution state includes the first feature object.

On at least one process interface in a process in which the digital assistant executes an automated task, the first feature object in the task execution state correspondingly generates at least one of a shape change and a position change.

In a possible implementation, the first feature object is the geometric array, and a display position of the geometric array matches a target control in the process interface to simulate a tap event of the target control to go to a next process interface.

In a possible implementation, the first form is the listening state, the second form is the task execution state, both the listening state and the task execution state include the first feature object, and the first feature object in the listening state and the first feature object in the task execution state have different forms.

In the task execution state, the form of the first feature object includes: the geometric array on an interface, an outer frame of a dialog card, an outer frame of an input box when input is performed by invoking the digital assistant, or an outer frame of a task result page.

In a possible implementation, the first feature object has different form changes in different task progresses of the automated task.

In a possible implementation, when the automated task is a smart recognition task, and the first feature object changes from a geometric array that is laid out to the entire screen to a geometric array that is displayed only on a recognized executable object.

In a possible implementation, in the task execution state, the form change of the first feature object includes:
the first feature object is first displayed in the dominant form of the ring on a periphery of the second feature object;
the first feature object as the ring is then detached from the second feature object, and is scaled up and displayed as the outer frame of the dialog card;
the first feature object changes from the outer frame of the dialog card to a geometric array in a dialog bubble; and
the virtual image is displayed in the listening state after execution of the automated task is completed.

In a possible implementation, the apparatus further includes:
an obtaining module 3102, configured to obtain scenario information, and display the first feature object in the plurality of feature objects in a target form based on the scenario information.

In a possible implementation, the virtual image has a to-be-woken-up state, the to-be-woken-up state at least includes the first feature object, and the first feature object is displayed as the long bar.

The display module 3101 is further configured to display the second feature object in response to detecting that a focus of a line of sight of a human eye falls in a region in which the screen is located.

In a possible implementation, the display module 3101 is further configured to: in response to detecting a human voice, enable the second feature object to move relative to the first feature object in a direction of approaching a sound source of the human voice.

In a possible implementation, if the electronic device is a smart vehicle, the display module 3101 is further configured to:
indicate an in-vehicle function or alarm information by using deformation or motion of the first feature object in the plurality of feature objects.

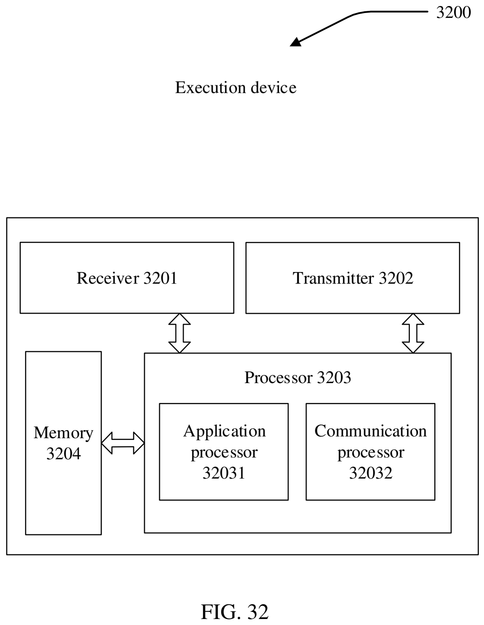

Refer to FIG. 32. FIG. 32 is a diagram of a structure of an execution device according to an embodiment of this application. The execution device 3200 may be specifically represented as a mobile phone, a tablet computer, a notebook computer, a smart wearable device, a server, or the like. This is not limited herein. Specifically, the execution device 3200 includes a receiver 3201, a transmitter 3202, a processor 3203, and a memory 3204 (there may be one or more processors 3203 in the execution device 3200, and one processor is used as an example in FIG. 32). The processor 3203 may include an application processor 32031 and a communication processor 32032. In some embodiments of this application, the receiver 3201, the transmitter 3202, the processor 3203, and the memory 3204 may be connected through a bus or in another manner.

The memory 3204 may include a read-only memory and a random access memory, and provide instructions and data to the processor 3203. A part of the memory 3204 may further include a non-volatile random access memory (non-volatile random access memory, NVRAM). The memory 3204 stores a processor and operation instructions, an executable module, or a data structure; or a subset thereof; or an extended set thereof. The operation instructions may include various operation instructions used to implement various operations.

The processor 3203 controls an operation of the execution device. In specific application, the components of the execution device are coupled together through a bus system. In addition to a data bus, the bus system may further include a power bus, a control bus, a status signal bus, and the like. However, for clear description, various types of buses in the figure are all marked as the bus system.

The method disclosed in embodiments of this application may be applied to the processor 3203, or may be implemented by the processor 3203. The processor 3203 may be an integrated circuit chip with a signal processing capability. In an implementation process, the steps of the foregoing methods can be implemented by using a hardware integrated logical circuit in the processor 3203 or by using instructions in a form of software. The processor 3203 may be a general-purpose processor, a digital signal processor (digital signal processor, DSP), a microprocessor, or a microcontroller. The processor 3203 may further include an application-specific integrated circuit (application-specific integrated circuit, ASIC), a field-programmable gate array (field-programmable gate array, FPGA) or another programmable logic device, a discrete gate or a transistor logic device, or a discrete hardware component.

The processor 3203 may implement or perform the methods, the steps, and the logical block diagrams disclosed in embodiments of this application. The general-purpose processor may be a microprocessor, or the processor may be any conventional processor or the like. The steps of the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory 3204, and the processor 3203 reads information in the memory 3204 and completes the steps of the foregoing methods in combination with hardware of the processor.

The receiver 3201 may be configured to receive input digit or character information, and generate a signal input related to a related setting and function control of the execution device. The transmitter 3202 may be configured to output digital or character information through a first interface. The transmitter 3202 may be further configured to send instructions to a disk group through the first interface, to modify data in the disk group. The transmitter 3202 may further include a display device such as a display.

The electronic device provided in embodiments of this application may be specifically a chip. The chip includes a processing unit and a communication unit. The processing unit may be, for example, a processor, and the communication unit may be, for example, an input/output interface, a pin, or a circuit. The processing unit may execute computer-executable instructions stored in a storage unit, to enable a chip in the execution device to perform the method described in the foregoing embodiments. Optionally, the storage unit is a storage unit in the chip, for example, a register or a buffer. Alternatively, the storage unit may be a storage unit in a wireless access device but outside the chip, for example, a read-only memory (read-only memory, ROM), another type of static storage device that can store static information and instructions, or a random access memory (random access memory, RAM).

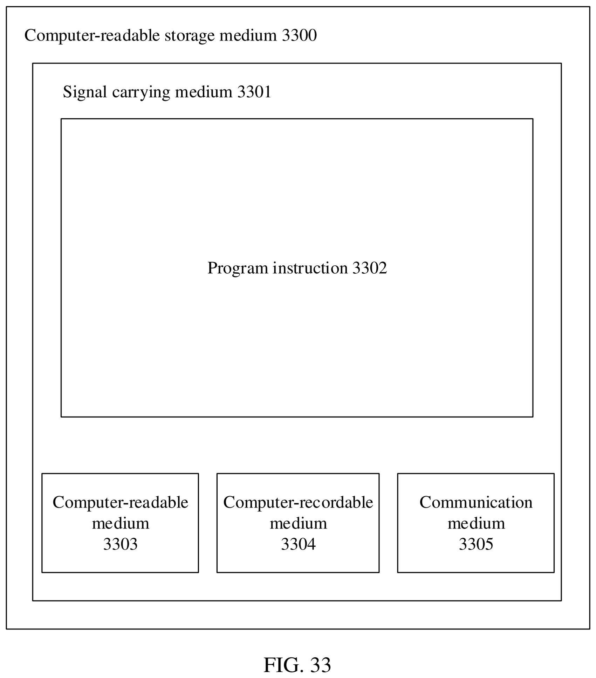

Refer to FIG. 33. FIG. 33 is a diagram of a structure of a computer-readable storage medium according to an embodiment of this application. This application further provides a computer-readable storage medium. In some embodiments, the method disclosed in FIG. 3 may be implemented as computer program instructions encoded in a machine-readable format on the computer-readable storage medium or encoded in another non-transitory medium or product.

FIG. 33 schematically shows a conceptual partial view of an example computer-readable storage medium arranged according to at least some embodiments shown herein. The example computer-readable storage medium includes a computer program for executing a computer process on a computing device.

In an embodiment, the computer-readable storage medium 3300 is provided by using a signal carrying medium 3301. The signal carrying medium 3301 may include one or more program instructions 3302 that may provide the foregoing functions or some functions described in FIG. 3 when being run by one or more processors.

In some examples, the signal carrying medium 3301 may include a computer-readable medium 3303, for example, but not limited to, a hard disk drive, a compact disc (CD), a digital video disc (DVD), a digital tape, a memory, a ROM, or a RAM.

In some implementations, the signal carrying medium 3301 may include a computer-recordable medium 3304, for example, but not limited to, a memory, a read/write (R/W) CD, or an R/W DVD. In some implementations, the signal carrying medium 3301 may include a communication medium 3305, for example, but not limited to, a digital and/or analog communication medium (for example, an optical fiber, a waveguide, a wired communication link, or a wireless communication link). Therefore, for example, the signal carrying medium 3301 may be conveyed by the communication medium 3305 in a wireless form (for example, a wireless communication medium that complies with the IEEE 802.X standard or another transmission protocol).

The one or more program instructions 3302 may be, for example, computer-executable instructions or logic implementation instructions. In some examples, the computing device may be configured to provide various operations, functions, or actions in response to the program instruction 3302 transmitted to the computing device by using one or more of the computer-readable medium 3303, the computer-recordable medium 3304, and/or the communication medium 3305.

It should be further noted that the apparatus embodiments described above are merely examples, and the units described as separate components may be or may not be physically separate. A component displayed as a unit may be or may not be a physical unit; and may be located in one position, or may be distributed in a plurality of network units. A part or all of the modules may be selected according to actual needs to achieve the objectives of the solutions of embodiments. In addition, in the accompanying drawings of the apparatus embodiments provided by this application, connection relationships between modules indicate that communication connections exist between the modules, which may be specifically implemented as one or more communication buses or signal cables.

Based on the description of the foregoing implementations, a person skilled in the art may clearly understand that this application may be implemented by software in addition to necessary universal hardware, or certainly may be implemented by dedicated hardware, including an application-specific integrated circuit, a dedicated CPU, a dedicated memory, a dedicated component, and the like. Generally, any function that can be performed by a computer program can be easily implemented by using corresponding hardware. Moreover, a specific hardware structure used to achieve a same function may be in various forms, for example, in a form of an analog circuit, a digital circuit, or a dedicated circuit. However, in this application, software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a training device, or a network device) to perform the methods described in embodiments of this application.

All or a part of the foregoing embodiments may be implemented by using software, hardware, firmware, or any combination thereof. When software is used to implement the embodiments, all or a part of the embodiments may be implemented in a form of a computer program product.

The computer program product includes one or more computer instructions. When the computer program instructions are loaded and executed on a computer, all or a part of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line) or wireless (for example, infrared, radio, or microwave) manner. The computer-readable storage medium may be any usable medium that can be stored by a computer, or a data storage device, such as a training device or a data center, integrating one or more usable media. The usable medium may be a magnetic medium (for example, a floppy disk, a hard disk drive, or a magnetic tape), an optical medium (for example, a DVD), a semiconductor medium (for example, a solid state disk (Solid State Disk, SSD)), or the like.

## Claims

1. A method for displaying a virtual image of a digital assistant, applied to an electronic device, wherein the virtual image comprises a plurality of feature objects, and the method comprises:
displaying the virtual image in a first form on a first interface; and
detecting a signal instruction generated by the electronic device, and displaying the virtual image in a second form, wherein
the signal instruction is generated based on a first user input, at least one of the plurality of feature objects is presented in the first form and the second form, and changing from the first form to the second form means that at least one feature object undergoes at least one of a shape change, a position change, a motion law change, and a display area change.

2. The method according to claim 1, wherein the plurality of feature objects comprise a first feature object, and a shape change of the first feature object comprises at least one of the following changes: scale-up, scale-down, stretching, compression, rotation, and switching between a dominant form, a geometric array, or a long bar.

3. The method according to claim 2, wherein the plurality of feature objects further comprise a second feature object, a dominant form of the first feature object is a ring, the second feature object is a sphere, and a circle center of the ring and a sphere center of the sphere are at a same point;
a position change of the first feature object comprises at least one of a trajectory position change after a roll around the sphere and a position change caused by overall movement or rotation of the virtual image;
a motion law of the first feature object comprises that the ring rotates around the sphere according to a preset trajectory by using the circle center as a pivot; and
a motion law of the second feature object comprises that the sphere performs reciprocating motion according to a preset law along a straight line that passes through the circle center of the ring and that is perpendicular to a plane on which the ring is located.

4. The method according to claim 3, wherein the method further comprises:
detecting a second user input, and displaying a third feature object on the first feature object, wherein the third feature object is capable of moving on the first feature object and indicating an orientation of a user.

5. The method according to any one of claims 1 to 3, wherein the virtual image has a breathing state, and displaying the virtual image in the first form on the first interface comprises:
if the first interface is a screen-off interface, displaying the first feature object in the dominant form, wherein the first form is the breathing state in which the first feature object and the second feature object are comprised.

6. The method according to claim 5, wherein when the first interface is the screen-off interface, the virtual image in the breathing state performs reciprocating motion on a screen according to a preset law.

7. The method according to claim 5, wherein when the first interface is the screen-off interface, and the first form is the breathing state, the method further comprises:
detecting a second user input, and displaying a third feature object on the first feature object, wherein the third feature object is capable of moving on the first feature object and indicating an orientation of a user.

8. The method according to any one of claims 1 to 4, wherein the virtual image has a to-be-woken-up state and a listening state, and the first interface is a lock screen interface or any screen interface after unlocking; and
displaying the virtual image in the first form on the first interface comprises:
displaying the virtual image on the first interface by using the to-be-woken-up state as the first form, wherein the to-be-woken-up state comprises the first feature object, the first feature object as a navigation prompt line is displayed as the long bar, the navigation prompt line is used as a reference line for screen gesture navigation, and the to-be-woken-up state is persistently displayed on the first interface when no input of waking up the digital assistant is received; or
detecting a third user input, and displaying the virtual image on the first interface by using the listening state as the first form, wherein the third user input is used to wake up the digital assistant, the listening state comprises the first feature object and the second feature object, and the first feature object is displayed in the dominant form.

9. The method according to claim 8, wherein the first interface is the lock screen interface or the screen interface after unlocking, and the first form is the listening state; and
displaying the virtual image in the first form on the first interface specifically comprises:
first displaying the first feature object by using the geometric array; and
changing the first feature object from the geometric array to the dominant form, and displaying the second feature object.

10. The method according to claim 9, wherein first displaying the first feature object by using the geometric array is specifically:
displaying a geometric figure of a part of the array at an initial display position, and then displaying the geometric figure on an entire screen.

11. The method according to claim 10, wherein
the initial display position is determined based on a user input; and
when no user input is detected, the initial position is a region for displaying the virtual image.

12. The method according to any one of claims 1 to 11, wherein displaying the virtual image in the first form on the first interface is specifically:
displaying the virtual image at a preset position on the first interface; or
overlay displaying the virtual image on a target content element in the first interface, wherein the target content element is a content element of a preset type.

13. The method according to claim 12, wherein when the virtual image overlay displayed on the target content element in the first interface, a gesture event interface of the target content element is copied to the virtual image, so that a gesture-corresponding function of the target content element can be implemented by making a gesture on the virtual image.

14. The method according to claim 13, wherein the first interface is a camera interface, and the target content element is a shutter control in the camera interface.

15. The method according to claim 8, wherein the first interface is the lock screen interface or the screen interface after unlocking, the first form is the to-be-woken-up state, the second form is the listening state, and the signal instruction is generated after a user makes a preset gesture to the digital assistant in the first form.

16. The method according to claim 15, wherein the plurality of feature objects further comprise the second feature object; and
in the second form, the first feature object is in the dominant form of the ring, the second feature object is the sphere, and the ring is located on an equator at a top view angle of the sphere.

17. The method according to claim 8, wherein the virtual image further has a task execution state, and the task execution state comprises the first feature object; and
on at least one process interface in a process in which the digital assistant executes an automated task, the first feature object in the task execution state correspondingly generates at least one of a shape change and a position change.

18. The method according to claim 17, wherein the first feature object is the geometric array, and a display position of the geometric array matches a target control in the process interface to simulate a tap event of the target control to go to a next process interface.

19. The method according to claim 17, wherein the first form is the listening state, the second form is the task execution state, both the listening state and the task execution state comprise the first feature object, and the first feature object in the listening state and the first feature object in the task execution state have different forms; and
in the task execution state, the form of the first feature object comprises: the geometric array on an interface, an outer frame of a dialog card, an outer frame of an input box when input is performed by invoking the digital assistant, or an outer frame of a task result page.

20. The method according to claim 19, wherein the first feature object has different form changes in different task progresses of the automated task.

21. The method according to claim 19, wherein when the automated task is a smart recognition task, and the first feature object changes from a geometric array that is laid out to the entire screen to a geometric array that is displayed only on a recognized executable object.

22. The method according to claim 19 or 20, wherein in the task execution state, the form change of the first feature object comprises:
the first feature object is first displayed in the dominant form of the ring on a periphery of the second feature object;
the first feature object as the ring is then detached from the second feature object, and is scaled up and displayed as the outer frame of the dialog card;
the first feature object changes from the outer frame of the dialog card to a geometric array in a dialog bubble; and
the virtual image is displayed in the listening state after execution of the automated task is completed.

23. The method according to claims 1 to 4, wherein the method further comprises:
obtaining scenario information, and displaying the first feature object in the plurality of feature objects in a target form based on the scenario information.

24. The method according to claims 1 to 4, wherein the virtual image has a to-be-woken-up state, the to-be-woken-up state at least comprises the first feature object, and the first feature object is displayed as the long bar; and
displaying the second feature object in response to detecting that a focus of a line of sight of a human eye falls in a region in which the screen is located.

25. The method according to claim 24, wherein the method further comprises:
in response to detecting a human voice, moving, by the second feature object, relative to the first feature object in a direction of approaching a sound source of the human voice.

26. The method according to claims 1 to 4, wherein the electronic device is a smart vehicle, and the method further comprises:
indicating an in-vehicle function or alarm information by using deformation or motion of the first feature object in the plurality of feature objects.

27. An apparatus for displaying a virtual image of a digital assistant, applied to an electronic device, wherein the virtual image comprises a plurality of feature objects, and the apparatus comprises:
a display module, configured to display the virtual image in a first form on a first interface; and
the display module is further configured to detect a signal instruction generated by the electronic device, and display the virtual image in a second form, wherein
the signal instruction is generated based on a first user input, at least one of the plurality of feature objects is presented in the first form and the second form, and changing from the first form to the second form means that at least one feature object undergoes at least one of a shape change, a position change, a motion law change, and a display area change.

28. The apparatus according to claim 27, wherein the plurality of feature objects comprise a first feature object, and a shape change of the first feature object comprises at least one of the following changes: scale-up, scale-down, stretching, compression, rotation, and switching between a dominant form, a geometric array, or a long bar.

29. The apparatus according to claim 28, wherein the plurality of feature objects further comprise a second feature object, a dominant form of the first feature object is a ring, the second feature object is a sphere, and a circle center of the ring and a sphere center of the sphere are at a same point;
a position change of the first feature object comprises at least one of a trajectory position change after a roll around the sphere and a position change caused by overall movement or rotation of the virtual image;
a motion law of the first feature object comprises that the ring rotates around the sphere according to a preset trajectory by using the circle center as a pivot; and
a motion law of the second feature object comprises that the sphere performs reciprocating motion according to a preset law along a straight line that passes through the circle center of the ring and that is perpendicular to a plane on which the ring is located.

30. The apparatus according to claim 29, wherein
the display module is further configured to detect a second user input, and display a third feature object on the first feature object, wherein the third feature object is capable of moving on the first feature object and indicating an orientation of a user.

31. The apparatus according to any one of claims 27 to 29, wherein the virtual image has a breathing state, and displaying the virtual image in the first form on the first interface comprises:
if the first interface is a screen-off interface, displaying the first feature object in the dominant form, wherein the first form is the breathing state in which the first feature object and the second feature object are comprised.

32. The apparatus according to claim 31, wherein when the first interface is the screen-off interface, the virtual image in the breathing state performs reciprocating motion on a screen according to a preset law.

33. The apparatus according to claim 31, wherein when the first interface is the screen-off interface, and the first form is the breathing state, the display module is further configured to:
detect a second user input, and display a third feature object on the first feature object, wherein the third feature object is capable of moving on the first feature object and indicating an orientation of a user.

34. The apparatus according to any one of claims 27 to 30, wherein the virtual image has a to-be-woken-up state and a listening state, and the first interface is a lock screen interface or any screen interface after unlocking; and
displaying the virtual image in the first form on the first interface comprises:
displaying the virtual image on the first interface by using the to-be-woken-up state as the first form, wherein the to-be-woken-up state comprises the first feature object, the first feature object as a navigation prompt line is displayed as the long bar, the navigation prompt line is used as a reference line for screen gesture navigation, and the to-be-woken-up state is persistently displayed on the first interface when no input of waking up the digital assistant is received; or
detecting a third user input, and displaying the virtual image on the first interface by using the listening state as the first form, wherein the third user input is used to wake up the digital assistant, the listening state comprises the first feature object and the second feature object, and the first feature object is displayed in the dominant form.

35. The apparatus according to claim 34, wherein the first interface is the lock screen interface or the screen interface after unlocking, and the first form is the listening state; and
displaying the virtual image in the first form on the first interface specifically comprises:
first displaying the first feature object by using the geometric array; and
changing the first feature object from the geometric array to the dominant form, and displaying the second feature object.

36. The apparatus according to claim 35, wherein first displaying the first feature object by using the geometric array is specifically:
displaying a geometric figure of a part of the array at an initial display position, and then displaying the geometric figure on an entire screen.

37. The apparatus according to claim 36, wherein
the initial display position is determined based on a user input; and
when no user input is detected, the initial position is a region for displaying the virtual image.

38. The apparatus according to any one of claims 27 to 37, wherein displaying the virtual image in the first form on the first interface is specifically:
displaying the virtual image at a preset position on the first interface; or
overlay displaying the virtual image on a target content element in the first interface, wherein the target content element is a content element of a preset type.

39. The apparatus according to claim 38, wherein when the virtual image overlay displayed on the target content element in the first interface, a gesture event interface of the target content element is copied to the virtual image, so that a gesture-corresponding function of the target content element can be implemented by making a gesture on the virtual image.

40. The apparatus according to claim 39, wherein the first interface is a camera interface, and the target content element is a shutter control in the camera interface.

41. The apparatus according to claim 34, wherein the first interface is the lock screen interface or the screen interface after unlocking, the first form is the to-be-woken-up state, the second form is the listening state, and the signal instruction is generated after a user makes a preset gesture to the digital assistant in the first form.

42. The apparatus according to claim 39, wherein the plurality of feature objects further comprise the second feature object; and
in the second form, the first feature object is in the dominant form of the ring, the second feature object is the sphere, and the ring is located on an equator at a top view angle of the sphere.

43. The apparatus according to claim 34, wherein the virtual image further has a task execution state, and the task execution state comprises the first feature object; and
on at least one process interface in a process in which the digital assistant executes an automated task, the first feature object in the task execution state correspondingly generates at least one of a shape change and a position change.

44. The apparatus according to claim 43, wherein the first feature object is the geometric array, and a display position of the geometric array matches a target control in the process interface to simulate a tap event of the target control to go to a next process interface.

45. The apparatus according to claim 43, wherein the first form is the listening state, the second form is the task execution state, both the listening state and the task execution state comprise the first feature object, and the first feature object in the listening state and the first feature object in the task execution state have different forms; and
in the task execution state, the form of the first feature object comprises: the geometric array on an interface, an outer frame of a dialog card, an outer frame of an input box when input is performed by invoking the digital assistant, or an outer frame of a task result page.

46. The apparatus according to claim 45, wherein the first feature object has different form changes in different task progresses of the automated task.

47. The apparatus according to claim 46, wherein when the automated task is a smart recognition task, and the first feature object changes from the geometric array that is laid out to the entire screen to a geometric array that is displayed only on a recognized executable object.

48. The apparatus according to claim 45 or 46, wherein in the task execution state, the form change of the first feature object comprises:
the first feature object is first displayed in the dominant form of the ring on a periphery of the second feature object;
the first feature object as the ring is then detached from the second feature object, and is scaled up and displayed as the outer frame of the dialog card;
the first feature object changes from the outer frame of the dialog card to a geometric array in a dialog bubble; and
the virtual image is displayed in the listening state after execution of the automated task is completed.

49. The apparatus according to claims 27 to 30, wherein the apparatus further comprises:
an obtaining module, configured to obtain scenario information, and display the first feature object in the plurality of feature objects in a target form based on the scenario information.

50. The apparatus according to claims 27 to 30, wherein the virtual image has a to-be-woken-up state, the to-be-woken-up state at least comprises the first feature object, and the first feature object is displayed as the long bar; and
the display module is further configured to display the second feature object in response to detecting that a focus of a line of sight of a human eye falls in a region in which the screen is located.

51. The apparatus according to claim 50, wherein
the display module is further configured to: in response to detecting a human voice, enable the second feature object to move relative to the first feature object in a direction of approaching a sound source of the human voice.

52. The apparatus according to claims 27 to 30, wherein the electronic device is a smart vehicle, and the display module is further configured to:
indicate an in-vehicle function or alarm information by using deformation or motion of the first feature object in the plurality of feature objects.

53. An apparatus for displaying a virtual image of a digital assistant, comprising a memory and a processor, wherein the memory stores code, the processor is configured to execute the code, and when the code is executed, the apparatus performs the method according to any one of claims 1 to 26.

54. A computer storage medium, wherein the computer storage medium stores instructions; and when the instructions are executed by a computer, the computer is enabled to implement the method according to any one of claims 1 to 26.

55. A computer program product, wherein the computer program product stores instructions; and when the instructions are executed by a computer, the computer is enabled to implement the method according to any one of claims 1 to 26.
